(19) Europäisches Patentamt European Patent Office Office européen des brevets

(11) **EP 4 080 314 B1**

(12) **EUROPEAN PATENT SPECIFICATION**

(45) Date of publication and mention of the grant of the patent:
**24.07.2024 Bulletin 2024/30**

(21) Application number: **20903464.4**

(22) Date of filing: **26.11.2020**

(51) International Patent Classification (IPC):
**G05D 1/00** (2024.01)

(52) Cooperative Patent Classification (CPC):
**B64D 45/04; B64D 47/08; B64U 70/00; G05D 1/0016; G05D 1/0676; G08G 5/0013; G08G 5/0021; G08G 5/0026; G08G 5/0069; G08G 5/025;** B64U 2101/30; B64U 2201/00

(86) International application number:
**PCT/JP2020/043959**

(87) International publication number:
**WO 2021/124826 (24.06.2021 Gazette 2021/25)**

(54) **INFORMATION PROCESSING DEVICE, INFORMATION PROCESSING SYSTEM, INFORMATION PROCESSING METHOD, AND PROGRAM**

INFORMATIONSVERARBEITUNGSVORRICHTUNG, INFORMATIONSVERARBEITUNGSSYSTEM, INFORMATIONSVERARBEITUNGSVERFAHREN UND PROGRAMM

DISPOSITIF, SYSTÈME ET PROCÉDÉ DE TRAITEMENT D'INFORMATIONS, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2019 JP 2019227024**

(43) Date of publication of application:
**26.10.2022 Bulletin 2022/43**

(73) Proprietor: **Sony Group Corporation Tokyo 108-0075 (JP)**

(72) Inventors:
• **OI, Kenichiro**
  **Tokyo 108-0075 (JP)**
• **OTANI, Takahide**
  **Tokyo 108-0075 (JP)**

(74) Representative: **MFG Patentanwälte Meyer-Wildhagen Meggle-Freund Gerhard PartG mbB Amalienstraße 62 80799 München (DE)**

(56) References cited:
CN-A- 105 599 912     JP-A- 2018 506 475
JP-B2- 5 920 352      US-A1- 2018 046 179
US-A1- 2018 174 102   US-B1- 10 388 172

• ZHANG JIANHUA ET AL: "Intelligent Collaborative Localization Among Air-Ground Robots for Industrial Environment Perception", IEEE TRANSACTIONS ON INDUSTRIAL ELECTRONICS, IEEE SERVICE CENTER, PISCATAWAY, NJ, USA, vol. 66, no. 12, 1 December 2019 (2019-12-01), pages 9673 - 9681, XP011737855, ISSN: 0278-0046, [retrieved on 20190801], DOI: 10.1109/TIE.2018.2880727

**Description**

TECHNICAL FIELD

The present disclosure relates to an information processing apparatus, an information processing system, and an information processing method, and a program. More specifically, the present disclosure relates to an information processing apparatus, an information processing system, and an information processing method, and a program that enable a flying object such as a drone to land at a target landing point with a high accuracy.

BACKGROUND ART

In recent years, the use of drones, which are small flying objects, has rapidly increased. For example, a drone is equipped with a camera and used for processing of capturing an image of a landscape on the ground from midair, and the like. Furthermore, the use of drones for package delivery is also planned, and various experiments have been conducted.

Currently, in many countries, it is required to control the flight of a drone by operating a controller under human monitoring, that is, in a range visible to a person. In the future, however, it is assumed that many autonomous flight drones that do not require visual monitoring by a person, that is, drones that autonomously fly from departure points to destinations are to be used.

Such an autonomous flight drone flies from the departure point to the destination by using, for example, information on communication with a control center and GPS position information.

A specific usage form of the autonomous flight drones is package delivery by drones. In a case where package delivery is performed by a drone, a user who has requested the package delivery desires to land the drone at a specific position, for example, in front of the entrance of the user's house, in the garden of the user's house, and the like, and receive the package addressed to the user.

However, even if an attempt is made to perform landing at a designated position by position control using a GPS, for example, there is a limit to position measurement accuracy of the GPS, and there is a high possibility that an error of about 1 m occurs. As a result, it is difficult to accurately land the drone in a narrow area, such as in front of the entrance of the user's house and in the garden of the user's house, desired by the user.

Note that one of the related arts disclosing configurations for landing a drone at a target position with highly accurate position control is Patent Document 1 (reference is made to the citation list below) .

Patent Document 1 discloses a configuration in which a drone is landed at a target position with highly accurate position control by using an optical sensor, a short range sensor, a radio frequency system (RF system) configured to perform triangulation, and the like in addition to position control using a GPS.

However, the configuration described in Patent Document 1 is a configuration for accurately landing the drone at a position of a charging system, and is a configuration that is equipped with various special configurations such as a transmitter configured to guide the drone to the charging system side, which is a landing position, to achieve accurate landing position control.

Therefore, it is difficult to apply the configuration described in Patent Document 1 to the landing position control to a position that is not provided with special equipment such as the user's garden or the front of the entrance, for example.

Patent Document 3 discloses techniques for providing an object awareness guidance to clear a landing space. For example, during delivery an unmanned aerial vehicle (UAV) may capture an image of a potential landing zone and identify one or more objects in the image that may impede or obstruct delivery of the item in the potential landing zone. The UAV may be configured to generate and provide instructions to a user device to move or remove the identified one or more objects from the potential landing zone thereby creating a safe and unobstructed landing zone to deliver the item.

Patent Document 4 discloses methods and systems that provide for facilitating delivery, via unmanned aerial vehicles, of products ordered by a customer of a retailer to a customer-selected physical location of a person other than the customer.

CITATION LIST

PATENT DOCUMENT

Patent Document 1: Japanese Patent Application Laid-Open No. 2018-506475
Patent Document 2: Japanese Patent Application Laid-Open No. 5920352
Patent Document 3: US Patent US 10 388 172 B1

Patent Document 4: US Patent Application US 2018/174102 A1

## SUMMARY OF THE INVENTION

PROBLEMS TO BE SOLVED BY THE INVENTION

The present disclosure has been made in view of the problem described above, for example, and an object thereof is to provide an information processing apparatus, an information processing system, and an information processing method, and a program capable of landing a flying object such as a drone at a target planned landing position with a high accuracy.

SOLUTIONS TO PROBLEMS

According to a first aspect the present invention provides an information processing apparatus in accordance with independent claim 1. According to a second aspect the present invention provides an information processing system in accordance with independent claim 8. According to a third aspect the present invention provides an information processing method according to independent claim 13. According to a fourth aspect the present invention provides an information processing method according to independent claim 14. According to a fifth aspect the present invention provides a computer program in accordance with independent claim 15. Further aspects are set forth in the dependent claims, the drawings, and the following description.

The first aspect of the present disclosure is an information processing apparatus including a data processing unit that executes transform processing of a camera-captured image, in which the data processing unit generates a virtual drone camera image, which is an estimated captured image in a case where it is assumed that a virtual drone camera mounted on a drone has captured an image of a planned landing position, on the basis of a captured image obtained by capturing an image of the planned landing position of the drone with a user terminal, generates a corresponding pixel positional relationship formula indicating a correspondence relationship between a pixel position on the captured image of the user terminal and a pixel position on a captured image of the virtual drone camera, and generates the virtual drone camera image by using the captured image of the user terminal using the corresponding pixel positional relationship formula.

Moreover, the second aspect of the present disclosure is an information processing system including: a user terminal; and a drone, in which the user terminal generates a virtual drone camera image, which is an estimated captured image in a case where it is assumed that a virtual drone camera mounted on the drone has captured an image of a planned landing position, on the basis of a captured image obtained by capturing an image of the planned landing position of the drone with the user terminal, and transmits the generated virtual drone camera image to the drone, and the drone executes a process of collating the virtual drone camera image with a captured image of a drone camera mounted on the drone and executes control for landing at the planned landing position included in captured image of the drone camera.

Moreover, the third aspect of the present disclosure is an information processing method executed in an information processing apparatus, the information processing apparatus including a data processing unit that executes transform processing of a camera-captured image, and the information processing method including: generating, by the data processing unit, a virtual drone camera image, which is an estimated captured image in a case where it is assumed that a virtual drone camera mounted on a drone has captured an image of a planned landing position, on the basis of a captured image obtained by capturing an image of the planned landing position of the drone with a user terminal; and generating, by the data processing unit, a corresponding pixel positional relationship formula indicating a correspondence relationship between a pixel position on the captured image of the user terminal and a pixel position on a captured image of the virtual drone camera, and generating the virtual drone camera image by using the captured image of the user terminal using the corresponding pixel positional relationship formula.

Moreover, the fourth aspect of the present disclosure is an information processing method executed in an information processing system including a user terminal and a drone, the information processing method including: generating, by the user terminal, a virtual drone camera image, which is an estimated captured image in a case where it is assumed that a virtual drone camera mounted on the drone has captured an image of a planned landing position, on the basis of a captured image obtained by capturing an image of the planned landing position of the drone with the user terminal, and transmits the generated virtual drone camera image to the drone; and executing, by the drone, a process of collating the virtual drone camera image with a captured image of a drone camera mounted on the drone and executes control for landing at the planned landing position included in captured image of the drone camera.

Moreover, the fifth aspect of the present disclosure is a program that causes an information processing apparatus to execute information processing, the information processing apparatus including a data processing unit that executes transform processing of a camera-captured image, the program causing the data processing unit: to execute a process of generating a virtual drone camera image, which is an estimated captured image in a case where it is assumed that a virtual drone camera mounted on a drone has captured an image of a planned landing position, on the basis of a captured image obtained by capturing an image of the planned landing position of the drone with a user terminal; and to generate a corresponding pixel positional relationship formula indicating a correspondence relationship between a pixel position on the captured image of the user terminal and a pixel position on a captured image of the virtual drone camera, and to generate the virtual drone camera image by using the captured image of the user terminal using the corresponding pixel positional relationship formula.

Note that the program of the present disclosure is, for example, a program that can be provided as a storage medium or a communication medium provided in a computer-readable form to an information processing apparatus or a computer system that can execute various program codes. As such a program is provided in the computer-readable form, processing according to the program can be realized on the information processing apparatus or the computer system.

Still other objects, characteristics and advantages of the present disclosure will become apparent from a detailed description based on embodiments of the present disclosure as described later and accompanying drawings. Note that the term "system" in the present specification refers to a logical set configuration of a plurality of apparatuses, and is not limited to a system in which apparatuses of the respective configurations are provided in the same housing.

According to a configuration of one embodiment of the present disclosure, a configuration capable of accurately landing the drone at a planned landing position designated by a user is achieved.

Specifically, for example, the user terminal generates the virtual drone camera image, which is the estimated captured image in the case where it is assumed that the virtual drone camera mounted on the drone has captured an image of the planned landing position on the basis of the captured image obtained by capturing the planned landing position of the drone with the user terminal, and transmits the generated virtual drone camera image to the drone. The drone collates the virtual drone camera image with the image captured by the drone camera and lands at the planned landing position in the image captured by the drone camera. The user terminal generates the corresponding pixel positional relationship formula indicating the correspondence relationship between the pixel position on the captured image of the user terminal and the pixel position on the captured image of the virtual drone camera, and generates the virtual drone camera image using the generated relationship formula.

According to this configuration, the configuration capable of accurately landing the drone at the planned landing position designated by the user is achieved.

Note that the effects described in the present specification are merely examples and are not limited, and there may be additional effects.

BRIEF DESCRIPTION OF DRAWINGS

Fig. 1 is a diagram for describing processes executed by an information processing apparatus of the present disclosure.

Fig. 2 is a flowchart illustrating the processes of (Process 1) to (Process 4) sequentially executed by the information processing apparatus of the present disclosure.

Fig. 3 is a diagram for describing a configuration example of the information processing apparatus and an information processing system of the present disclosure.

Fig. 4 is a diagram for describing a configuration example of the information processing apparatus and the information processing system of the present disclosure.

Fig. 5 is a diagram for describing a configuration example of a user terminal which is the information processing apparatus of the present disclosure.

Fig. 6 is a diagram for describing (Process 1) executed by the information processing apparatus of the present disclosure.

Fig. 7 is a diagram for describing a camera coordinate system and a NED coordinate system.

Fig. 8 is a diagram for describing a plurality of coordinate systems used in the processes executed by the information processing apparatus of the present disclosure.

Fig. 9 is a diagram for describing an example of processing in a case where position information of a coordinate system is transformed into position information of a different coordinate system.

Fig. 10 is a diagram for describing examples of three coordinate transformation matrices.

Fig. 11 is a diagram for describing a specific example of a process of calculating a coordinate transformation matrix ($_cT_{NED}$) executed by the user terminal which is the information processing apparatus of the present disclosure.

Fig. 12 is a diagram for describing a specific example of the process of calculating the coordinate transformation matrix ($_cT_{NED}$) executed by the user terminal which is the information processing apparatus of the present disclosure.

Fig. 13 is a diagram for describing a pinhole camera model.

Fig. 14 is a diagram for describing the pinhole camera model.

Fig. 15 is a diagram for describing a specific example of the process of calculating the coordinate transformation matrix ($_cT_{NED}$) executed by the user terminal which is the information processing apparatus of the present disclosure.

Fig. 16 is a diagram for describing a specific example of the process of calculating the coordinate transformation matrix ($_cT_{NED}$) executed by the user terminal which is the information processing apparatus of the present disclosure.

Fig. 17 is a diagram for describing processing in consideration of a change in a position and an attitude of a camera during an imaging period of a drone at three different positions.

Fig. 18 is a diagram for describing the processing in consideration of the change in the position and the attitude of the camera during the imaging period of the drone at the three different positions.

Fig. 19 is a flowchart for describing a sequence of processing executed by the information processing apparatus of the present disclosure.

Fig. 20 is a diagram for describing processing in which the user terminal receives drone flight path information in the NED coordinate system from the drone or a drone management server.

Fig. 21 is a diagram for describing an example of data recorded in a storage unit (memory) of the information processing apparatus of the present disclosure.

Fig. 22 is a flowchart for describing the sequence of the processing executed by the information processing apparatus of the present disclosure.

Fig. 23 is a diagram for describing an example of the data recorded in the storage unit (memory) of the information processing apparatus of the present disclosure.

Fig. 24 is a diagram for describing (Process 2) executed by the information processing apparatus of the present disclosure.

Fig. 25 is a diagram for describing a user designation of a planned landing position and a display example of a planned landing position identification mark.

Fig. 26 is a flowchart for describing the sequence of processing of (Process 2) executed by the information processing apparatus of the present disclosure.

Fig. 27 is a diagram illustrating parameters applied to a "virtual drone camera captured image" generation process in (Process 2) executed by the information processing apparatus of the present disclosure.

Fig. 28 is a diagram illustrating parameters applied to the "virtual drone camera captured image" generation process in (Process 2) executed by the information processing apparatus of the present disclosure.

Fig. 29 is a diagram for describing (Process 3) executed by the information processing apparatus of the present disclosure.

Fig. 30 is a diagram illustrating (Process 4) executed by the information processing apparatus of the present disclosure.

Fig. 31 is a diagram for describing a configuration example of the user terminal which is the information processing apparatus of the present disclosure.

Fig. 32 is a diagram illustrating configuration examples of the user terminal and a drone control apparatus which are the information processing apparatuses of the present disclosure.

Fig. 33 is a diagram illustrating a hardware configuration example of the user terminal, the drone control apparatus, and the drone management server which are the information processing apparatuses of the present disclosure.

MODE FOR CARRYING OUT THE INVENTION

Hereinafter, details of an information processing apparatus, an information processing system, and an information processing method, and a program according to the present disclosure will be described with reference to the drawings. Note that a description will be made according to the following items.

1. Regarding General Configuration Example for Landing Drone at Target Planned Landing Position

2. Processing Executed by Information Processing Apparatus or Information Processing System of Present Disclosure

3. Regarding Configuration Examples of Information Processing Apparatus and Information Processing System of Present Disclosure

4. Details of Processing Executed by Information Processing Apparatus or Information Processing System of Present Disclosure

4-1. (Process 1) Regarding Details of Coordinate Analysis Process of Analyzing Relationship Between Positions on Different Coordinates used by Drone And User Terminal to Calculate Coordinate Transformation Matrix

4-2. (Process 2) Regarding Details of Planned Landing Position Imaging Process, And Generation Process And Transmission Process of Virtual Drone Camera Image Based on Captured Image Executed by User Terminal
4-3. (Processes 3 and 4) Regarding Details of Process of Performing Landing at Planned Landing Position
Using Virtual Drone Camera Image Executed by Drone

5. Regarding Other Embodiments
6. Regarding Configuration Example of Information Processing Apparatus of Present Disclosure
7. Summary of Configuration of Present Disclosure

[1. Regarding General Configuration Example for Landing Drone at Target Planned Landing Position]

Before describing a configuration of the present disclosure, first, a general configuration example for landing a drone at a target planned landing position will be described.

As described above, currently, it is required to control the flight of a drone by operating a controller under human monitoring, that is, in a range visible to a person in many countries.

If the operation by the controller is performed while viewing the drone, it is possible to land the drone at a target planned landing position with a high accuracy.

In the future, however, it is assumed that many autonomous flight drones that do not require visual monitoring by a person, that is, drones that autonomously fly from departure points to destinations are to be used. Such an autonomous flight drone flies from the departure point to the destination by using, for example, information on communication with a control center and GPS position information.

A specific usage form of the autonomous flight drones is package delivery by drones. In a case where package delivery is performed by a drone, a user who has requested the package delivery desires to land the drone at a specific position, for example, in front of the entrance of the user's house, in the garden of the user's house, and the like, and receive the package addressed to the user.

Examples of processes available for landing position control for landing the drone at the target planned landing position include the following processes.

(1) Landing position control process using GPS
(2) Landing position control process using marker arranged at landing position
(3) Landing position control process using captured image obtained by camera of drone

An outline of each of these processes will be described.

(1) Landing position control process using GPS

This process is a process of performing landing at a target landing position while confirming a self-position (latitude and longitude information) of a drone on the basis of reception data from a GPS satellite.

In this method using the GPS, there is a possibility that a meter level error occurs to cause landing at a place different from a desired place. In a place where a target landing place is narrow, for example, in a densely built-up residential area and the like, there is a risk of colliding with a roof of a house.

Furthermore, the accuracy further decreases in a place where a radio wave from the GPS satellite is weak.

Furthermore, a multipath generated by reflection of a radio wave from the GPS satellite on a building, a ground, or the like also lowers the position measurement accuracy, and this multipath is likely to be generated in an area where apartments and residences are lined up, so that it becomes difficult to perform the landing position control with a high accuracy.

(2) Landing position control process using marker arranged at landing position

This process is a method of arranging a marker, for example, a marker of a QR code (registered trademark) or the like, at a target landing position, capturing an image of the marker with a drone equipped with a lower camera, determining a landing place by image collation, and controlling the landing position.

This method enables position control with a higher accuracy than the position control using the GPS described above. Furthermore, this method can also be used in a narrow place or a place where a radio wave of the GPS is weak. However, it is necessary to install the marker having a size that can be recognized by the drone.

For example, it is necessary to distribute a sheet in which the marker is recorded in advance to a user requesting package delivery such that the sheet recording the marker is arranged at a position desired by the user by a delivery time. In this manner, this method of using the marker has problems that pre-preparation and a burden on the user increase.

(3) Landing position control process using captured image obtained by camera of drone

This method is a method of capturing an image of a take-off place (landing place) at the time of take-off by a downward camera mounted on a drone, storing the captured image in a memory as a registered image, and thereafter, collating an image of the take-off place (landing place) captured by the downward camera at the time of landing with the registered image stored in the memory after the take-off and flight to control a landing position by the image collation.

This method also enables more highly accurate position control as compared with the position control using the GPS, and is available even in a narrow place or a place where a radio wave of the GPS is weak. Furthermore, it is unnecessary to prepare or install the marker.

However, there is a problem that this method is available only in a case where a take-off place (landing place) is captured when a drone takes off and the drone lands at the same place as the take-off place.

In a case where package delivery is performed using a drone, a take-off place is a package delivery office, and a landing place is a delivery destination of the package. It is difficult to capture an image of the landing place at the time of take-off, so that this method is not applicable to a package delivery drone.

The configuration of the present disclosure solves these problems.

Hereinafter, the configuration of the present disclosure will be described.

[2. Processing Executed by Information Processing Apparatus or Information Processing System of Present Disclosure]

Next, processing executed by the information processing apparatus or the information processing system of the present disclosure will be described.

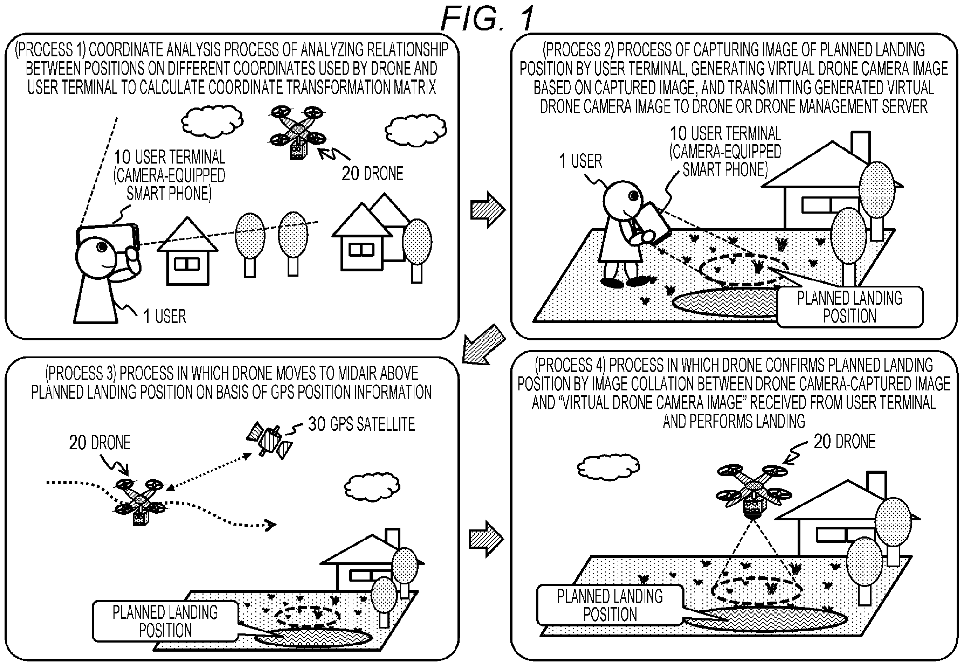

Fig. 1 is a diagram for describing the processing executed by the information processing apparatus or the information processing system of the present disclosure.

Fig. 1 illustrates the following four processes.

(Process 1) Coordinate analysis process of analyzing relationship between positions on different coordinates used by drone and user terminal to calculate coordinate transformation matrix

(Process 2) Process of capturing image of planned landing position by user terminal, generating "virtual drone camera image" based on captured image, and transmitting generated "virtual drone camera image", GPS position information of planned landing position, and the like to drone or drone management server

(Process 3) Process in which drone moves to midair above planned landing position on the basis of GPS position information

(Process 4) Process in which drone confirms planned landing position by image collation between drone camera-captured image and "virtual drone camera image" received from user terminal and performs landing

During these four processes of (Process 1) to (Process 4), the processes of (Process 1) and (Process 2) are pre-preparation processes, and the processes of (Process 3) and (Process 4) are processes of moving and landing the drone to a destination using data generated in the pre-preparation processes of (Process 1) and (Process 2) .

Hereinafter, an outline of the processes of (Process 1) to (Process 4) will be briefly described, and details of the respective processes will be sequentially described later.

(Process 1) Coordinate analysis process of analyzing relationship between positions on different coordinates used by drone and user terminal to calculate coordinate transformation matrix

Many drones, such as a drone 20 illustrated in Fig. 1(1), perform position control using communication information of a GPS satellite. The position information obtained from the GPS satellite is latitude information, longitude information, and height information. Many drones often confirm positions and control flight routes using a NED coordinate system in order to fly using these pieces of information.

The NED coordinate is a coordinate set with north, east, and down as three axes.

Meanwhile, an image (= image displayed on a display unit of a user terminal 10) captured by a camera of the user terminal 10 such as a camera-equipped smart phone held by a user 1 illustrated in Fig. 1(1) is image data conforming to a camera coordinate system set according to an imaging direction of the camera.

The camera coordinate system and the NED coordinate are completely different coordinate systems. Therefore, for example, a position of each subject included in the captured image of the camera can be indicated using the camera coordinate system, but it is not known which position in the NED coordinate system the subject position indicated by the camera coordinate system corresponds to.

In (Process 1), the NED coordinate system used by the drone, the camera coordinate system used by the user terminal, and a relationship between corresponding positions on these different coordinate systems are analyzed to calculate a coordinate transformation matrix that can transform a position of one coordinate system to a position of the other coordinate system.

Note that one world coordinate system fixed as reference coordinates is used at the time of calculating the coordinate transformation matrix. In the processing of the present disclosure, a coordinate system (SLAM coordinate system), which is applied to an SLAM process executed by the user terminal 10, that is, the simultaneous localization and mapping (SLAM) process of executing camera position identification (localization) and environment map creation (mapping) in parallel, is used as the world coordinate system which is the reference coordinate system.

Specific processing will be described later.

(Process 2) Process of capturing image of planned landing position by user terminal, generating "virtual drone camera image" based on captured image, and transmitting generated "virtual drone camera image", GPS position information of planned landing position, and the like to drone or drone management server

In this (Process 2), as illustrated in Fig. 1(2), the user 1 uses the user terminal 10 to capture an image of a predetermined position (planned landing position) on the ground where it is desired to land the drone 20, generates a "virtual drone camera image" on the basis of the captured image, and transmits the generated "virtual drone camera image", GPS position information of the planned landing position, and the like to the drone or the drone management server.

Note that the "virtual drone camera image" is a virtual image estimated to be captured in a case where the planned landing position is captured by a drone camera 22 of the drone 20 in midair.

The user 1 captures the image of the planned landing position using the user terminal 10, and generates the "virtual drone camera image" on the basis of the captured image.

Details of this processing will be described later.

(Process 3) Process in which drone moves to midair above planned landing position on the basis of GPS position information

This (Process 3) is a process in which the drone 20 reaches midair above the planned landing position on the basis of the GPS position information of the planned landing position received from the user terminal 10 in the above-described (Process 2).

As illustrated in Fig. 1(3), the drone 20 communicates with a GPS satellite 30, and flies to a position where a self-position coincides with the GPS position information of the planned landing position received from the user terminal 10 while confirming the self-position. With this process, the drone 20 reaches the midair above the planned landing position.

(Process 4) Process in which drone confirms planned landing position by image collation between drone camera-captured image and "virtual drone camera image" received from user terminal and performs landing

This (Process 4) is a process in which the drone 20 confirms the planned landing position by image comparison between a camera-captured image of the camera (drone camera 22) mounted on the drone 20 and the "virtual drone camera image" received from the user terminal and performs landing.

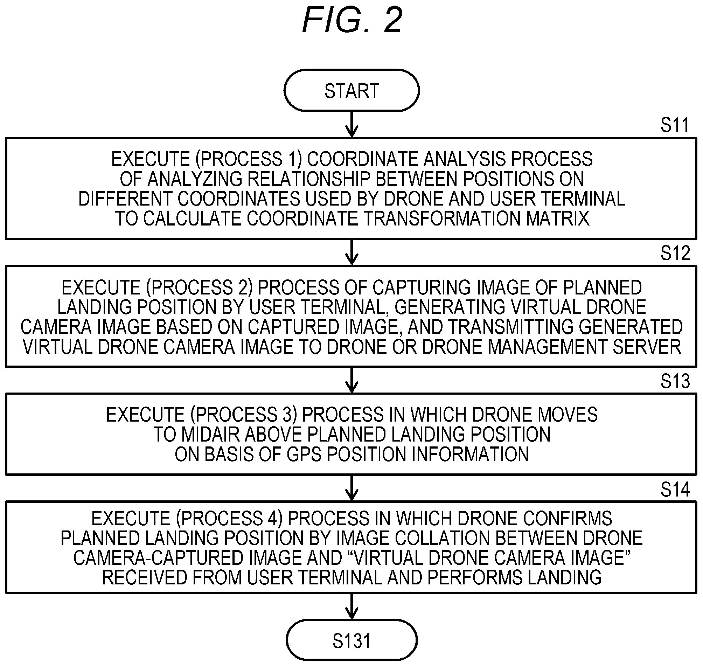

A flow illustrated in Fig. 2 is a diagram illustrating a flowchart for sequentially executing the respective processes of (Process 1) to (Process 4) illustrated in Fig. 1.

In the system of the present disclosure, these (Process 1) to (Process 4) are sequentially executed. Through these processes, the drone 20 can accurately land at the planned landing position designated by the user 1.

Details of these (Process 1) to (Process 4) will be sequentially described in the subsequent stage.

[3. Regarding Configuration Examples of Information Processing Apparatus and Information Processing System of Present Disclosure]

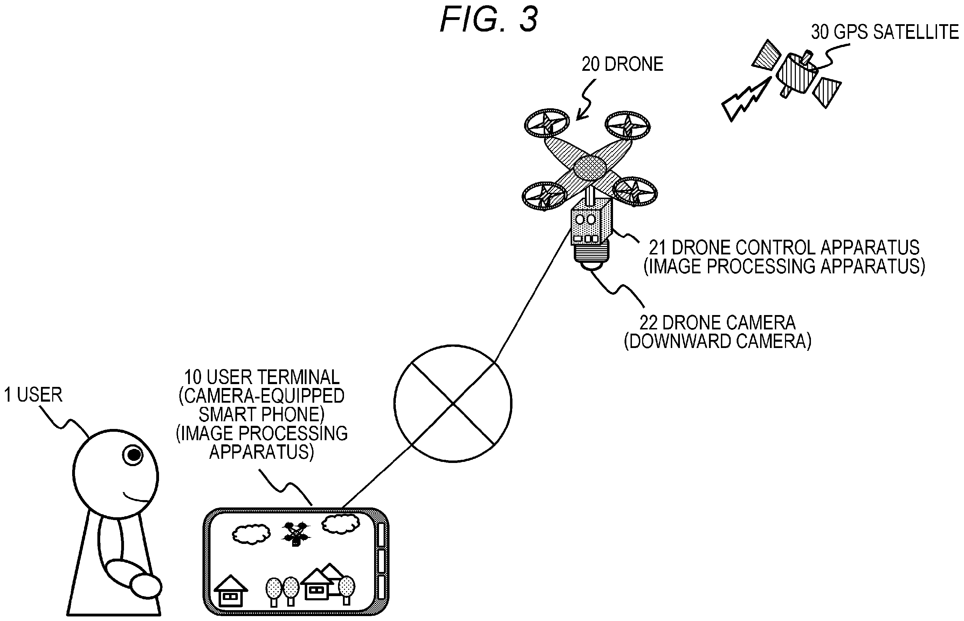

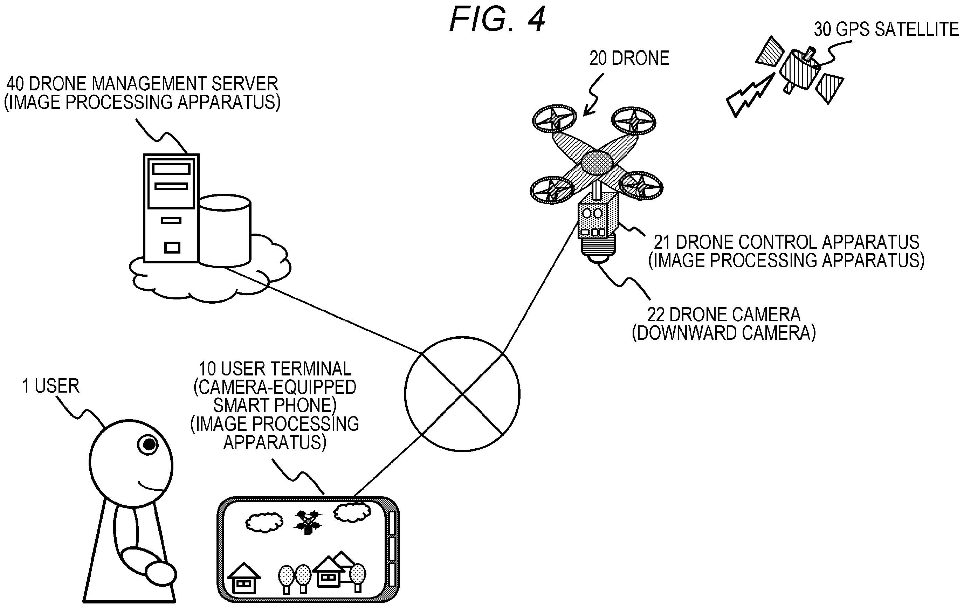

Next, configuration examples of the information processing apparatus and the information processing system of the present disclosure will be described with reference to Figs. 3 and 4.

Fig. 3 is a diagram illustrating one configuration example of the information processing apparatus and an information processing system of the present disclosure. An example of the information processing apparatus of the present disclosure is the user terminal 10 such as a camera-equipped smart phone owned by the user 1. Furthermore, a drone control apparatus 21 mounted on the drone 20 is also an example of the information processing apparatus of the present disclosure.

The drone control apparatus 21 includes the drone camera (downward camera) 22. Alternatively, the drone control apparatus 21 has a configuration to input a captured image of the drone camera (downward camera) 22 configured separately from the drone control apparatus 21.

The user terminal 10 and the drone control apparatus 21 have communication functions and can communicate with each other.

The information processing system of the present disclosure includes, for example, the user terminal 10 and the drone control apparatus 21 illustrated in Fig. 3.

Fig. 4 illustrates another configuration example of the information processing system of the present disclosure. The information processing system of the present disclosure illustrated in Fig. 4 has a configuration in which a drone management server 40 is added to the user terminal 10 such as a camera-equipped smart phone owned by the user 1 and the drone control apparatus 21 mounted on the drone 20.

The drone management server 40 is also an example of the information processing apparatus of the present disclosure.

The drone management server 40 communicates with the drone control apparatus 21 of the drone 20 and further communicates with the user terminal 10.

In this configuration, communication via the drone management server 40 can be performed even in a configuration in which it is difficult to perform direct communication between the user terminal 10 and the drone control apparatus 21.

In this manner, the information processing apparatus and the information processing system of the present disclosure have, for example, the configurations illustrated in Figs. 3 and 4.

[4. Details of Processing Executed by Information Processing Apparatus or Information Processing System of Present Disclosure]

Next, details of the respective processes will be sequentially described regarding the following four processes described above with reference to Figs. 1 and 2.

(Process 1) Coordinate analysis process of analyzing relationship between positions on different coordinates used by drone and user terminal to calculate coordinate transformation matrix

(Process 2) Process of capturing image of planned landing position by user terminal, generating "virtual drone camera image" based on captured image, and transmitting generated "virtual drone camera image", GPS position information of planned landing position, and the like to drone or drone management server

(Process 3) Process in which drone moves to midair above planned landing position on the basis of GPS position information

(Process 4) Process in which drone confirms planned landing position by image collation between drone camera-captured image and "virtual drone camera image" received from user terminal and performs landing

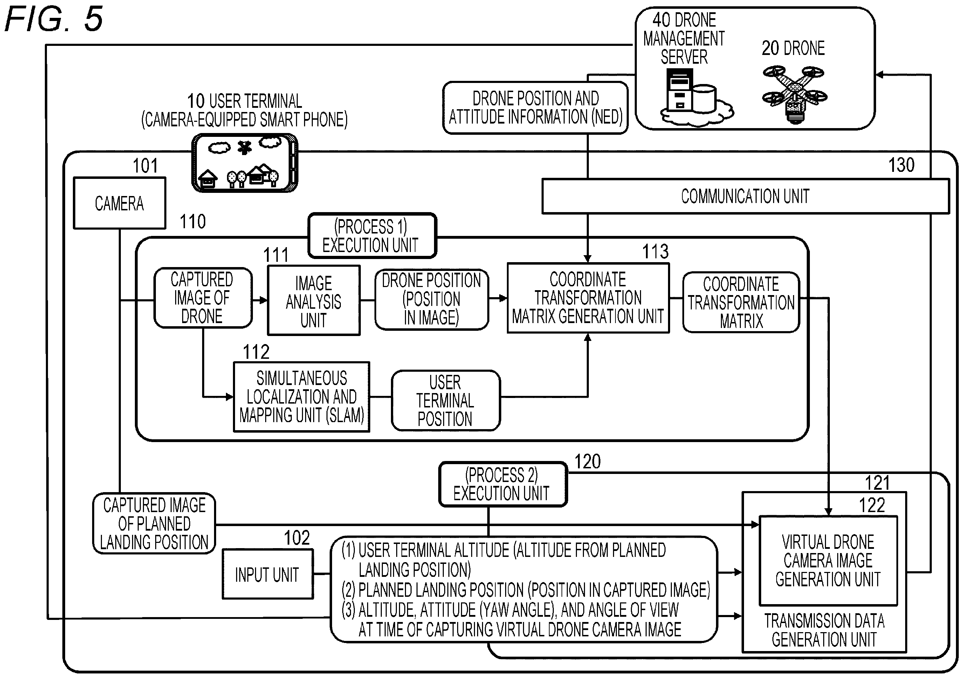

Prior to the detailed description of each of the above-described (Process 1) to (Process 4), outlines of (Process 1) and (Process 2) executed by the user terminal 10 and a configuration of the user terminal configured to execute these processes will be described with reference to Fig. 5.

Fig. 5 is a block diagram illustrating a configuration of a user terminal that executes the above-described (Process 1) and (Process 2).

The user terminal 10 includes a camera 101, an input unit 102, a (Process 1) execution unit 110, a (Process 2) execution unit 120, and a communication unit 130.

The (Process 1) execution unit 110 receives an input of a captured image of the drone obtained by the camera 101 capturing the drone in midair, and executes the above-described (Process 1), that is, the following (Process 1).

(Process 1) Coordinate analysis process of analyzing relationship between positions on different coordinates used by drone and user terminal to calculate coordinate transformation matrix

The (Process 1) execution unit 110 includes an image analysis unit 111, a simultaneous localization and mapping unit (slam) 112, and a coordinate transformation matrix generation unit 113.

As illustrated in Fig. 1(1), the (Process 1) execution unit 110 performs the process by receiving the input of the captured image of the drone obtained as the user 1 captures the drone in midair with the camera 101.

The image analysis unit 111 receives the input of the captured image of the drone from the camera 101, detects a position (position (pixel position) in the image) of the drone reflected in the captured image of the drone, and outputs detection information to the coordinate transformation matrix generation unit.

Note that such drone position information is position information conforming to the camera coordinate system.

The simultaneous localization and mapping unit (SLAM) 112 receives the input of the captured image of the drone and performs an SLAM process, that is, the simultaneous localization and mapping (SLAM) process of executing camera position identification (localization) and environment map creation (mapping) in parallel, and outputs self-position and attitude information, calculated by executing a self-position and attitude information calculation of the user terminal 10, to the coordinate transformation matrix generation unit 113.

The coordinate transformation matrix generation unit 113 receives inputs of the information on the position (position (pixel position) in the image) of the drone in the captured image of the drone from the image analysis unit 111 and the self-position and attitude information of the user terminal 10 from the simultaneous localization and mapping unit (SLAM) 112.

Moreover, the coordinate transformation matrix generation unit 113 receives an input of drone position and attitude information from the drone 20 or the drone management server 40.

Note that the drone position and attitude information input from the drone 20 or the drone management server 40 is position information conforming to the coordinate system (NED coordinate system) used for position control of the drone.

The coordinate transformation matrix generation unit 113 analyzes a corresponding positional relationship between coordinates on different coordinate systems, that is, the camera coordinate system and the NED coordinate system, on the basis of these pieces of input information, and calculates a coordinate transformation matrix that can transform a position of one coordinate system to a position of the other coordinate system.

Note that one world coordinate system fixed as reference coordinates is used at the time of calculating the coordinate transformation matrix as described above. In the processing of the present disclosure, a coordinate system (SLAM coordinate system), which is applied to an SLAM process executed by the user terminal 10, that is, the simultaneous localization and mapping (SLAM) process of executing camera position identification (localization) and environment map creation (mapping) in parallel, is used as the world coordinate system which is the reference coordinate system.

The coordinate transformation matrix calculated by the (Process 1) execution unit 110 is input to a virtual drone camera generation unit 122 of the (Process 2) execution unit 120.

The virtual drone camera generation unit 122 uses the coordinate transformation matrix calculated by the (Process 1) execution unit 110 to generate a "virtual drone camera image".

Note that the "virtual drone camera image" is the virtual image estimated to be captured in the case where the planned landing position is captured by the drone camera 22 of the drone 20 in midair as described above.

The (Process 2) execution unit 120 includes a transmission data generation unit 121. The transmission data generation unit 121 includes the virtual drone camera image generation unit 122.

The (Process 2) execution unit 120 receives an input of the image capturing the planned landing position and executes the process. As illustrated in Fig. 1(2), the user 1 uses the user terminal 10 to input the image obtained by capturing the planned landing position on the ground where it is desired to land the drone 20, and performs the process.

The virtual drone camera image generation unit 122 of the (Process 2) execution unit 120 generates the "virtual drone camera image" which is the virtual image estimated to be captured in the case where the planned landing position is captured by the drone camera 22 of the drone 20 in midair.

The virtual drone camera image generation unit 122 executes image transformation of the image capturing the planned landing position, for example, projective transformation to generate the "virtual drone camera image".

The coordinate transformation matrix calculated by the (Process 1) execution unit 110 is used for this generation process of the "virtual drone camera image".

In addition, data necessary for the generation process of the "virtual drone camera image" is acquired from the input unit 102, an external drone 200, or the drone management server 40. For example,

  (1) User terminal altitude (altitude from planned landing position),
  (2) Planned landing position (position in captured image), and
  (3) Altitude, attitude (yaw angle), and angle of view at time of capturing virtual drone camera image

The virtual drone camera image generation unit 122 inputs or acquires these pieces of data and executes the generation process of the "virtual drone camera image".

The "virtual drone camera image" generated by the virtual drone camera image generation unit 122 is transmitted together with other information from the transmission data generation unit 121 to the drone 20 or the drone management server 40 via the communication unit 130.

The drone 20 executes the respective processes of (Process 3) and (Process 4) described with reference to Fig. 1 using these pieces of information. That is, the process of performing landing at the planned landing position designated by the user 1 is executed.

Hereinafter, details of the respective processes of (Process 1) to (Process 4) will be described.

[4-1. (Process 1) Regarding Details of Coordinate Analysis Process of Analyzing Relationship Between Positions on Different Coordinates used by Drone And User Terminal to Calculate Coordinate Transformation Matrix]

First, details of (Process 1) described with reference to Fig. 1(1), that is, the following (Process 1):

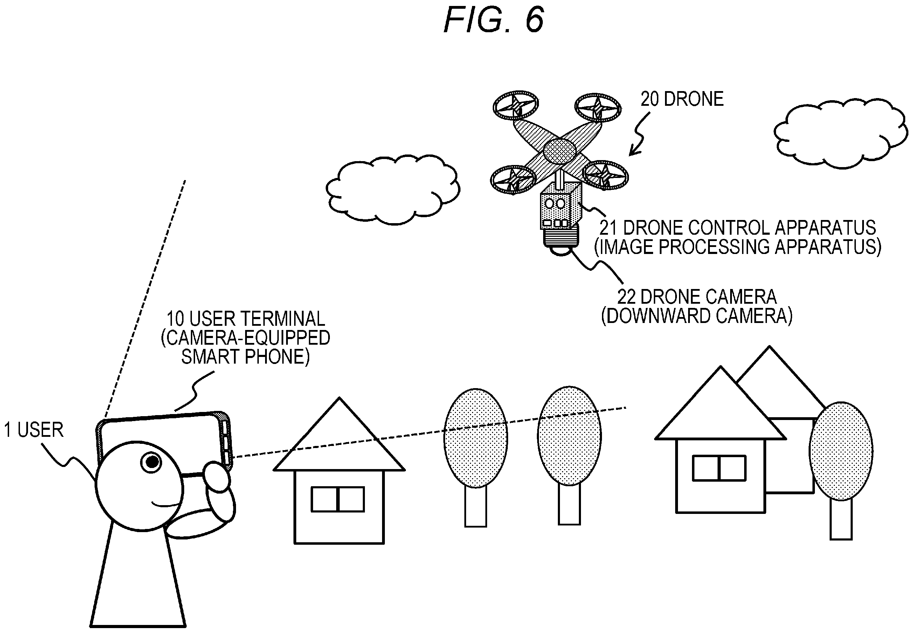

(Process 1) Coordinate analysis process of analyzing relationship between positions on different coordinates used by drone and user terminal to calculate coordinate transformation matrix will be described with reference to Fig. 6 and subsequent drawings.

As described above, many drones, such as the drone 20 illustrated in Fig. 6, perform the position control using the communication information of the GPS satellite. The position information obtained from the GPS satellite is latitude information, longitude information, and height information. Many drones often confirm positions and control flight routes using a NED coordinate system in order to fly using these pieces of information.

The NED coordinate is a coordinate set with north, east, and down as three axes.

Meanwhile, an image (= image displayed on a display unit of the user terminal 10) captured by a camera of the user terminal 10 such as a camera-equipped smart phone held by the user 1 illustrated in Fig. 6 is image data conforming to a camera coordinate system set according to an imaging direction of the camera.

The camera coordinate system and the NED coordinate are completely different coordinate systems. Therefore, for example, a position of each subject included in the captured image of the camera can be indicated using the camera coordinate system, but it is not known which position in the NED coordinate system the subject position indicated by the camera coordinate system corresponds to.

In (Process 1), the coordinate analysis process of analyzing the relationship between positions on the different coordinates used by the drone and the user terminal to calculate a coordinate transformation matrix is executed. Specifically, the coordinate transformation matrix capable of transforming positions on the different coordinate systems of the NED coordinate system used by the drone and the camera coordinate system used by the user terminal is calculated.

For example, one fixed world coordinate system is used as one reference coordinate for the transformation process.

Note that, in the processing of the present disclosure, the coordinate system (SLAM coordinate system), which is applied to the SLAM process executed by the user terminal 10, that is, the simultaneous localization and mapping (SLAM) process of executing camera position identification (localization) and environment map creation (mapping) in parallel, is used as the world coordinate system which is the reference coordinate system.

In a case where the process of analyzing a correspondence relationship between the coordinate system used by the drone and the coordinate system used by the user terminal is performed, the user 1 uses the user terminal 10, which is the camera-equipped smart phone (smartphone), to capture an image of the drone 20 flying in midair as illustrated in Fig. 6.

The user terminal 10 analyzes the captured image and performs the process of analyzing the correspondence relationship between the NED coordinate system, which is the coordinate system used by the drone, and the camera coordinate system used by the user terminal.

Note that the camera coordinate system changes depending on the movement of the camera, and thus, the world coordinate system (SLAM coordinate system) fixed as the reference coordinate, which serves as one reference, is used in (Process 1).

That is, the coordinate transformation matrix that can indicate positions on the different coordinate systems of the NED coordinate system used by the drone and the camera coordinate system used by the user terminal as positions on the one reference coordinate is calculated.

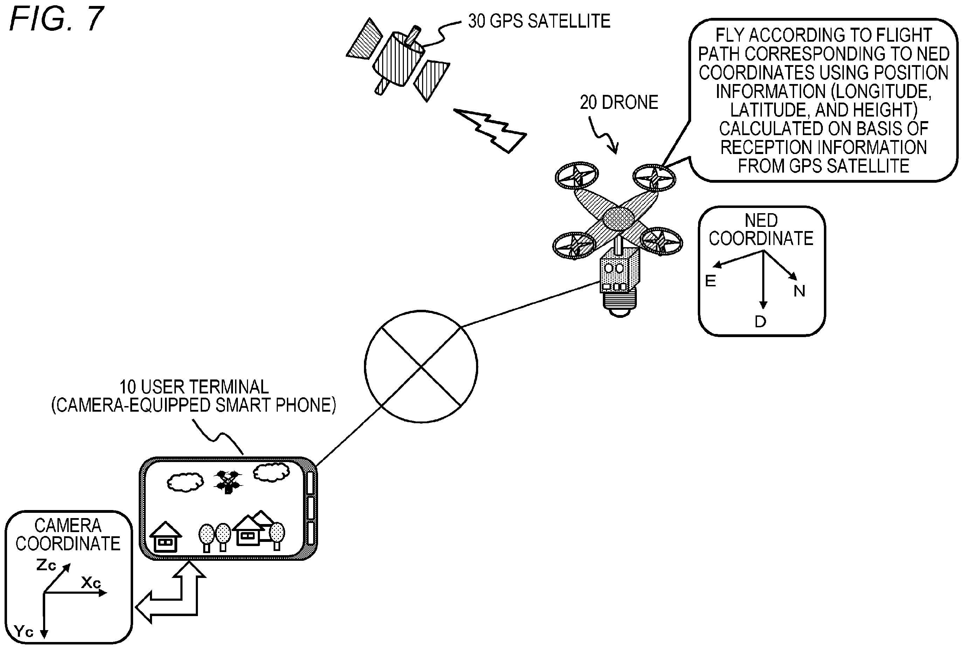

As illustrated in Fig. 7, position information in the NED coordinate system (N, E, D) is used for flight control of the drone 20 while a camera-captured image displayed on the user terminal 10 such as the smart phone is image data conforming to the camera coordinate system (Xc, Yc, Zc) set according to an imaging direction of the camera.

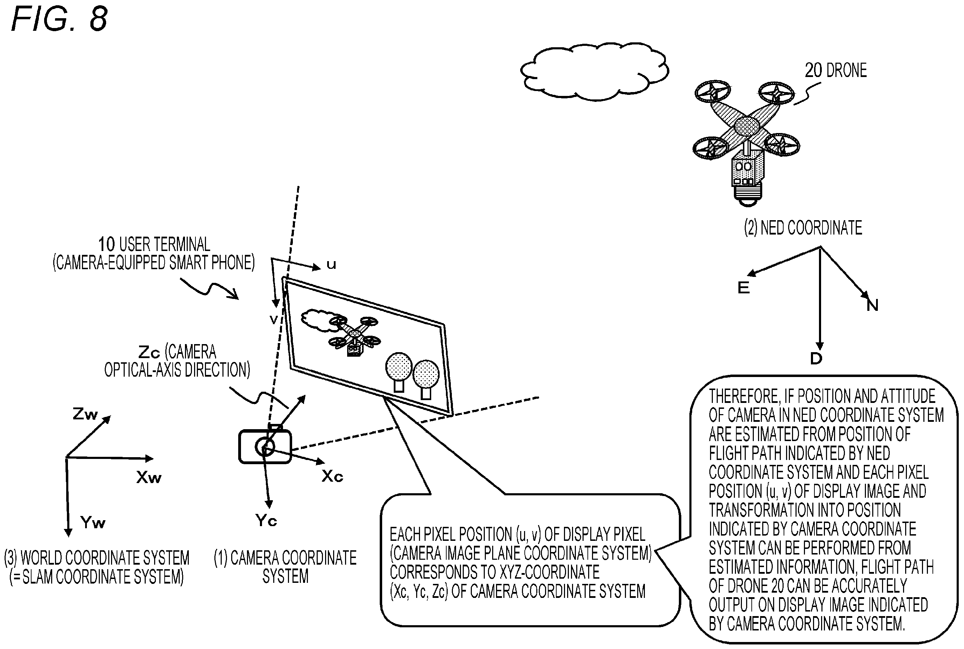

The plurality of coordinate systems used in the above-described (Process 1) executed by the information processing apparatus of the present disclosure will be described with reference to Fig. 8.

Fig. 8 illustrates the following three coordinate systems.

(1) Camera coordinate system
(2) NED coordinate system
(3) World coordinate system (SLAM coordinate system) (reference coordinate system)

(1) The camera coordinate system is a coordinate system capable of defining an image position (pixel position) of the camera-captured image of the user terminal 10. The camera coordinate system is a coordinate system in which a focal point of the camera is an origin C, an image plane is a two-dimensional plane of Xc and Yc, and an optical-axis direction (depth) is Zc, and the origin C moves as the camera moves. For example, the camera coordinate system is a coordinate system in which a horizontal axis of an imaging element, such as a C-MOS, is an Xc axis, a vertical axis thereof is a Yc axis, and an optical-axis direction thereof is a Zc axis. The two-dimensional plane (UV plane) of the display unit corresponds to an Xc-Yc plane of camera coordinates.

(2) The NED coordinate system is a coordinate system that indicates a position of the drone 20 and a position of a flight path and is used for flight control of the drone 20.

Many of the drones 20 perform position control using communication information of a GPS satellite. The position information obtained from the GPS satellite is latitude information, longitude information, and height information, and many drones use the NED coordinate system in order to fly using these pieces of information.

The NED coordinate system is a coordinate set with north, east, and down as three axes.

The drone 20 or the drone management server 40 of a control center and the like holds flight path information, which is information regarding a flight path or a planned flight path of the drone 20 as path information (N, E, D) in the NED coordinate system, and this path information conforming to the NED coordinate is provided to the user terminal 10 such as the smart phone.

(3) The world coordinate system (SLAM coordinate system) (reference coordinate system) is mainly used as a coordinate system that defines the entire space used in three-dimensional graphics.

In the processing of the present disclosure, the world coordinate system is the coordinate system (SLAM coordinate system) which is applied to the SLAM process executed by the user terminal 10, that is, the simultaneous localization and mapping (SLAM) process of executing camera position identification (localization) and environment map creation (mapping) in parallel.

In the processing of the present disclosure, the world coordinate system (SLAM coordinate system) is used as the "reference coordinate system".

That is, in (Process 1), the coordinate transformation matrix configured to enable a position on the camera coordinate system used by the user terminal 10 and a position on the NED coordinate system used by the drone 20 to be indicated as positions on the world coordinate system (SLAM coordinate system), which is one reference coordinate system, is calculated.

As described in the lower part of the center of Fig. 8, each pixel position (u, v) of a display image (hereinafter, a camera image plane coordinate system) corresponds to an XYZ-coordinate (Xc, Yc, Zc) in the camera coordinate system.

For example, if a position and an attitude of the camera in the NED coordinate system are estimated from a position of the flight path indicated by the NED coordinate system and each pixel position (u, v) in the display image and the transformation into a position indicated by the camera coordinate system can be performed from the estimated information, it is possible to perform a process of accurately outputting the flight path of the drone 20 on the display image indicated by the camera coordinate system.

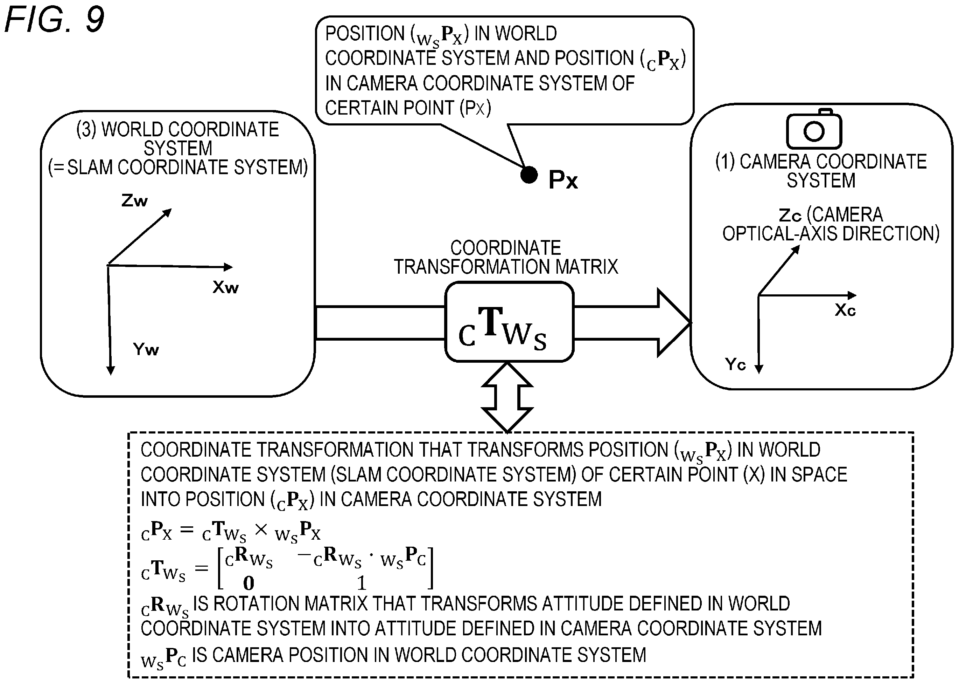

Fig. 9 is a diagram for describing an example of a process of transforming position information of a coordinate system into position information of a different coordinate system.

The example illustrated in Fig. 9 illustrates a coordinate transformation matrix

cTws

which is necessary to transform position information (Xw, Yw, Zw) in the world coordinate system into position information (Xc, Yc, Zc) in the camera coordinate system.

A position in the world coordinate system (SLAM coordinate system) and a position in the camera coordinate system for one point (X) in a three-dimensional space illustrated in the upper part of the center of Fig. 9 are expressed as follows.

Position in world coordinate system (SLAM coordinate system): wsPx

Position in camera coordinate system: $_cP_X$

Here, a coordinate transformation matrix that transforms a position ($_{Ws}P_X$) in the world coordinate system (SLAM coordinate system) one point (x) in the three-dimensional space into a position ($_cP_X$) in the camera coordinate system is expressed as follows.

$_c T_{Ws}$

As illustrated in the lower part of Fig. 9, a formula that transforms a position ($_{Ws}P_X$) in the world coordinate system (SLAM coordinate system) of one point (x) in the three-dimensional space into a position ($_cP_X$) in the camera coordinate system can be expressed by the following (Formula 1).

$$_c P_X = {_c}T_{Ws} \times {_{Ws}}P_X \quad \ldots \text{(Formula 1)}$$

Here, the coordinate transformation matrix that transforms a position ($_{Ws}P_X$) in the world coordinate system (SLAM coordinate system) into a position (cPx) in the camera coordinate system is
cTws,
and this coordinate transformation matrix can be expressed as the following determinant (Formula 2).
[Expression 1]

$$_C\mathbf{T}_{Ws} = \begin{bmatrix} {}_C\mathbf{R}_{Ws} & -{}_C\mathbf{R}_{Ws} \cdot {}_{Ws}\mathbf{P}_C \\ \mathbf{0} & 1 \end{bmatrix}$$

...(Formula 2)

Note that in the above-described (Formula 2),

$_C R_{Ws}$ is a rotation matrix that transforms an attitude defined in the world coordinate system (SLAM coordinate system) into an attitude defined in the camera coordinate system, and
$_{Ws} P_C$ is a camera position in the world coordinate system (SLAM coordinate system).

Note that the camera position corresponds to a position of the camera of the user terminal 10 in the present example.

The coordinate transformation matrix illustrated in the above-described (Formula 2), that is, the coordinate transformation matrix that transforms a position ($_{Ws}P_X$) in the world coordinate system (SLAM coordinate system) into a position ($_C P_X$) in the camera coordinate system is
cTws,
and this coordinate transformation matrix can be calculated by performing the SLAM process using the camera, that is, the user terminal 10. That is, this coordinate transformation matrix can be calculated by performing the simultaneous localization and mapping (SLAM) process of executing camera position identification (localization) and environment map creation (mapping) using the user terminal 10 in parallel.

The coordinate transformation matrix $_C T_{Ws}$ indicated in the above-described (Formula 2) is the coordinate transformation matrix that transforms a position ($_{Ws}P_X$) in the world coordinate system (SLAM coordinate system) into a position ($_C P_X$) in the camera coordinate system.

As described above with reference to Fig. 8, in the processing of the present disclosure, there are three different coordinate systems:

(1) camera coordinate system;
(2) NED coordinate system; and
(3) world coordinate system (SLAM coordinate system) (= reference coordinate system),

and the processing using these coordinate systems is executed.

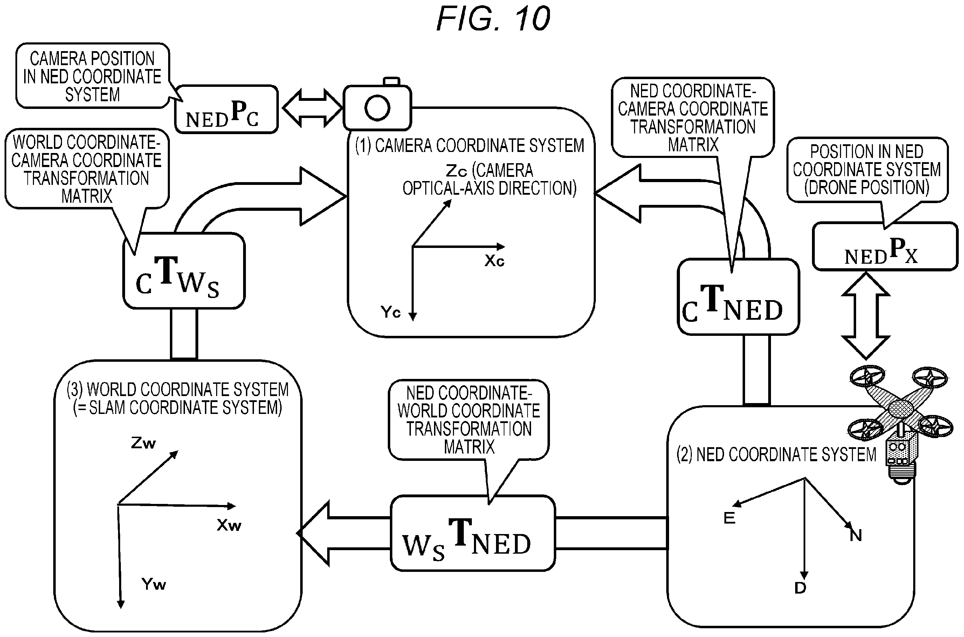

Fig. 10 illustrates examples of coordinate transformation matrices of these three coordinate systems.

Fig. 10 illustrates the following three coordinate transformation matrices.

$_C T_{Ws}$: Coordinate transformation matrix that transforms position ($_{Ws}P_X$) in world coordinate system (SLAM coordinate system) (= reference coordinate system) into position (cPx) in camera coordinate system.
$_C T_{NED}$: Coordinate transformation matrix that transforms position ($_{NED}P_X$) in NED coordinate system into position ($_C P_X$) in camera coordinate system
$_{Ws} T_{NED}$: Coordinate transformation matrix that transforms position ($_{NED}P_X$) in NED coordinate system into position ($_{Ws}P_X$) in world coordinate system (SLAM coordinate system) (= reference coordinate system)

Note that the coordinate transformation matrix of each of the three coordinate transformation matrices can be calculated from the other two coordinate transformation matrices. For example, the coordinate transformation matrix of $_{Ws} T_{NED}$ that transforms a position ($_{NED}P_X$) in the NED coordinate system into a position ($_{Ws}P_X$) in the world coordinate system (SLAM coordinate system) can be calculated according to the following formula using the other two coordinate transformation matrices ($_C T_{Ws}$ and $_C T_{NED}$).

$$_{Ws}T_{NED} == {}_C T_{Ws}{}^{-1} \times {}_C T_{NED}$$

Note that $_cT_{Ws}{}^{-1}$ is an inverse matrix of $_cT_{Ws}$, and is a matrix that can be calculated from $_cT_{Ws}$.

This $_cT_{Ws}{}^{-1}$ corresponds to a coordinate transformation matrix $_{Ws}T_C$ that transforms a position ($_cP_X$) in the camera coordinate system into a position ($_{Ws}P_X$) in the world coordinate system (SLAM coordinate system) (= reference coordinate system).

Similarly to the above description, the coordinate transformation matrix $_cT_{Ws}$ that transforms a position ($_{Ws}P_X$) in the world coordinate system (SLAM coordinate system) (= reference coordinate system) into a position ($_cP_X$) in the camera coordinate system can be calculated according to the following formula using the other two coordinate transformation matrices ($_{Ws}T_{NED}$ and $_cT_{NED}$).

$$_cT_{Ws} \; = \; _cT_{NED} \; \times \; _{Ws}T_{NED}{}^{-1}$$

Furthermore, the coordinate transformation matrix $_cT_{NED}$ that transforms a position ($_{NED}P_X$) in the NED coordinate system into a position ($_cP_X$) in the camera coordinate system can be calculated according to the following formula using the other two coordinate transformation matrices ($_{Ws}T_{NED}$ and $_cT_{Ws}$).

$$_cT_{NED} \; = \; _cT_{Ws} \; \times \; _{Ws}T_{NED}$$

Note that inverse matrices of the three coordinate transformation matrices illustrated in Fig. 10 are coordinate transformation matrices that perform coordinate transformation in opposite directions. That is,

$_cT_{Ws}$: a coordinate transformation matrix that transforms a position ($_{Ws}P_X$) in the world coordinate system (SLAM coordinate system) (= reference coordinate system) into a position (cPx) in the camera coordinate system,
and the inverse matrix $_cT_{Ws}{}^{-1}$ thereof is
$_{Ws}T_C$, that is, the coordinate transformation matrix that transforms a position (cPx) in the camera coordinate system into a position ($_{Ws}P_X$) in the world coordinate system (SLAM coordinate system) (= reference coordinate system).

Furthermore, a coordinate transformation matrix of $_cT_{NED}$ that transforms a position ($_{NED}P_X$) in the NED coordinate system into a position (cPx) in the camera coordinate system,

and the inverse matrix $_cT_{NED}{}^{-1}$ thereof is
$_{NED}T_C$, that is, a coordinate transformation matrix that transforms a position (cPx) in the camera coordinate system into a position ($_{NED}P_X$) in the NED coordinate system.

Moreover, the coordinate transformation matrix of $_{Ws}T_{NED}$ that transforms a position ($_{NED}P_X$) in the NED coordinate system into a position ($_{Ws}P_X$) in the world coordinate system (SLAM coordinate system) (= reference coordinate system),

and the inverse matrix $_{Ws}T_{NED}{}^{-1}$ thereof is
$_{NED}T_{Ws}$, that is, a coordinate transformation matrix that transforms a position ($_{Ws}P_X$) in the world coordinate system (SLAM coordinate system) (= reference coordinate system) into a position ($_{NED}P_X$) in the NED coordinate system.

Note that an inverse matrix $A^{-1}$ of a coordinate transformation matrix A can be calculated from the coordinate transformation matrix A.

Therefore, if at least two coordinate transformation matrices can be calculated among these three coordinate transformation matrices, that is, the three coordinate transformation matrices of $_cT_{Ws}$, $_cT_{NED}$, and $_{Ws}T_{NED}$ illustrated in Fig. 10, it is possible to perform transformation among three coordinate systems, that is, these three coordinate systems of:

(1) camera coordinate system;
(2) NED coordinate system; and
(3) world coordinate system (SLAM coordinate system) (= reference coordinate system),

and a position indicated by any coordinate system can be indicated as a position in another coordinate system.

(Process 1) described with reference to Fig. 1 and the like is the following process:

(Process 1) Coordinate analysis process of analyzing relationship between positions on different coordinates used by drone and user terminal to calculate coordinate transformation matrix,

and this (Process 1) is specifically executed as a process of calculating a coordinate transformation matrix to be applied to parameter calculation for generation of the "virtual drone camera image" to be generated in the next (Process 2).

Note that the "virtual drone camera image" is a virtual image estimated to be captured in a case where the planned landing position is captured by a drone camera 22 of the drone 20 in midair.

In (Process 2) illustrated in Fig. 1, the user 1 captures the image of the planned landing position using the user terminal 10, and generates the "virtual drone camera image" on the basis of the captured image.

In (Process 1), the coordinate transformation matrix to be applied to the parameter calculation for generation of the "virtual drone camera image" is calculated.

As described above, if at least two coordinate transformation matrices can be calculated among these three coordinate transformation matrices, that is, the three coordinate transformation matrices of $_cT_{Ws}$, $_cT_{NED}$, and $_{Ws}T_{NED}$ illustrated in Fig. 10, it is possible to perform transformation among three coordinate systems, that is, these three coordinate systems of:

(1) camera coordinate system;
(2) NED coordinate system; and
(3) world coordinate system (SLAM coordinate system) (= reference coordinate system),

and a position indicated by any coordinate system can be indicated as a position in another coordinate system.

The coordinate transformation matrix ($_cT_{Ws}$) that transforms a position ($_{Ws}P_X$) in the world coordinate system (SLAM coordinate system) into a position ($_cP_X$) in the camera coordinate system among the three coordinate transformation matrices illustrated in Fig. 10 is

cTws,

and this coordinate transformation matrix can be calculated by performing the SLAM process using the camera, that is, the user terminal 10.

Therefore, for example, if the coordinate transformation matrix ($_cT_{NED}$) illustrated in Fig. 10, that is, the coordinate transformation matrix that transforms a position ($_{NED}P_X$) in the NED coordinate system into a position ($_cP_X$) in the camera coordinate system can be calculated, it is possible to perform transformation among the three coordinate systems, that is, these three coordinate systems of:

(1) camera coordinate system;
(2) NED coordinate system; and
(3) world coordinate system (SLAM coordinate system) (= reference coordinate system),

and a position indicated by any coordinate system can be indicated as a position in another coordinate system.

That is, the drone 20 can acquire a position in the NED coordinate system used by the drone 20 as a position in the world coordinate system (SLAM coordinate system) (= reference coordinate system), and further acquire the planned landing position in the captured image of the user terminal 10 as a position in the world coordinate system (SLAM coordinate system) (= reference coordinate system).

Hereinafter, the coordinate transformation matrix ($_cT_{NED}$) illustrated in Fig. 10, that is, the coordinate transformation matrix that transforms a position ($_{NED}P_X$) in the NED coordinate system into a position (cPx) in the camera coordinate system is

$_cT_{NED}$,

and a specific example of the process of calculating this coordinate transformation matrix will be described.

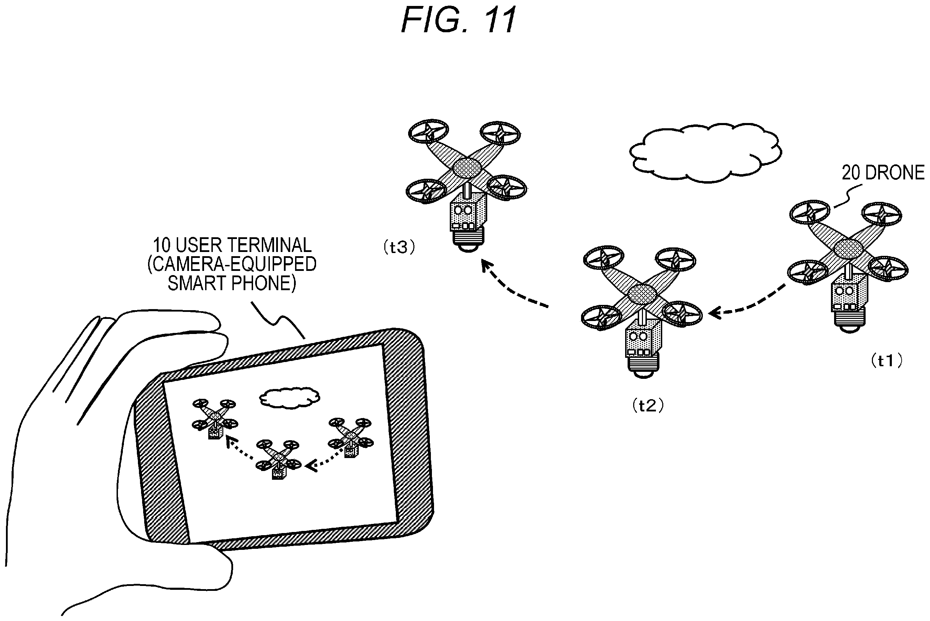

A specific example of the process of calculating the coordinate transformation matrix of $_cT_{NED}$ executed by the user terminal 10, which is the information processing apparatus of the present disclosure, will be described with reference to Fig. 11 and subsequent drawings.

As illustrated in Fig. 11, a user captures images of the drone 20 flying in midair for a predetermined time using the user terminal 10. The drone 20 is not necessarily a drone carrying a package to be delivered to the user. However, the drone 20 needs to be a drone that can acquire position information (position information on the NED coordinates) of a flight path of the drone.

In the example illustrated in Fig. 11, the drone 20 is flying from right to left according to a lapse of time of times (t1), (t2), and (t3).

A data processing unit of the user terminal 10 records captured image positions of the drone at least at three different positions in a memory.

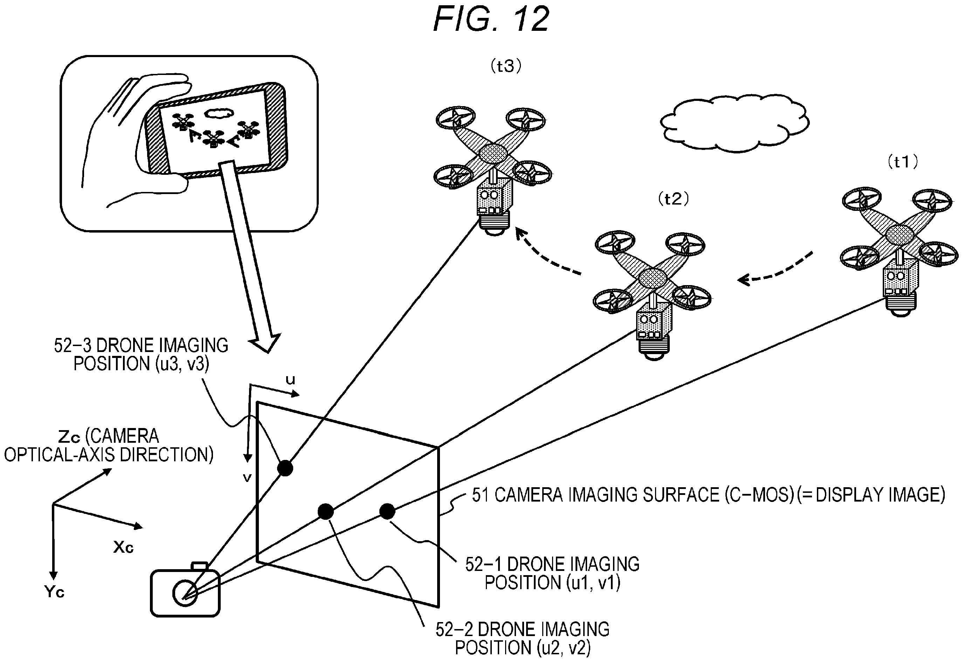

As illustrated in Fig. 12, for example, drone imaging positions 52-1 to 52-3, which corresponds to the drones at three different positions on a camera imaging surface 51, such as a C-MOS, are recorded in the memory.

Note that the drone imaging position corresponds to a display image position displayed on the display unit, and here, a processing example using coordinate positions (u1, v1) to (u3, v3) on a display image is illustrated.

The coordinate transformation matrix of $_C T_{NED}$ can be calculated by using these three different drone positions and information on the three drone imaging positions corresponding to these three drone positions.

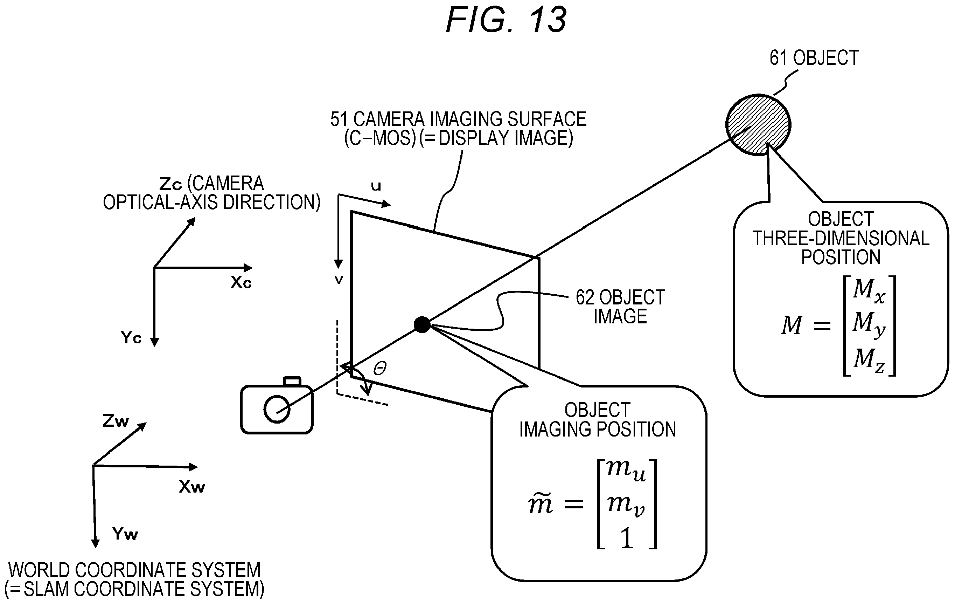

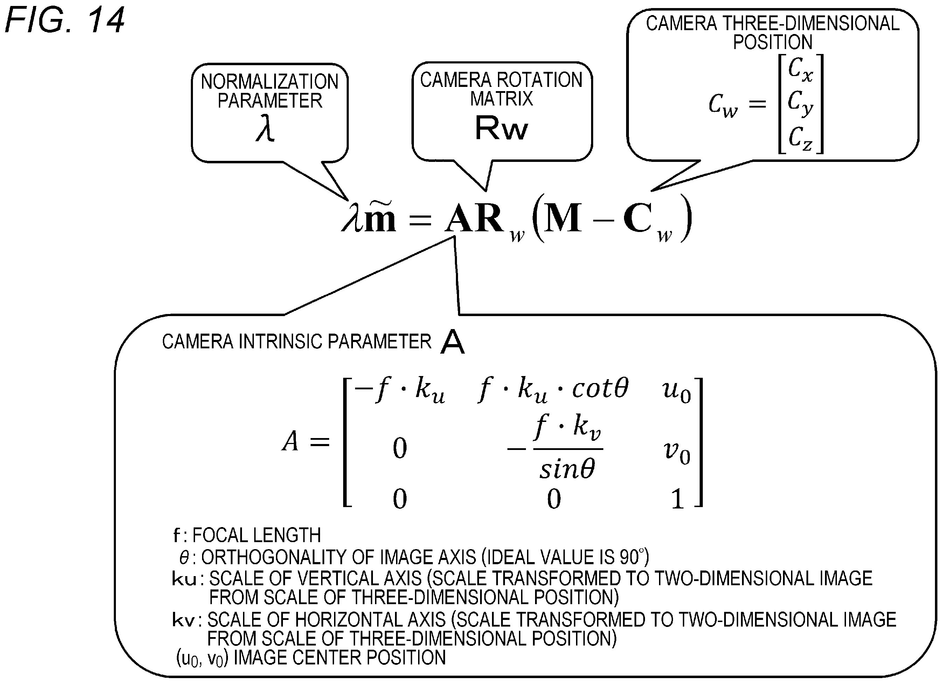

Prior to the specific description of the process of calculating the coordinate transformation matrix ($_C T_{NED}$), a pinhole camera model, which is a relationship formula defining a relationship between a three-dimensional position M of an object in a case where the object in a three-dimensional space is captured by a general camera (pinhole camera) and an imaging position (imaging pixel position) m of the object on the camera imaging surface, will be described with reference to Figs. 13 and 14.

In the pinhole camera model, the relationship formula between the three-dimensional position M of the object as an imaging subject and the camera imaging position (imaging pixel position) m of the object is expressed by the following (Formula 3).

[Expression 2]

$$\lambda \widetilde{\mathbf{m}} = \mathbf{A}\mathbf{R}_w \left( \mathbf{M} - \mathbf{C}_w \right) \qquad \ldots (\text{Formula 3})$$

The meaning of the above-described (Formula 3) will be described with reference to Figs. 13 and 14.

In a case where an image of an object 61, which is an imaging subject, is captured by a camera as illustrated in Fig. 13, an object image 62 is captured on a camera imaging surface (C-MOS or the like) 51 of the camera.

The above-described (Formula 3) is a formula indicating a correspondence relationship between a pixel position of a point (m) of the object image 62, included in the camera-captured image, in a camera-captured image plane, that is, a position expressed by the camera coordinate system, and the three-dimensional position (M) of the object 61 in the world coordinate system. Note that ($\sim$) above m will be omitted in the following description. In (Formula 3), m represents a coordinate position expressed by a homogeneous coordinate system.

The position (pixel position) of the point (m) in the object image 62 included in the camera-captured image is expressed by the camera image plane coordinate system. The camera coordinate system is a coordinate system in which a focal point of the camera is an origin C, an image plane is a two-dimensional plane of Xc and Yc, and an optical-axis direction (depth) is Zc, and the origin C moves as the camera moves.

On the other hand, the three-dimensional position (M) of the object 61, which is the imaging subject, is indicated by the world coordinate system including three axes of Xw, Yw, and Zw with the origin O that does not move by the movement of the camera. A formula indicating a correspondence relationship between positions of the object in these different coordinate systems is defined as the pinhole camera model of the above-described (Formula 3).

As illustrated in Fig. 14, values of (Formula 3) include the following parameters.

λ: Normalization parameter,
A: Camera intrinsic parameter,
Cw: Camera position, and
Rw: Camera rotation matrix.

Moreover,

[Expression 3]

$$\widetilde{\mathbf{m}} = \begin{bmatrix} m_u \\ m_v \\ 1 \end{bmatrix}$$

represents a position on a camera imaging plane expressed by the homogeneous coordinate system.
X is the normalization parameter, is a value to satisfy the third term of

[Expression 4]

$$\widetilde{\mathbf{m}}$$

,

and can be calculated by a calculation formula.

Note that the camera intrinsic parameter A is the following determinant as illustrated in Fig. 14.

[Expression 5]

$$A = \begin{bmatrix} -f \cdot k_u & f \cdot k_u \cdot cot\theta & u_0 \\ 0 & -\dfrac{f \cdot k_v}{sin\theta} & v_0 \\ 0 & 0 & 1 \end{bmatrix}$$

The camera intrinsic parameter A includes the following values.

f: Focal length
$\theta$: Orthogonality of image axis (ideal value is 90°)
$k_u$: Scale of vertical axis (transformation from scale of three-dimensional position to scale of two-dimensional image)
$k_v$: Scale of horizontal axis (transformation from scale of three-dimensional position to scale of two-dimensional image)
$(u_0, v_0)$: Image center position

The above-described (Formula 3), that is, (Formula 3) which is the relationship formula between the three-dimensional position M of the object, which is the imaging subject, and the camera imaging position (imaging pixel position) m of the object includes:

Cw: Camera position; and
Rw: Camera rotation matrix,
and these parameters can be acquired in the SLAM process executed by the user terminal 10, that is, the simultaneous localization and mapping (SLAM) process in which camera position identification (localization) and environment map creation (mapping) are executed in parallel.

The SLAM process is a process of capturing images (a moving image) by the camera, analyzing a trajectory of a feature point included in the plurality of captured images to estimate a three-dimensional position of the feature point and estimating (localizing) (self) position and attitude of the camera, and can create (map) a surrounding map (environmental map) using the three-dimensional position information of the feature point. In this manner, the process of executing the (self) position identification (localization) of the camera and the creation (mapping) of the surrounding map (environmental map) in parallel is called SLAM.
Note that as one of SLAM techniques, there is an EKF-based SLAM using an extended Kalman filter (EKF).
The EKF-based SLAM is, for example, a method of continuously capturing images while moving a camera, obtaining a trajectory (tracking information) of a feature point included in the respective images, and simultaneously estimating the amount of movement of the camera and a three-dimensional position of the feature point by a moving stereo method.
This EKF-based SLAM process uses "status data" including multidimensional normal distribution data as a probability distribution model including pieces of information as follows, for example,

a position, attitude, speed, and angular speed of the camera, and
position information on each feature point. A process of updating of the "status data" is performed using the Kalman filter or the extended Kalman filter to estimate a position of the feature point, a position of the camera, and the like.

The "status data" includes multidimensional normal distribution data including a mean vector, which represents a position, attitude, speed and angular speed of the camera and position information on each feature point, and a variance-covariance matrix. The variance-covariance matrix is a matrix including [variance] of inherent status values, such as the position, attitude, speed and angular speed of the camera, and the position information on each feature point, and [covariance] which corresponds to correlation information on combinations of different status values from among the respective status values described above.

Among the parameters included in (Formula 3) described above, that is, these parameters of

λ: normalization parameter
A: camera intrinsic parameter,
Cw: camera position, and
Rw: camera rotation matrix,
λ and A are known, and Cw and Rw can be calculated by SLAM.

It is possible to generate the relationship formula between the three-dimensional position M of the object, which is the imaging subject, and the camera imaging position (imaging pixel position) m of the object, that is, the above-described (Formula 3) by using these parameters, and the correspondence relationship between the three-dimensional position M of the object, which is the imaging subject indicated by the world coordinate system, and the object imaging position indicated by the camera coordinate system can be analyzed.

The above-described (Formula 3) is a formula indicating the positional relationship between the respective points (M and m):

(1) object position (M) indicated in world coordinate system; and
(2) object imaging position (m) indicated in camera image plane coordinate system,

in two different coordinate systems of the world coordinate system and the camera image plane coordinate system, but the relationship formula illustrated in (Formula 3) is not limited to the combination of the world coordinate system and the camera image plane coordinate system, and can be developed as a relationship formula indicating a positional relationship between two points (M and m) in another combination of two different coordinate systems.

Specifically, the above-described (Formula 3) can also be developed as, for example, a formula indicating a positional relationship between points (M and m):

(1) object position (M) indicated in NED coordinate system; and
(2) object imaging position (m) indicated in camera image plane coordinate system,

in two different coordinate systems of the NED coordinate system and the camera image plane coordinate system.

A relationship formula in this case, that is, the relationship formula indicating the positional relationship between the respective points (M and m):

(1) object position (M) indicated in NED coordinate system; and
(2) object imaging position (m) indicated in camera image plane coordinate system,

in the two different coordinate systems of the NED coordinate system and the camera image plane coordinate system can be expressed as the following (Formula 4).

[Expression 6]

$$\lambda \tilde{m} = A R_{NED} \left( M_{NED} - C_{NED} \right)$$

$$\ldots (\text{Formula } 4)$$

The above-described (Formula 4) corresponds to a formula obtained by changing the parameters corresponding to the world coordinate system of (Formula 3) described above, that is, these parameters of

Rw: camera rotation matrix,
M: object position, and

Cw: camera position,
to parameters of the NED coordinate system.

That is, the above-described (Formula 4) is a formula obtained by changing the above-described parameters to the following parameters of the NED coordinate system.

$R_{NED}$: Camera rotation matrix
$M_{NED}$: Object position
$C_{NED}$: Camera position

The relationship formula illustrated in (Formula 4) is a formula that defines the correspondence relationship between the object position in the NED coordinate system and the object imaging position in the camera image plane coordinate system, which is the object imaging position in the imaging element in the case where the image of the object is captured by the camera.

The coordinate transformation matrix that transforms a position ($_{NED}P_X$) in the NED coordinate system into a position ($_CP_X$) in the camera coordinate system is

$_C T_{NED}$,

and this coordinate transformation matrix can be calculated using the relationship formula.

As described above with reference to Fig. 8, each pixel position (u, v) of the display image displayed on the display unit of the user terminal 10 corresponds to an XY-coordinate (Xc, Yc, Zc) in the camera coordinate system. If the position and attitude of the camera in the NED coordinate system can be estimated from the position of the flight path indicated in the NED coordinate system and each pixel position (u, v) in the display image, and the position of the flight path indicated by the NED coordinate system can be transformed into the position in the camera coordinate system from the estimated information, the path can be accurately output onto the display image indicated by the camera coordinate system.

A specific example of the process of calculating the coordinate transformation matrix of $_C T_{NED}$ that transforms a position ($_{NED}P_X$) in the NED coordinate system into a position ($_CP_X$) in the camera coordinate system will be described.

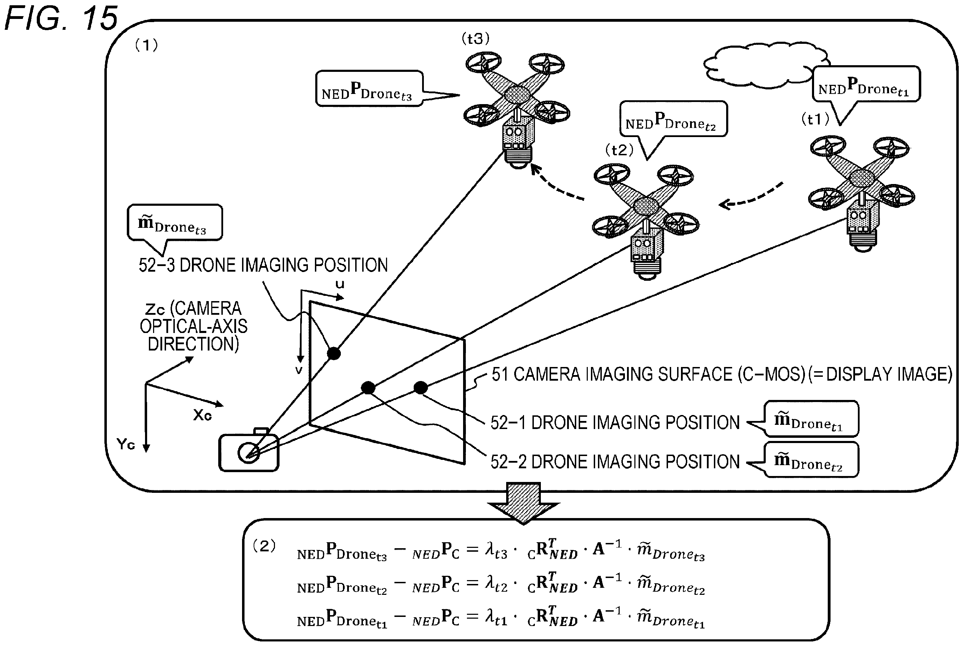

Fig. 15(1) is a diagram similar to that described above with reference to Figs. 11 and 12. A user captures images of the drone 20 flying in midair for a predetermined time using the user terminal 10. The drone 20 is not necessarily a drone carrying a package to be delivered to the user. However, the drone 20 needs to be a drone that can acquire position information (position information on the NED coordinates) of a flight path of the drone.

In the example illustrated in Fig. 15(1), the drone 20 is flying from right to left according to a lapse of time of times (t1), (t2), and (t3).

A data processing unit of the user terminal 10 records captured image positions of the drone at least at three different positions in a memory.

As illustrated in Fig. 15, for example, drone imaging positions 52-1 to 52-3, which corresponds to the drones at three different positions on the camera imaging surface 51, such as a C-MOS, are recorded in the memory.

Drone positions in the NED coordinate system at the times (t1), (t2), and (t3) are indicated as follows.

$$\text{Drone position at time (t1)} = {}_{NED}P_{Dronet1}$$

$$\text{Drone position at time (t2)} = {}_{NED}P_{Dronet2}$$

$$\text{Drone position at time (t3)} = {}_{NED}P_{Dronet3}$$

Furthermore, imaging positions in the camera coordinate system at the times (t1), (t2), and (t3) are indicated as follows.

$$\text{Drone imaging position at time (t1)} = m_{Dronet1}$$

$$\text{Drone imaging position at time (t2)} = m_{Dronet2}$$

Drone imaging position at time (t3) = m$_{Dronet3}$

Note that (~) above m is omitted in the above description. These drone imaging positions are position information in the camera image plane coordinate system indicated by a three-dimensional homogeneous coordinate system.

When the above-described (Formula 4), that is, (Formula 4) defining the correspondence relationship between the object position in the NED coordinate system and the object imaging position in the camera coordinate system, which is the object imaging position in the imaging element in a case where the object is imaged by the camera, is expressed using these parameters of:

a drone position of $_{NED}P_{Drone}$ in the NED coordinate system;
a camera position of $_{NED}P_{C}$ in the NED coordinate system; and
a drone imaging position in the camera coordinate system = m$_{Drone}$, the following (Formula 5) can be obtained.
[Expression 7]

$$\lambda \widetilde{m}_{Drone} = A \, _{C}R_{NED}\left(_{NED}\boldsymbol{P}_{Drone} - _{NED}\boldsymbol{P}_{C}\right)$$

...(Formula 5)

Moreover, the following (Formula 6) is derived on the basis of the above-described (Formula 5).
[Expression 8]

$$_{NED}\boldsymbol{P}_{Drone} - _{NED}\boldsymbol{P}_{C} = \lambda \cdot {}_{C}\boldsymbol{R}_{NED}^{T} \cdot \boldsymbol{A}^{-1} \cdot \widetilde{m}_{Drone}$$

...(Formula 6)

Note that

$_{C}R^{T}_{NED}$ is a transposed matrix of a rotation matrix of $_{C}R_{NED}$ that transforms the NED coordinate system into the camera coordinate system.
A$^{-1}$ is an inverse matrix of the camera intrinsic parameter A described above with reference to Fig. 14.

If the three different drone positions in the NED coordinate system at the times (t1) to (t3) illustrated in Fig. 15 and the drone imaging positions in the camera coordinate system corresponding to these drone positions are put into (Formula 6), simultaneous equations including three formulas illustrated in the following (Formula 7) are obtained.
[Expression 9]

$$_{NED}\boldsymbol{P}_{Drone_{t3}} - _{NED}\boldsymbol{P}_{C} = \lambda_{t3} \cdot {}_{C}\boldsymbol{R}_{NED}^{T} \cdot \boldsymbol{A}^{-1} \cdot \widetilde{m}_{Drone_{t3}}$$

$$_{NED}\boldsymbol{P}_{Drone_{t2}} - _{NED}\boldsymbol{P}_{C} = \lambda_{t2} \cdot {}_{C}\boldsymbol{R}_{NED}^{T} \cdot \boldsymbol{A}^{-1} \cdot \widetilde{m}_{Drone_{t2}}$$

$$_{NED}\boldsymbol{P}_{Drone_{t1}} - _{NED}\boldsymbol{P}_{C} = \lambda_{t1} \cdot {}_{C}\boldsymbol{R}_{NED}^{T} \cdot \boldsymbol{A}^{-1} \cdot \widetilde{m}_{Drone_{t1}}$$

...(Formula 7)

In the simultaneous equations of the (Formula 7) described above, the following parameters are known.
The drone position of $_{NED}P_{Drone}$ in the NED coordinate system can be acquired from the drone or the drone management server.
The inverse matrix A$^{-1}$ of the camera intrinsic parameter A is known.
The drone imaging positions at the times (t1) to (t3) of m$_{Dronet1}$ to m$_{Dronet3}$, which are coordinate position information of a camera imaging system, can be acquired by analyzing the camera-captured image.
Therefore, unknown parameters in the simultaneous equations illustrated in (Formula 7) described above are the following respective parameters:

camera position in NED coordinate system: $_{NED}P_C$;
transposed matrix of $_cR_{NED}$, which is rotation matrix that transforms NED coordinate system into camera coordinate system: $_cR^T_{NED}$; and
normalization coefficients: $\lambda_{t1}$, $\lambda_{t2}$, and $\lambda_{t3}$.

Here, the unknown parameters in the simultaneous equations illustrated in (Formula 7) described above are these nine parameters (three elements of the position, three elements of the attitude, and three normalization coefficients) of:

camera position in NED coordinate system: $_{NED}P_C$;
transposed matrix of $_cR_{NED}$, which is rotation matrix that transforms NED coordinate system into camera coordinate system: $_cR^T_{NED}$; and
normalization coefficients: $\lambda_{t1}$, $\lambda_{t2}$, and $\lambda_{t3}$,
and values of these parameters can be calculated by solving the simultaneous equations including the three formulas (the number of pieces of information: 9).

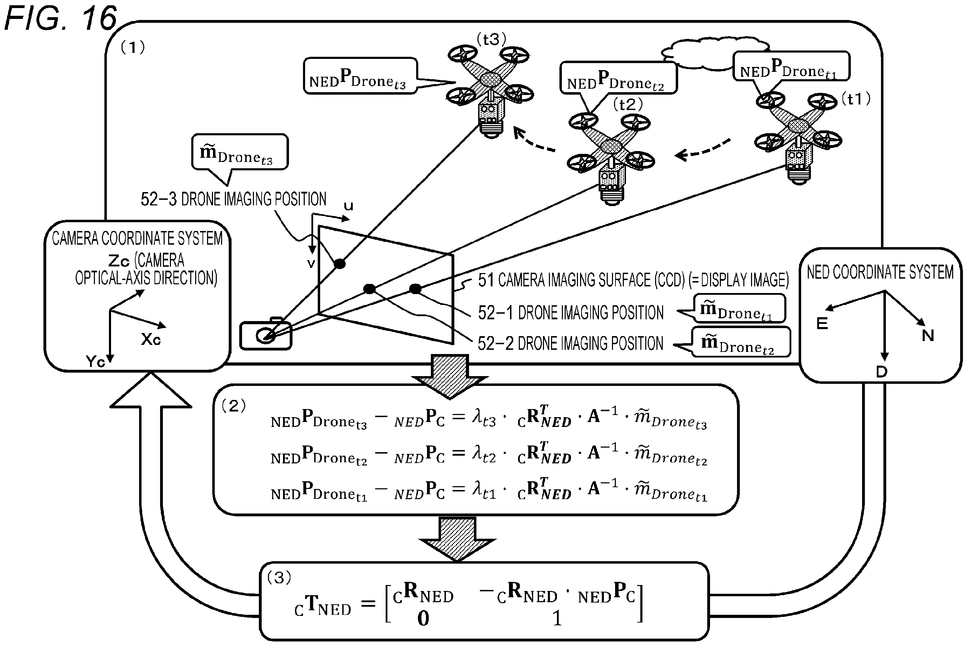

As illustrated in Fig. 16, a coordinate transformation matrix ($_cT_{NED}$) that transforms a position ($_{NED}P_X$) in the NED coordinate system into a position ($_cP_X$) in the camera coordinate system can be calculated by using the values of the calculation parameters.
The coordinate transformation matrix ($_cT_{NED}$) illustrated in Fig. 16(3), that is, the coordinate transformation matrix ($_cT_{NED}$) that transforms a position ($_{NED}P_X$) in the NED coordinate system into a position ($_cP_X$) in the camera coordinate system is a matrix obtained by replacing elements of the world coordinate system in matrix elements of the coordinate transformation matrix ($_cT_{NED}$) that transforms a position ($_{NED}P_X$) in the NED coordinate system into a position ($_cP_X$) in the camera coordinate system, described above with reference to Fig. 9, with elements of the NED coordinate system.
That is, the coordinate transformation matrix ($_cT_{NED}$) that transforms a position ($_{NED}P_X$) in the NED coordinate system into a position ($_cP_X$) in the camera coordinate system can be expressed by the following (Formula 8).
[Expression 10]

$$_cT_{NED} = \begin{bmatrix} _cR_{NED} & -\,_cR_{NED} \cdot\, _{NED}P_C \\ 0 & 1 \end{bmatrix}$$

$$...(\text{Formula 8})$$

The matrix elements of the coordinate transformation matrix ($_cT_{NED}$) illustrated in (Formula 8) described above are constituted by the parameters obtained by solving the simultaneous equations illustrated in (Formula 7) described above.
Therefore, it is possible to calculate the coordinate transformation matrix ($_cT_{NED}$) that transforms a position ($_{NED}P_X$) in the NED coordinate system into a position ($_cP_X$) in the camera coordinate system by solving the simultaneous equations illustrated in (Formula 7) described above.
In this manner, the user terminal 10, which is the information processing apparatus of the present disclosure, first acquires the three different drone positions in the NED coordinate system of the times (t1) to (t3) illustrated in Fig. 15(1) or Fig. 16(1) and the drone imaging positions in the camera coordinate system corresponding to these drone positions.
Next, the simultaneous equations illustrated in (Formula 7) described above are solved to acquire the following unknown parameters.
Camera position in NED coordinate system: $_{NED}P_C$
Transposed matrix of $_cR_{NED}$, which is rotation matrix that transforms NED coordinate system into camera coordinate system: $_cR^T_{NED}$
Next, the coordinate transformation matrix ($_cT_{NED}$), that is, the coordinate transformation matrix ($_cT_{NED}$) that transforms a position ($_{NED}P_X$) in the NED coordinate system into a position ($_cP_X$) in the camera coordinate system is generated using the calculated parameters.
When this coordinate transformation matrix ($_cT_{NED}$) is used, the position indicated in the NED coordinate system, for example, the flight position of the drone can be transformed into the position indicated in the camera coordinate system.

Furthermore, an inverse matrix ($_cT_{NED}^{-1}$) thereof can be calculated from the coordinate transformation matrix ($_cT_{NED}$) that transforms a position ($_{NED}P_X$) in the NED coordinate system into a position ($_cP_X$) in the camera coordinate system.

The inverse matrix ($_cT_{NED}^{-1}$) serves as a coordinate transformation matrix ($_{NED}T_C$) that transforms a position ($_cP_X$) in the camera coordinate system into a position ($_{NED}P_X$) in the NED coordinate system.

In this manner, it is possible to calculate two coordinate transformation matrices of:

(a) coordinate transformation matrix ($_cT_{NED}$) that transforms a position ($_{NED}P_X$) in the NED coordinate system into a position ($_cP_X$) in the camera coordinate system; and

(b) coordinate transformation matrix ($_{NED}T_C$) that transforms a position ($_cP_X$) in the camera coordinate system into a position ($_{NED}P_X$) in the NED coordinate system,

and the analysis of the correspondence relationship between the camera coordinate system and the NED coordinate system is completed.

As described above, if at least two coordinate transformation matrices can be calculated among these three coordinate transformation matrices, that is, the three coordinate transformation matrices of $_cT_{Ws}$, $_cT_{NED}$, and $_{Ws}T_{NED}$ illustrated in Fig. 10, it is possible to perform transformation among three coordinate systems, that is, these three coordinate systems of:

(1) camera coordinate system;
(2) NED coordinate system; and
(3) world coordinate system (SLAM coordinate system) (= reference coordinate system),

and a position indicated by any coordinate system can be indicated as a position in another coordinate system.

The coordinate transformation matrix ($_cT_{Ws}$) that transforms a position ($_{Ws}P_X$) in the world coordinate system (SLAM coordinate system) into a position ($_cP_X$) in the camera coordinate system among the three coordinate transformation matrices illustrated in Fig. 10 can be calculated by performing the SLAM process using the camera, that is, the user terminal 10.

Moreover, the coordinate transformation matrix ($_cT_{NED}$) that transforms a position ($_{NED}P_X$) in the NED coordinate system into a position ($_cP_X$) in the camera coordinate system can be calculated by the above processing.

As a result, the coordinate transformation processes among the three coordinate systems illustrated in Fig. 10 become possible.

For example, it is also possible to calculate a coordinate transformation matrix ($_{Ws}T_{NED}$) that transforms a position ($_{NED}P_X$) in the NED coordinate system into a position ($_{Ws}P_X$) in the world coordinate system (SLAM coordinate system) (= reference coordinate system).

Through these processes, the coordinate analysis process of analyzing relationship between positions on different coordinates used by drone and user terminal to calculate coordinate transformation matrix (Process 1) is completed.

When the coordinate transformation matrices calculated in (Process 1) is applied, the drone 20 can acquire the position in the NED coordinate system used by the drone 20 as the position in the world coordinate system (SLAM coordinate system) (= reference coordinate system), and further acquire the planned landing position in the captured image of the user terminal 10 as the position in the world coordinate system (SLAM coordinate system) (= reference coordinate system).

As a result, the user terminal 10 can generate the "virtual drone camera image" in the next (Process 2).

That is, it is possible to generate the relationship formula configured to generate the "virtual drone camera image" in (Process 2) by applying the coordinate transformation matrix calculated in (Process 1).

Note that the processing described with reference to Figs. 15 and 16 is processing on the premise that the position and attitude of the camera do not change during an imaging period of the drones at the three different positions, that is, for the drone imaging time of the times (t1) to (t3) illustrated in Fig. 15(1) or Fig. 16(1).

In a case where a position or an attitude of a camera changes during an imaging period of drones at three different positions, it is necessary to perform processing in consideration of the change in the position or attitude of the camera.

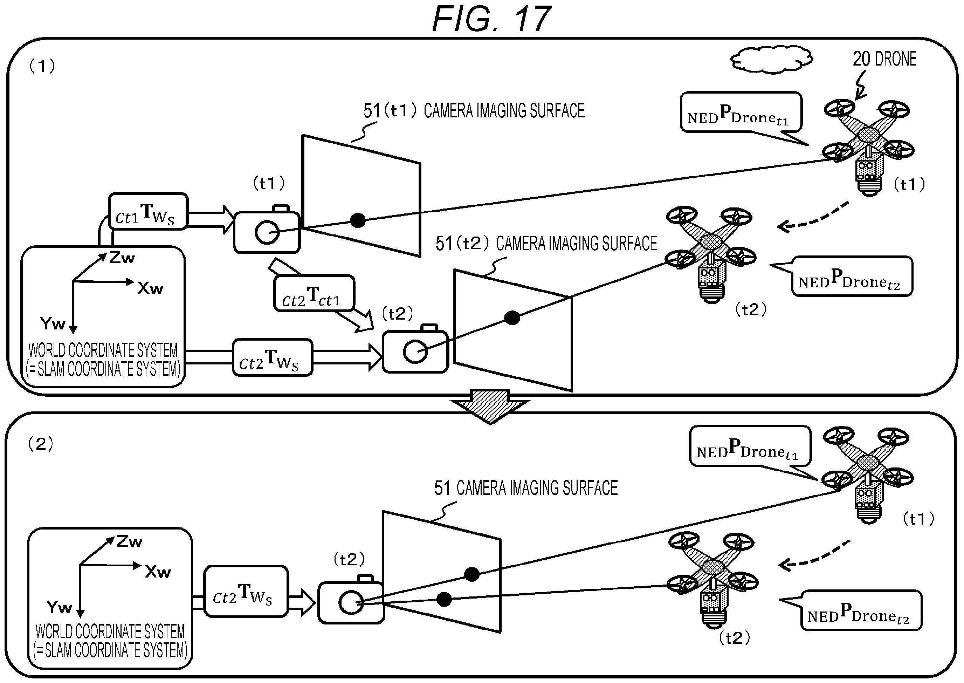

Hereinafter, such a processing example will be described with reference to Fig. 17.

In this processing example as well, three different drone positions in the NED coordinate system and drone imaging positions in the camera coordinate system corresponding to these drone positions are acquired, and a coordinate transformation matrix ($_cT_{NED}$) that transforms a position ($_{NED}P_X$) in the NED coordinate system into a position ($_cP_X$) in the camera coordinate system is generated on the basis of these pieces of acquired information.

In the case where the position or attitude of the camera changes during the imaging period of the drones, positions or attitudes of cameras that capture images of the drones 20 at different positions are different as illustrated in Fig. 17(1).

In the example illustrated in Fig. 17(1), an imaging surface of the camera that captures the image of the drone at time (t1) is a camera imaging surface 51(t1), an imaging surface of the camera that captures the image of the drone at time (t2) is a camera imaging surface 51(t2), and the both have different positions or attitudes.

Here, a coordinate transformation matrix that transforms the world coordinate system (SLAM coordinate system) into the camera coordinate system at time (t1) is assumed as $(_{Ct1}T_{Ws})$.

Furthermore, a coordinate transformation matrix that transforms the world coordinate system (SLAM coordinate system) into the camera coordinate system at time (t2) is assumed as $(_{Ct2}T_{Ws})$.

Note that a coordinate transformation matrix $(_{Ctn}T_{Ws})$ that transforms the world coordinate system (SLAM coordinate system) into the camera coordinate system at time (tn) is a matrix corresponding to the coordinate transformation matrix $(_{C}T_{Ws})$ that transforms a position $(_{Ws}P_X)$ in the world coordinate system (SLAM coordinate system) of one point (x) into a position $(_{C}P_X)$ in the camera coordinate system, in the three-dimensional space described above with reference to Fig. 9, in the time (n).

Matrix elements constituting the coordinate transformation matrix $(_{Ctn}T_{Ws})$ for the transformation into the camera coordinate system at the time (tn) can be acquired in an SLAM process executed by the user terminal 10, that is, a simultaneous localization and mapping (SLAM) process in which camera position identification (localization) and environment map creation (mapping) are executed in parallel.

Therefore, the coordinate transformation matrices $(_{Ctn}T_{Ws})$ of the time (tn) including the coordinate transformation matrix $(_{Ct1}T_{Ws})$ that transforms the world coordinate system (SLAM coordinate system) into the camera coordinate system at the time (t1) and the coordinate transformation matrix $(_{Ct2}T_{Ws})$ that transforms the world coordinate system (SLAM coordinate system) into the camera coordinate system at the time (t2), which are illustrated in Fig. 17, can be calculated by the SLAM process.

Furthermore, a coordinate transformation matrix that transforms the camera coordinate system at the time (t1) into the camera coordinate system at the time (t2) is $(_{Ct2}T_{Ct1})$, and can be calculated as follows.

$$_{Ct2}T_{Ct1} \; = \; _{Ct2}T_{Ws} \; \times \; _{Ct1}T_{Ws}{}^{-1}$$

The user terminal 10, which is the image processing apparatus of the present disclosure, performs coordinate transformation by applying the above-described coordinate transformation matrix of $_{Ct2}T_{Ct1}$ to a drone imaging position on an imaging surface of the camera at the time (t1) at the time of capturing the image of the drone at the time (t1). Through this coordinate transformation, the drone imaging position in the camera coordinate system at the time (t1) is transformed into the drone imaging position in the camera coordinate system at the time (t2).

Furthermore, a drone position to be transformed into the imaging surface of the camera at the time (t1), that is,

$_{NED}P'_{Dronet1}$
can be expressed by the following formula.

$$_{NED}P'_{Dronet1} \; = \; _{NED}P_{Dronet1} \; + \; (_{Ct2}R^{T}{}_{NED}) \cdot (_{Ct2}R_{Ct1}) \cdot (_{Ct1}P_{Ct2})$$

As a result, drone imaging positions on two different camera coordinate systems can be transformed into drone imaging positions conforming to one common camera coordinate system.

When the above processing is performed on the drone imaging positions corresponding to the three different drone positions, it is possible to set the drone imaging positions corresponding to the three different drone positions on one common camera coordinate system.

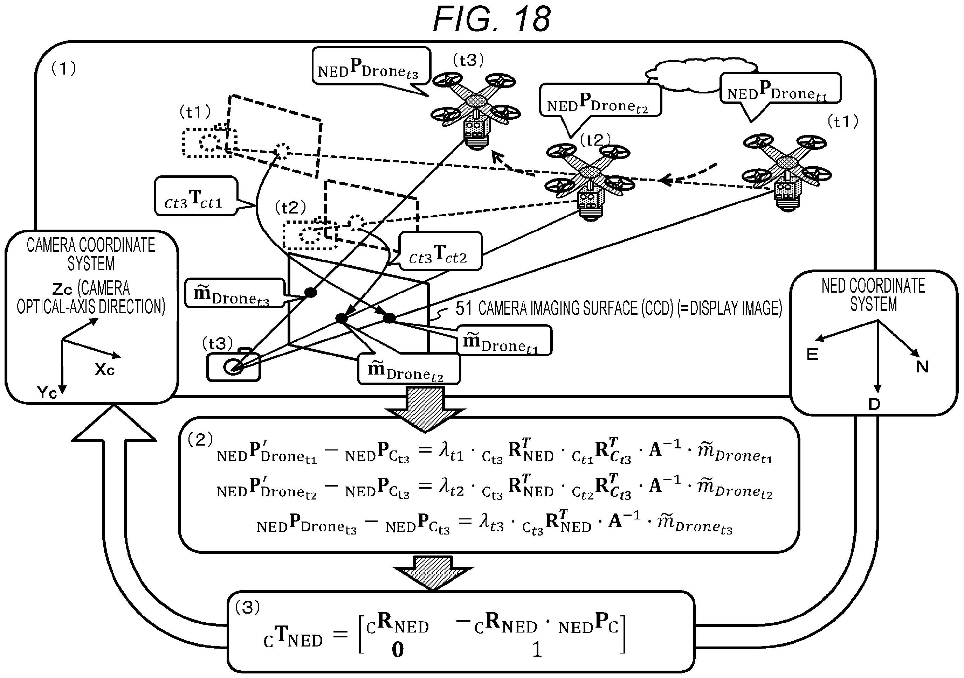

Fig. 18(1) illustrates an example of a case where positions or attitudes of cameras that capture images of drones at three different positions are different.

As illustrated in Fig. 18(1), positions or attitudes of the camera (user terminal 10) are different at times (t1), (t2), and (t3), and the cameras having mutually different positions or attitudes capture images of the drone 20 at the times (t1), (t2), and (t3).

A case where a flight path and a planned flight path of the drone 20 are output at the latest time (t3) is assumed. In this case, the data processing unit of the user terminal 10 executes the following processing.

(1) An equation for performing coordinate transformation in which a coordinate transformation matrix $(_{Ct3}T_{Ct1})$ is applied to a drone imaging position at the time (t1) is established.
(2) An equation for performing coordinate transformation in which a coordinate transformation matrix $(_{Ct3}T_{Ct2})$ is applied to a drone imaging position at the time (t2) is established.

Through these coordinate transformation processes, the drone imaging positions in the camera coordinate system at the times (t1) and (t2) are transformed into drone imaging positions in the camera coordinate system at the time (t3).

Since these equations are established, it is possible to establish simultaneous equations for setting drone imaging positions corresponding to the three different drone positions on one common camera coordinate system (camera coordinate system of the time (t3)).

That is, it is possible to establish the simultaneous equations for setting the following three draw imaging positions on one common camera coordinate system (camera coordinate system of the time (t3)).

$$\text{Drone imaging position at time (t1)} = m_{Dronet1}$$

$$\text{Drone imaging position at time (t2)} = m_{Dronet2}$$

$$\text{Drone imaging position at time (t3)} = m_{Dronet3}$$

Note that (~) above m is omitted in the above description. These drone imaging positions are position information in the camera coordinate system indicated by a three-dimensional homogeneous coordinate system.

Thereafter, processing similar to the processing described above with reference to Figs. 15 and 16 is executed.

First, as illustrated in Fig. 18(2), simultaneous equations including formulas of correspondence relationships between each of the drone imaging positions = $m_{Dronet1}$ to $m_{Dronet3}$ at the times (t1) to (t3) and each of the drone positions in the NED coordinate system, that is, the simultaneous equations of (Formula 7) described above are generated.

Next, a coordinate transformation matrix ($_{C}T_{NED}$) illustrated in Fig. 18(3), that is, the coordinate transformation matrix ($_{C}T_{NED}$) that transforms a position ($_{NED}P_X$) in the NED coordinate system into a position ($_{C}P_X$) in the camera coordinate system is calculated by using parameters obtained by solving the simultaneous equations.

Moreover, an inverse matrix ($_{C}T_{NED}^{-1}$) that can be calculated on the basis of the coordinate transformation matrix ($_{C}T_{NED}$) serves as a coordinate transformation matrix ($_{NED}T_C$) that transforms a position ($_{C}P_X$) in the camera coordinate system into a position ($_{NED}P_X$) in the NED coordinate system, which is similar to the processing described above.

In this manner, it is possible to calculate two coordinate transformation matrices of:

(a) coordinate transformation matrix ($_{C}T_{NED}$) that transforms a position ($_{NED}P_X$) in the NED coordinate system into a position ($_{C}P_X$) in the camera coordinate system; and
(b) coordinate transformation matrix ($_{NED}T_C$) that transforms a position ($_{C}P_X$) in the camera coordinate system into a position ($_{NED}P_X$) in the NED coordinate system,

and the analysis of the correspondence relationship between the camera coordinate system and the NED coordinate system is completed.

Since such processing is performed, the coordinate transformation matrix that transforms coordinate positions of a position ($_{NED}P_X$) in the NED coordinate system and a position ($_{C}P_X$) in the camera coordinate system can be calculated even in the case where the position or attitude of the camera changes during the imaging period of the drones at the three different positions.

Through any processing among the processing described with reference to Figs. 15 and 16 and the processing described with reference to Figs. 17 and 18, the coordinate analysis process of analyzing relationship between positions on different coordinates used by drone and user terminal to calculate coordinate transformation matrix (Process 1) is completed.

Next, a processing sequence of (Process 1), that is, the following (Process 1):

(Process 1) Coordinate analysis process of analyzing positional relationship on different coordinates used by drone and user terminal to calculate coordinate transformation matrix

will be described.

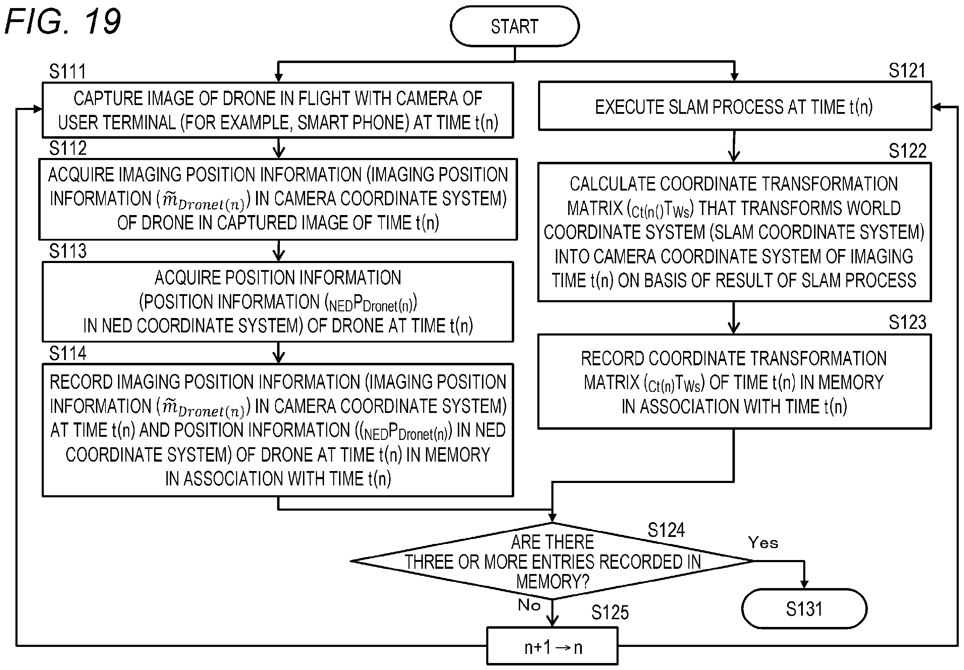

Flowcharts illustrated in Fig. 19 and subsequent drawings are diagrams illustrating flowcharts for describing a processing sequence executed by the information processing apparatus of the present disclosure, for example, the user terminal 10 such as a smart phone.

Processing according to flows illustrated in Fig. 19 and the subsequent drawings can be executed under the control of a control unit (data processing unit), which includes a CPU having a program execution function of the information processing apparatus and the like, according to a program stored in a memory inside the information processing apparatus.

Hereinafter, processes in the respective steps of the flows illustrated in Fig. 19 and the subsequent drawings will be sequentially described.

Note that processing from steps Sill to S114 and processing from steps S121 to S123 illustrated in Fig. 19 can be executed in parallel.

First, the processing from steps Sill to S114 will be described.

(Step S111)

A process in step Sill is a process of capturing an image of a drone in midair by the user terminal 10.

At time t(n), for example, the image of the drone 20 in flight is captured using a camera of the user terminal 10 such as the smart phone.

That is, the image of the drone 20 in flight is captured as described above with reference to Figs. 11 and 12.

As illustrated in Fig. 11, a user captures images of the drone 20 flying in midair for a predetermined time using the user terminal 10. The drone 20 is not necessarily a drone carrying a package to be delivered to the user. However, the drone 20 needs to be a drone that can acquire position information (position information on the NED coordinates) of a flight path of the drone.

(Step S112)

Next, in step S112, the user terminal 10 acquires drone imaging position information (imaging position information ($m_{Dronet(n)}$) in the camera coordinate system) in the captured image at the time t(n). Note that the description is given in the document while omitting (~) above m.

This drone imaging position is an imaging position indicated by the camera coordinate system (homogeneous coordinate system) at the time t(n).

(Step S113)

Next, in step S113, the user terminal 10 acquires position information (position information ($_{NED}P_{Dronet(n)}$) in the NED coordinate system) of the drone at the time t(n).

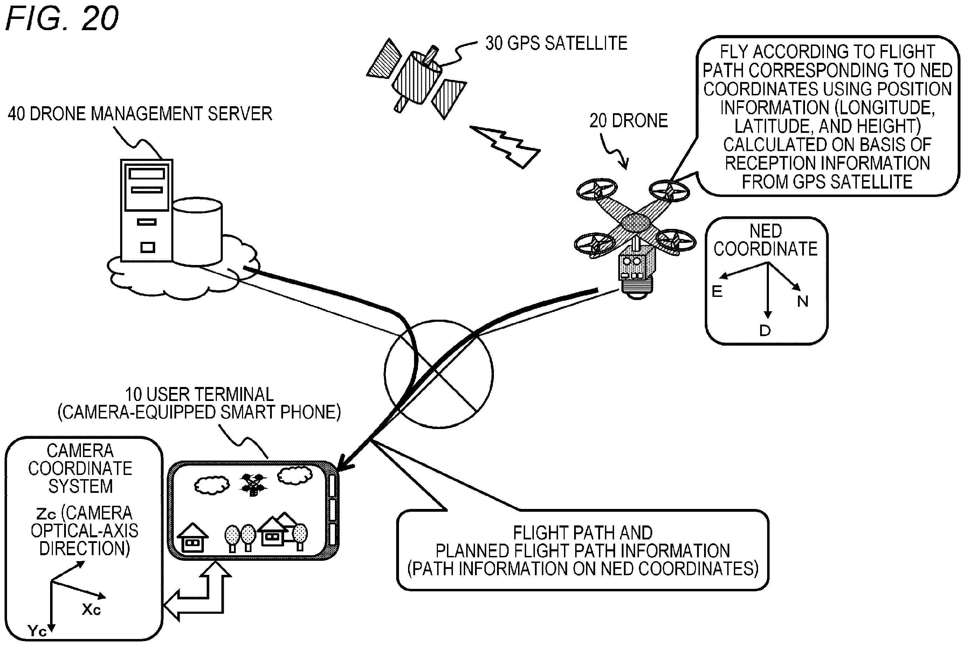

As illustrated in Fig. 20, the user terminal 10, which is the information processing apparatus of the present disclosure, can acquire flight path information indicated in the NED coordinate system from the drone 20 or the drone management server 40 of a control center that controls the drone 20 and the like.

(Step S114)

Next, in step S114, the user terminal 10 records the imaging position information (imaging position information ($m_{Dronet(n)}$) in the camera coordinate system) of the drone at the time t(n) and the position information (position information ($_{NED}P_{Dronet(n)}$) in the NED coordinate system) in the memory in association with the time t(n).

Next, the processing from steps S121 to S123 executed in parallel with the processing from steps Sill to S114 will be described.

(Step S121)

In step S121, the user terminal 10 executes the following process.

An SLAM process is executed at the time t(n), that is, at the drone imaging timing in step Sill.

As described above, the SLAM process is the process of executing the camera position identification (localization) and the environmental map creation (mapping) in parallel.

(Step S122)

Next, in step S122, the user terminal 10 calculates a coordinate transformation matrix ($_{Ct(n)}T_{Ws}$) that transforms the world coordinate system (SLAM coordinate system) into the camera coordinate system of the imaging time t(n) on the basis of a result of the SLAM process in step S121.

This process in step S122 corresponds to the process described above with reference to Fig. 17(1).

(Step S123)

Next, in step S123, the user terminal 10 records, in the memory, the coordinate transformation matrix $(_{Ct(n)}T_{Ws})$ calculated in step S122, that is, the coordinate transformation matrix $(_{Ct(n)}T_{Ws})$ that transforms the world coordinate system (SLAM coordinate system) into the camera coordinate system of the imaging time t(n).
If the processing from steps Sill to S114 and the processing from steps S121 to S123 are completed, a process in step S124 is executed.

(Step S124)

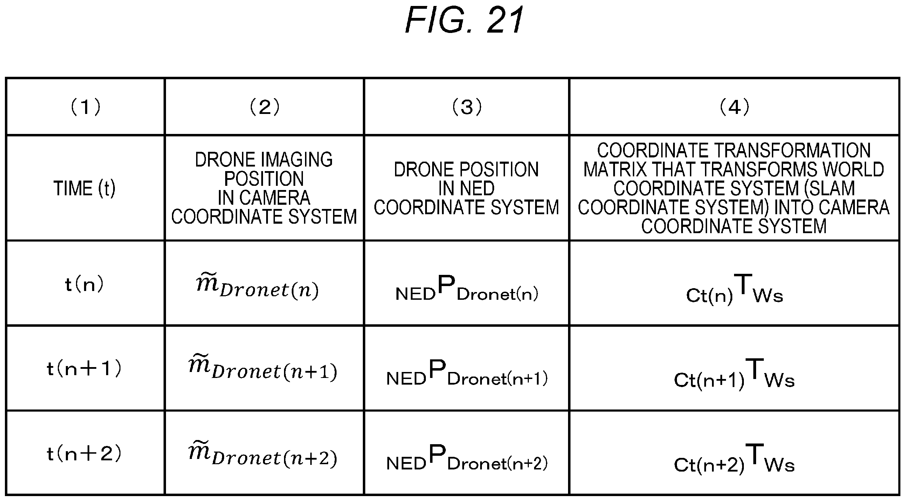

In step S124, the user terminal 10 determines whether or not there are three or more entries recorded in the memory.
That is, it is determined whether or not pieces of data based on the captured images at the three different drone positions are recorded in the memory.
An example of specific record data recorded in the memory will be described with reference to Fig. 21.
Fig. 21 illustrates an example in which the pieces of data based on the captured images at the three different drone positions have been recorded.
As illustrated in Fig. 21, entries corresponding to drone imaging times in midair (t(n) and the like) are recorded in the memory. In each of the entries, the following pieces of data are recorded as data corresponding to the drone imaging time.

(1)

```
Time (t) (= drone imaging time)
```

(2) Drone imaging position in camera coordinate system
(3) Drone position in NED coordinate system
(4) Coordinate transformation matrix that transforms world coordinate system (SLAM coordinate system) into camera coordinate system

"(2) Drone imaging position in camera coordinate system" is drone imaging position information (imaging position information $(m_{Dronet(n)})$ in the camera coordinate system or the like) in the captured image acquired in step S112 of the flow illustrated in Fig. 19.
"(3) Drone position in NED coordinate system" is position information (position information $(_{NED}P_{Dronet(n)})$ in the NED coordinate system or the like) of the drone in midair at an image capturing timing, the position information being acquired in step S113 of the flow illustrated in Fig. 19.
"(4) Coordinate transformation matrix that transforms world coordinate system (SLAM coordinate system) into camera coordinate system" is a coordinate transformation matrix $(_{Ct(n)}T_{Ws}$ or the like) that transforms the world coordinate system (SLAM coordinate system) into a camera coordinate system of the imaging time, the coordinate transformation matrix being calculated in step S122 of the flow illustrated in Fig. 19.
In the respective entries corresponding to the imaging times in the memory, pieces of data corresponding to these drone imaging times are recorded.
In step S124 of the flowchart illustrated in Fig. 19, it is determined whether or not there are three or more entries recorded in the memory.
That is, it is determined whether or not pieces of data based on the captured images at the three different drone positions are recorded in the memory.
In a case where the pieces of data based on the captured images at the three different drone positions are recorded in the memory as illustrated in Fig. 21, the processing proceeds to the next step S131.
On the other hand, in a case where the pieces of data based on the captured images at the three different drone positions are not recorded in the memory, it is determined in step S124 as No, and the processing proceeds to step S125.

(Step S125)

In step S125, a time setting parameter n is set to the next time (n+1), and the processing from steps Sill to S114 and the processing from steps S121 to S123 are executed at the next time (n+1).

That is, at the time (n+1), an image of the drone located at a different position from the time (n) is captured to execute the processing.

(Step S131)

In a case where it is determined in step S124 that the pieces of data based on the captured images at the three different drone positions are recorded in the memory as illustrated in Fig. 21, the processing proceeds to step S131.

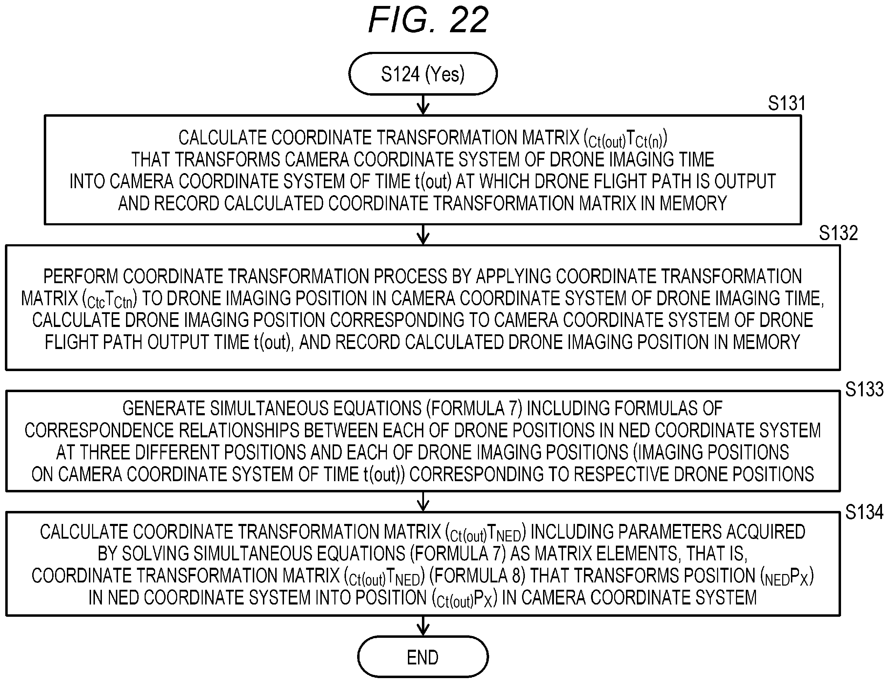

As illustrated in Fig. 22, the user terminal 10 executes the following process in step S131.

A coordinate transformation matrix ($_{Ct(out)}T_{Ct(n)}$ or the like) that transforms the camera coordinate system of the drone imaging time into a camera coordinate system of time t(out) at which a drone flight path is output is calculated and recorded in the memory.

This process corresponds to the process described above with reference to Fig. 17.

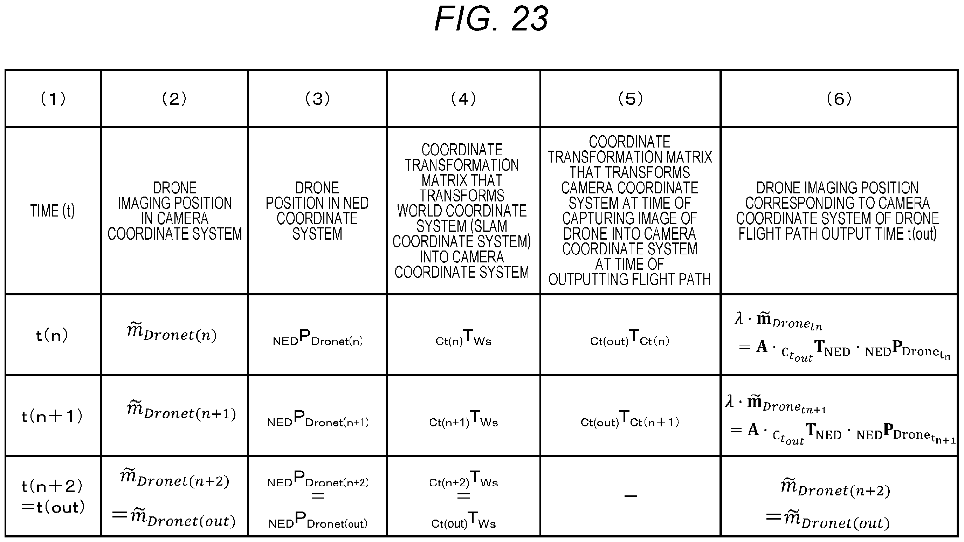

An example of the coordinate transformation matrix ($_{Ct(out)}T_{Ct(n)}$ or the like) to be recorded in the memory will be described with reference to Fig. 23.

Data to be recorded in the memory in step S131 is data of (5) Illustrated in Fig. 23, that is, data of

(5) Coordinate transformation matrix that transforms camera coordinate system at time of capturing image of drone into camera coordinate system at time of outputting flight path.

Note that, in the example illustrated in Fig. 23, time = t(n+2) among three entries corresponding to imaging times illustrated in Fig. 23 is assumed as the drone flight path output time t(out).

That is,

$$t(n+2) = t(out).$$

In this case, as illustrated in Fig. 23, a coordinate transformation matrix is additionally recorded as "(5) Coordinate transformation matrix that transforms camera coordinate system at time of capturing image of drone into camera coordinate system at time of outputting flight path" only at the imaging time = t(n) and at the imaging time = t(n+1).

In data at the imaging time = t(n+2), a camera coordinate system at the time of capturing an image of the drone coincides with a camera coordinate system at the time of outputting a flight path, and thus, it is unnecessary to additionally record a coordinate transformation matrix.

For the entry of the imaging time = t(n),
a coordinate transformation matrix that transforms a camera coordinate system (Ct(n)) at the time of capturing an image of the drone (t = (n)) into a camera coordinate system (Ct(out) at the time of outputting a flight path:

$$_{Ct(out)}T_{Ct(n)}$$

is added.

Furthermore, for the entry of the imaging time = t(n+1),
a coordinate transformation matrix that transforms a camera coordinate system (Ct(n+1)) at the time of capturing an image of the drone (t = (n+1)) into a camera coordinate system (Ct(out) at the time of outputting a flight path:

$$_{Ct(out)}T_{Ct(n+1)}$$

is added.

(Step S132)

As illustrated in the flow of Fig. 22, next, the user terminal 10 executes the following process in step S132.

A coordinate transformation process is performed by applying a coordinate transformation matrix ($_{Ctc}T_{Ctn}$) to a drone imaging position in a camera coordinate system of a drone imaging time, and the drone imaging position corresponding to a camera coordinate system of the drone flight path output time t(out) is calculated and recorded in the memory.

This processing corresponds to the processing described above with reference to Fig. 17 and Fig. 18(1).

An example of the drone imaging position corresponding to the camera coordinate system of the drone flight path output time t(out) to be recorded in the memory will be described with reference to Fig. 23.

Data to be recorded in the memory in step S132 is data of (6) illustrated in Fig. 23, that is, data of (6) Drone imaging position corresponding to camera coordinate system of drone flight path output time t(out).

Note that, in the example illustrated in Fig. 23, time = t(n+2) among the three entries corresponding to imaging times illustrated in Fig. 23 is assumed as the drone flight path output time t(out).

That is,

$$t(n+2) = t(out).$$

In this case, in step S132, the user terminal 10 calculates the following pieces of data and records the calculated data in the memory.

Processing for data of the drone imaging time = t(n) is the following processing.

A coordinate transformation process is performed by applying the coordinate transformation matrix $(_{Ct(out)}T_{Ct(n)})$ to a drone imaging position $(m_{Dront(n)})$ in the camera coordinate system $(C_{t(n)})$ of the drone imaging time = t(n). That is, the following coordinate transformation process is performed.

$$\lambda(m_{Dronetn}) = A \cdot (_{Ctout}T_{NED}) \cdot (_{NED}P_{Dronetn})$$

A coordinate acquired by the above calculation formula is the drone imaging position corresponding to the camera coordinate system of the drone flight path output time t(out). This coordinate position is recorded in the memory.

Furthermore, processing for data of the drone imaging time = t(n+1) is the following processing.

A coordinate transformation process is performed by applying the coordinate transformation matrix $(_{Ct(out)}T_{Ct(n+1)})$ to a drone imaging position $(m_{Dront(n+1)})$ in the camera coordinate system $(C_{t(n+1)})$ of the drone imaging time = t(n+1). That is, the following coordinate transformation process is performed.

$$\lambda(m_{Dronetn+1}) = A \cdot (_{Ctout}T_{NED}) \cdot (_{NED}P_{Dronetn+1})$$

A coordinate acquired by the above calculation formula is the drone imaging position corresponding to the camera coordinate system of the drone flight path output time t(out). This coordinate position is recorded in the memory.

Furthermore, processing for data of the drone imaging time = t(n+2) is the following processing.

A camera coordinate system $(C_{t(n+2)})$ of the drone imaging time = t(n+2) coincides with the camera coordinate system $(C_{t(out)})$ of the drone flight path output time t(out).

Therefore, coordinate transformation is unnecessary, and a drone imaging position $(m_{Dront(n+2)})$ in the camera coordinate system $(C_{t(n+2)})$ of the drone imaging time = t(n+2) is recorded as it is in the memory.

These pieces of recorded data are data recorded in the item (6) illustrated in Fig. 23.

Next, processes of step S133 and the subsequent steps of the flow illustrated in Fig. 22 will be described.

(Step S133)

In step S133, the user terminal 10 executes the following process.

The simultaneous equations (Formula 7), which includes the formulas of the correspondence relationships between each of the drone positions in the NED coordinate system at the three different positions recorded in the memory and each of the drone imaging positions (imaging positions on the camera coordinate system of the time t(out)) corresponding to the respective drone positions, is generated.

The simultaneous equations to be generated are the simultaneous equations described above with reference to Figs. 15(2), 16(2), and 18(2), and are the simultaneous equations described above as (Formula 7).

Note that the position calculated in step S132, that is, the drone imaging position corresponding to the camera coordinate system of the drone flight path output time t(out) is used as the drone imaging position $(m_{Dronetn})$ included in the three formulas constituting the simultaneous equations illustrated in (Formula 7).

That is, the coordinate position after the transformation, recorded in the item (6) of the data recorded in the memory described with reference to Fig. 23, is used.

(Step S134)

Next, in step S134, the user terminal 10 calculates a coordinate transformation matrix $(_{Ct(out)}T_{NED})$ including parameters obtained by solving the simultaneous equations (Formula 7) generated in step S133 as matrix elements, that is, the coordinate transformation matrix ($_{Ct(out)}T_{NED}$) (Formula 8) that transforms a position ($_{NED}P_X$) in the NED coordinate system into a position ($_{Ct(out)}P_X$) in the camera coordinate system.

This coordinate transformation matrix ($_{Ct(out)}T_{NED}$) corresponds to the coordinate transformation matrix ($_cT_{NED}$) described above with reference to Figs. 16(3) and 18(3), and corresponds to the coordinate transformation matrix ($_cT_{NED}$) described above as (Formula 8).

As a result of these processes, the calculation of the coordinate transformation matrix ($_CT_{NED}$), that is, the coordinate transformation matrix ($_cT_{NED}$) that transforms a position ($_{NED}P_X$) in the NED coordinate system into a position ($_CP_X$) in the camera coordinate system is completed.

Note that the coordinate transformation matrix ($_CT_{Ws}$) that transforms the world coordinate system (SLAM coordinate system) into the camera coordinate system of the imaging time t(n) is calculated in step S122.

As described above, if at least two coordinate transformation matrices can be calculated among these three coordinate transformation matrices, that is, the three coordinate transformation matrices of $_CT_{Ws}$, $_CT_{NED}$, and $_{Ws}T_{NED}$ illustrated in Fig. 10, it is possible to perform transformation among three coordinate systems, that is, these three coordinate systems of:

(1) camera coordinate system;
(2) NED coordinate system; and
(3) world coordinate system (SLAM coordinate system) (= reference coordinate system),

and a position indicated by any coordinate system can be indicated as a position in another coordinate system.

When the processing according to the flows illustrated in Figs. 19 and 22 is executed, the two coordinate transformation matrices including:

the coordinate transformation matrix ($_CT_{Ws}$) that transforms the world coordinate system (SLAM coordinate system) into the camera coordinate system of the imaging time t(n); and
the coordinate transformation matrix ($_CT_{NED}$) that transforms a position ($_{NED}P_X$) in the NED coordinate system into a position ($_CP_X$) in the camera coordinate system
are calculated.

As a result, it is possible to perform the conversion among the three coordinate systems illustrated in Fig. 10, that is, the three coordinate systems of:

(1) camera coordinate system;
(2) NED coordinate system; and
(3) world coordinate system (SLAM coordinate system) (= reference coordinate system),

and a position indicated by any one of the coordinate systems can be indicated as a position of another coordinate system.

When the coordinate transformation matrices among the three coordinate systems illustrated in Fig. 10 are used, the drone 20 can acquire the position in the NED coordinate system used by the drone 20 as the position in the world coordinate system (SLAM coordinate system) (= reference coordinate system), and further acquire the planned landing position in the captured image of the user terminal 10 as the position in the world coordinate system (SLAM coordinate system) (= reference coordinate system).

As described above, the information processing apparatus according to the present disclosure, for example, the user terminal 10 executes the above-described (Process 1), that is, the following (Process 1).

(Process 1) Coordinate analysis process of analyzing positional relationship on different coordinates used by drone and user terminal to calculate coordinate transformation matrix

When (Process 1) is executed, the coordinate transformation matrices that enable the transformation among the three coordinate systems illustrated in Fig. 10, that is, the three coordinate systems of:

(1) camera coordinate system;
(2) NED coordinate system; and
(3) world coordinate system (SLAM coordinate system) (= reference coordinate system),

for example, the coordinate transformation matrix ($_{Ws}T_{NED}$) that transforms a position ($_{NED}P_X$) in the NED coordinate system into a position ($_{Ws}P_X$) in the world coordinate system (SLAM coordinate system) (= reference coordinate system) and the like, are calculated.

As described above, the coordinate transformation matrix calculated in (Process 1) is applied to parameter calculation for generation of the "virtual drone camera image" to be generated in the next (Process 2).

[4-2. (Process 2) Regarding Details of Planned Landing Position Imaging Process, And Generation Process And Transmission Process of Virtual Drone Camera Image Based on Captured Image Executed by User Terminal]

Next, details of (Process 2) described with reference to Fig. 1(1), that is, the following (Process 2):

(Process 2) Process of capturing image of planned landing position by user terminal, generating "virtual drone camera image" based on captured image, and transmitting generated "virtual drone camera image", GPS position information of planned landing position, and the like to drone or drone management server
will be described.

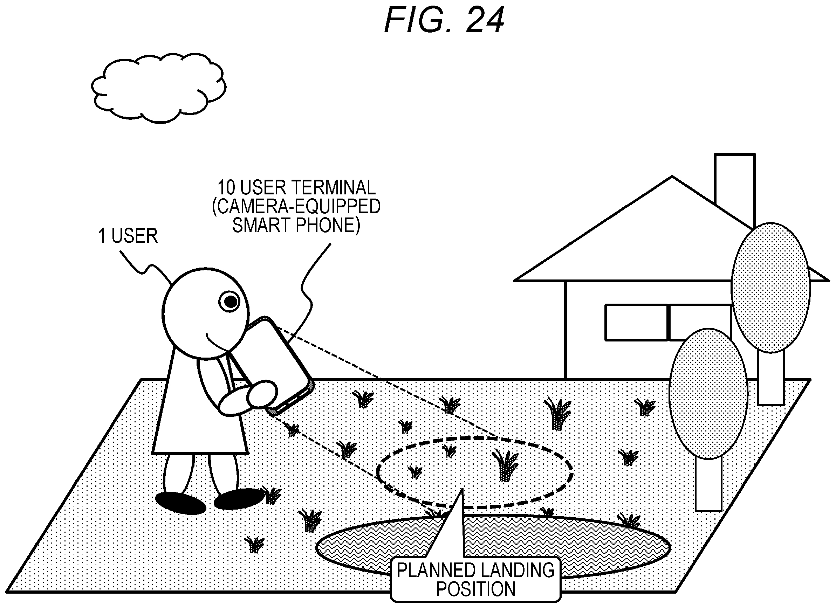

In this (Process 2), first, the user 1 uses the user terminal 10 to capture an image of a position (planned landing position) on the ground where the drone 20 is to be landed as illustrated in Fig. 24,. Next, the data processing unit of the user terminal 10 generates a "virtual drone camera image" based on the captured image. Moreover, the user terminal 10 transmits the generated "virtual drone camera image", GPS position information of the planned landing position, and the like to the drone or the drone management server.

For example, the following information is necessary as information necessary for the drone 20 to land at the planned landing position designated by the user 1 illustrated in Fig. 24, for example, with a high accuracy without any positional deviation.

(1) Latitude and longitude information of planned landing position (position in NED coordinate system)
(2) Virtual image in case where image of planned landing position is assumed to be captured using downward camera mounted on drone (hereinafter, this image is referred to as virtual drone camera image)
(3) Planned landing position on virtual drone camera image

In (Process 2), these pieces of information are generated and transmitted to the drone or the drone management server.

First, the user 1 illustrated in Fig. 24 captures the image of the planned landing position using the user terminal 10 as illustrated in Fig. 24.

The data processing unit of the user terminal 10 generates the "virtual drone camera image" on the basis of the captured image.

Note that the "virtual drone camera image" is a virtual image estimated to be captured in a case where the planned landing position is captured by a drone camera 22 of the drone 20 in midair.

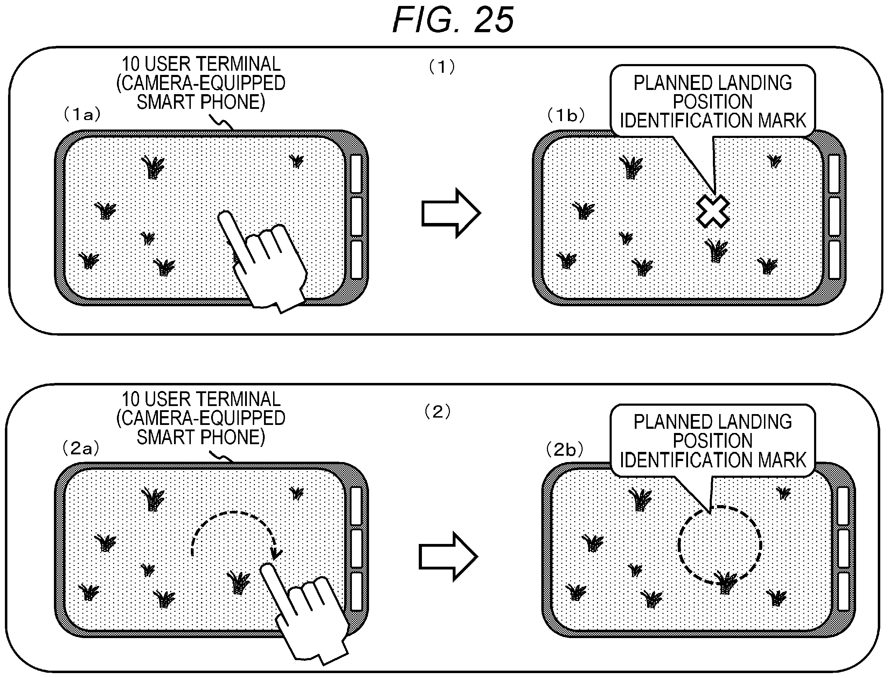

The user 1 captures the image of the planned landing position using the user terminal 10. Moreover, the user 1 designates an image area of the planned landing position in the captured image as illustrated in Figs. 25(1a) and 25(2a). For example, a process of tapping the image area of the planned landing position with a finger or sliding a finger so as to draw a circle is performed. An application being executed on the user terminal 10 detects the operation of designating the image area performed by the user, and outputs a planned landing position identification mark to a position designated by the user as illustrated in Figs. 25(1b) and 25(2b).

The data processing unit of the user terminal 10 executes an image transformation process on the basis of the captured image including this planned landing position identification mark to generate the "virtual drone camera image" including the planned landing position identification mark.

Moreover, the user terminal 10 analyzes the captured image of the planned landing position and the like, and generates data to be transmitted to the drone 20 or the drone management server 40.

Note that the user 1 may input, to the user terminal 10, a part of the data necessary for generation of the "virtual drone camera image" and the data to be transmitted to the drone 20 or the drone management server 40.

The user inputs, for example, the following pieces of data via the input unit of the user terminal 10.

(1) Height of user device 10 from planned landing position at time of capturing image of planned landing position using user device 10
(2) Image area of planned landing position in image captured by user device 10
(3) Yaw angle (azimuth angle) when drone 20 descends to planned landing position (optional)
(4) Altitude of virtual drone camera image (optional)

Hereinafter, specific data input processing examples thereof will be described.

(1) Height of user device 10 from planned landing position at time of capturing image of planned landing position using user device 10

The user 1 inputs, to the user terminal 10, a height of the user device 10 from a planned landing position at the time of capturing an image of the planned landing position using the user device 10.

Note that, regarding the height at the time of capturing the image, for example, it may be configured such that the height of the user is registered in advance in the memory of the user device 10, and the data processing unit of the user device 10 acquires registration information from the memory as the height at the time of capturing the image.

(2) Image area of planned landing position in image captured by user device 10

After capturing the image including the planned landing position using the user device 10, the user 1 inputs area designation information indicating which image area of the captured image is an image area of the planned landing position.

For example, the user 1 displays the captured image on the display unit of the user terminal 10, and taps the image area of the planned landing position within the image with a finger or slides a finger so as to draw a circle.

The data processing unit of the user terminal 10 detects an area of a screen touched by the user 1 to identify the image area of the planned landing position within the image, acquires pixel position information corresponding to the image area of the planned landing position, and records the acquired pixel position information in the memory of the user terminal 10.

(3) Yaw angle (azimuth angle) when drone 20 descends to planned landing position

If necessary, the user designates a yaw angle (azimuth angle) when the drone 20 descends to the planned landing position.

There is a case where descending from a specific direction is required, for example, a case where there is a high building around the planned landing position and the like. In such a case, the user performs a process of designating the yaw angle (azimuth angle) when the drone 20 descends to the planned landing position, and transmitting such designated information to the drone 20 or the drone management server 40.

(4) Altitude of virtual drone camera image (optional)

The "virtual drone camera image" is an image generated as the data processing unit of the user terminal 10 transforms the image of the planned landing position captured by the user terminal 10, and is the virtual image in the case where the image of the planned landing position is assumed to be captured using the downward camera mounted on the drone.

The user can also designate the altitude of the camera that captures the "virtual drone camera image" generated by the data processing unit of the user terminal 10. The data processing unit of the user terminal 10 generates the "virtual drone camera image" estimated to be captured at the time of looking down on the planned landing position from the height designated by the user according to the designation by the user.

Note that, in a case where no user designation information is input, a "virtual drone camera image" obtained by looking down on the planned landing position from a preset default height is generated.

Note that it may be configured such that height data, designated in advance by a delivery service side that grasps specifications of the drone or a drone manufacturer, may be used as the default value.

If the image capturing of the planned landing position performed by the user 1 is executed and the necessary data, such as the pieces of data of (1) to (4) described above are acquired, the data processing unit of the user terminal 10 executes a transformation process of the image captured by the user 1, that is, the image capturing of the planned landing position to generate the "virtual drone camera image" obtained by capturing the planned landing position from directly above, and further, generates data to be transmitted to the drone 20 or the drone management server 40 using the generated image, data input by the user, and the like.

Moreover, the data processing unit of the user terminal 10 transmits the generated data to the drone 20 or the drone management server 40.

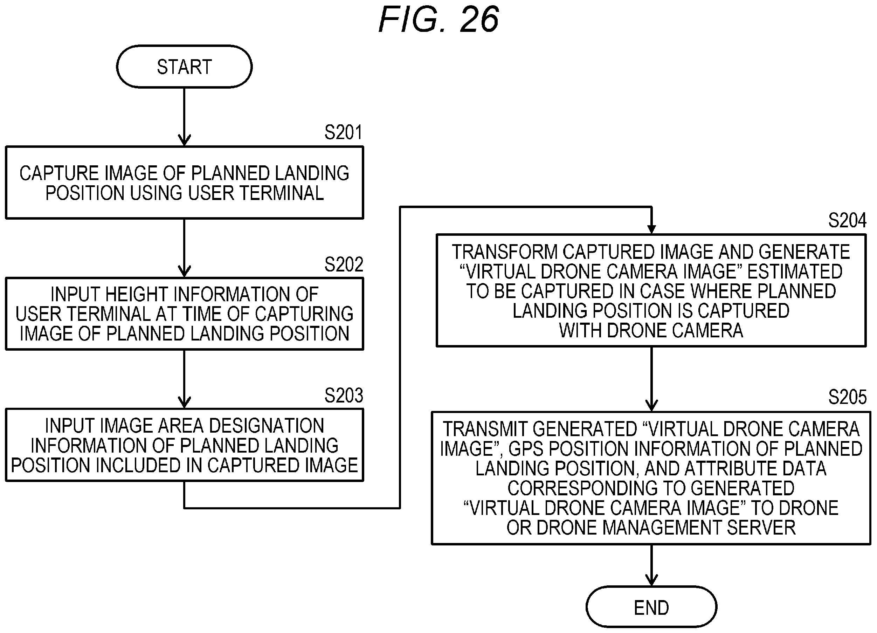

The flowchart illustrated in Fig. 26 is a flowchart illustrating a detailed sequence when the user terminal 10 executes (Process 2), that is, the following (Process 2).

(Process 2) Process of capturing image of planned landing position by user terminal, generating "virtual drone camera image" based on captured image, and transmitting generated "virtual drone camera image", GPS position information of planned landing position, and the like to drone or drone management server.

Hereinafter, a process in each step will be described with reference to this flowchart.

(Step S201)

First, in step S201, the user 1 captures an image of a planned landing position using the user terminal 10.

As illustrated in Fig. 24, the user 1 captures the image including the planned landing position.

(Step S202)

Next, in step S202, the user 1 inputs height information of the user terminal 10 at the time of capturing the image of the planned landing position to the user terminal 10.

The data processing unit of the user terminal 10 records the input height information in the memory.

Note that, regarding the height at the time of capturing the image, for example, it may be configured such that the height of the user is registered in advance in the memory of the user device 10, and the data processing unit of the user device 10 acquires registration information from the memory as the height at the time of capturing the image as described above.

(Step S203)

Next, in step S203, the user 1 inputs image area designation information of the planned landing position included in the captured image displayed on the display unit of the user terminal 10.

As described above, for example, the user 1 displays the captured image on the display unit of the user terminal 10, and taps the image area of the planned landing position within the image with a finger or slides a finger so as to draw a circle.

This process is the process described above with reference to Fig. 25. The user 1 displays the image obtained by capturing the planned landing position on the display unit of the user terminal 10, and designates the image area of the planned landing position in the captured image as illustrated in Figs. 25(1a) and 25(2a). For example, a process of tapping the image area of the planned landing position with a finger or sliding a finger so as to draw a circle is performed.

The application being executed in the data processing unit of the user terminal 10 detects the area of the screen touched by the user 1 to identify the image area of the planned landing position within the image, detects the operation of designating the image area performed by the user, and outputs the planned landing position identification mark to the position designated by the user as illustrated in Figs. 25(1b) and 25(2b). Moreover, the pixel position information corresponding to the image area of the planned landing position is acquired and recorded in the memory.

(Step S204)

Next, in step S204, the data processing unit of the user terminal 10 transforms the captured image and generates the "virtual drone camera image" which is an estimated captured image in a case where the image of the planned landing position is assumed to be captured by the drone camera 22 of the drone 20 in midair.

Note that the data processing unit of the user terminal 10 executes the image transformation process on the basis of the captured image including this planned landing position identification mark to generate the "virtual drone camera image" including the planned landing position identification mark as described above with reference to Fig. 25.

Note that information necessary for the virtual drone camera image generation process, for example, information on specifications of the drone camera 22 of the drone 20, for example, parameters such as the attitude, a focal position, and the angle of view of the drone camera 22 may be set by the user, or predetermined values (default values) may be used. Alternatively, values acquired from the drone 20 or the drone management server 40 may be used.

Details of the virtual drone camera image generation process in step S204 will be described later.

(Step S205)

Finally, in step S205, the data processing unit of the user terminal 10 transmits the "virtual drone camera image" generated in step S204, GPS position information of the planned landing position, and attribute data corresponding to the generated "virtual drone camera image" to the drone 20 or the drone management server 40.

The drone 20 uses these pieces of data to execute (Process 3) and (Process 4) described with reference to Fig. 1.

That is, the drone 20 first executes the process of moving to midair above the planned landing position on the basis of the GPS position information of the planned landing position received from the user terminal 10 as the process of (Process 3).

Next, in (Process 4), the drone 20 performs the process of collating the "virtual drone camera image" transmitted from the user terminal 10 with the captured image of the drone camera 22, confirms the planned landing position included in the captured image of the drone camera 22, and executes the process of landing toward the planned landing position.

Through these processes, the drone 20 can land at the planned landing position designated by the user with a high accuracy.

Next, details of the "virtual drone camera image" generation process executed in step S204 of the flow illustrated in Fig. 26 will be described.

In step S204, the data processing unit of the user terminal 10 transforms the captured image and generates the "virtual drone camera image" which is the estimated captured image in the case where the image of the planned landing position is assumed to be captured by the drone camera.

Details of this "virtual drone camera image" generation process will be described.

The data processing unit of the user terminal 10 first calculates a zenith direction vector in the world coordinate system (SLAM coordinate system) (= reference coordinate system).

This vector calculation process uses the coordinate transformation matrix ($_{Ws}T_{NED}$) that transforms a position ($_{NED}P_X$) in the NED coordinate system into a position ($_{Ws}P_X$) in the world coordinate system (SLAM coordinate system) (= reference coordinate system), the coordinate transformation matrix being calculated in (Process 1), or the position and attitude information of the user terminal 10 calculated in the SLAM process of (Process 1).

Note that the zenith direction is a direction obtained by rotating a Z-axis direction of the NED coordinate system by 180 degrees, that is, a direction opposite to the Z axis.

Next, the data processing unit of the user terminal 10 calculates the following values (a) to (d).

The data processing unit of the user terminal 10 calculates the values (a) to (d): (a) attitude of planned landing position plane (landing plane with Z = 0) ($_{PS}R_{Ws}$), and

(b) planned landing position ($_{WS}P_{PS}$)
in the world coordinate system (SLAM coordinate system) (= reference coordinate system); and
(c) attitude of planned landing position plane (landing plane with Z = 0) ($_{PS}R_{NED}$), and
(d) planned landing position ($_{NED}P_{PS}$),
in the NED coordinate system.

Note that, values of

(a) attitude of planned landing position plane (landing plane with Z = 0) ($_{PS}R_{Ws}$), and
(b) planned landing position ($_{WS}P_{PS}$)

in the world coordinate system (SLAM coordinate system) (= reference coordinate system) described above can be calculated by the SLAM process in which the captured image of the planned landing position using the user terminal 10 is applied in (Process 2).

Note that, a map generation process to which the SLAM process is applied, that is, a map generation process of the external environment included in the camera-captured image is described in, for example, Patent Document 2 (Japanese Patent Application Laid-Open No. 5920352), which is a prior application of the present applicant, and this technique can be applied.

Furthermore, values of

(c) attitude of planned landing position plane (landing plane with Z = 0) ($_{PS}R_{NED}$), and
(d) planned landing position ($_{NED}P_{PS}$)
in the NED coordinate system described above can be calculated according to the following (Formula 9) using a result of the SLAM process executed in (Process 1) and the coordinate transformation matrix ($_{Ws}T_{NED}$) calculated by applying the SLAM process, that is, the coordinate transformation matrix ($_{WS}T_{NED}$) that transforms a position ($_{NED}P_X$) in the NED coordinate system into a position ($_{Ws}P_X$) in the world coordinate system (SLAM coordinate system) (= reference coordinate system).

$$_{PS}R_{NED} \;=\; {}_{PS}R_{WS} \cdot {}_{NED}R_{WS}{}^{T},$$

$$_{NED}P_{PS} \;=\; {}_{NED}R_{WS}({}_{WS}P_{PS} - {}_{WS}P_{NED})$$

$$\ldots (\text{Formula } 9)$$

A relationship formula (corresponding pixel positional relationship formula) between a position on the captured image of the user terminal 10 and a position on the "virtual drone camera image", the relationship formula being configured to generate the "virtual drone camera image", is expressed by the following (Formula 10). Note that the following (Formula 10) is the relationship formula generated on the premise that the camera of the user terminal 10 and the drone camera 22 (downward camera) of the drone 20 conform to the pinhole camera model.

(Formula 10) is calculated from transformation information (Formula 8) (Table 1) among the following coordinate systems and the pinhole camera model (Formula 3), and is the relationship formula that enables calculation of a corresponding pixel position $[u_S, v_S]$ on the image captured by the user if a pixel position $[u_N, v_N]$ on the "virtual drone camera image" is designated.

(1) Virtual drone camera coordinate system (NED coordinate system)
(2) Landing plane coordinate system
(3) World coordinate system (SLAM coordinate system)

[Expression 11]

$$\lambda_N \cdot {}_{PS}R_{NED} \cdot {}_{N}R_{NED}^T \cdot A_N^{-1} \cdot \begin{bmatrix} u_N \\ v_N \\ 1 \end{bmatrix}$$

$$= \lambda_S \cdot {}_{PS}R_{W_S} \cdot {}_{C}R_{W_S}^T \cdot A_S^{-1} \cdot \begin{bmatrix} u_S \\ v_S \\ 1 \end{bmatrix} + {}_{PS}R_{NED} \cdot \left({}_{NED}P_{PS} - {}_{NED}P_N\right) - {}_{PS}R_{W_S} \cdot \left({}_{W_S}P_{PS} - {}_{W_S}P_C\right)$$

$$\ldots (\text{Formula } 10)$$

The above-described (Formula 10) is the corresponding pixel positional relationship formula indicating the correspondence relationship between a pixel position on the captured image obtained by capturing the planned landing position by the camera of the user terminal 10 and a pixel position on the "virtual drone camera image" which is the estimated captured image in the case where the image of the planned landing position is assumed to be captured by the virtual drone camera mounted on the drone 20.

Note that a plurality of calculation formulas constituting (Formula 10) described above correspond to the following data calculation formula.

[Expression 12]

$$\lambda_N \cdot {}_{PS}R_{NED} \cdot {}_{N}R_{NED}^T \cdot A_N^{-1} \cdot \begin{bmatrix} u_N \\ v_N \\ 1 \end{bmatrix}$$

This calculation formula is a calculation formula of a vector connecting a focal position of a virtual drone camera image to a place of a landing plane corresponding to a coordinate position on the virtual drone camera image in a coordinate system expressed by a position and an attitude of the landing plane.

[Expression 13]

$$\lambda_S \cdot {}_{PS}R_{W_S} \cdot {}_{C}R_{W_S}^T \cdot A_S^{-1} \cdot \begin{bmatrix} u_S \\ v_S \\ 1 \end{bmatrix}$$

This calculation formula is a calculation formula of a vector that connects a position of the user terminal to a place of a landing plane corresponding to a coordinate position on the captured image of the user terminal in the coordinate system expressed by the position and attitude of the landing plane.

[Expression 14]

$${}_{PS}R_{NED} \cdot \left({}_{NED}P_{PS} - {}_{NED}P_N\right)$$

This calculation formula is a calculation formula of a vector connecting the focal position of the virtual drone camera image to the planned landing position in the coordinate system expressed by the position and attitude of the landing plane.

[Expression 15]

$$_{PS}R_{W_S} \cdot \left( {}_{W_S}P_{PS} - {}_{W_S}P_C \right)$$

This calculation formula is a calculation formula of a vector obtained by subtracting the planned landing position from a position of the user terminal in the coordinate system expressed by the position and attitude of the landing plane.

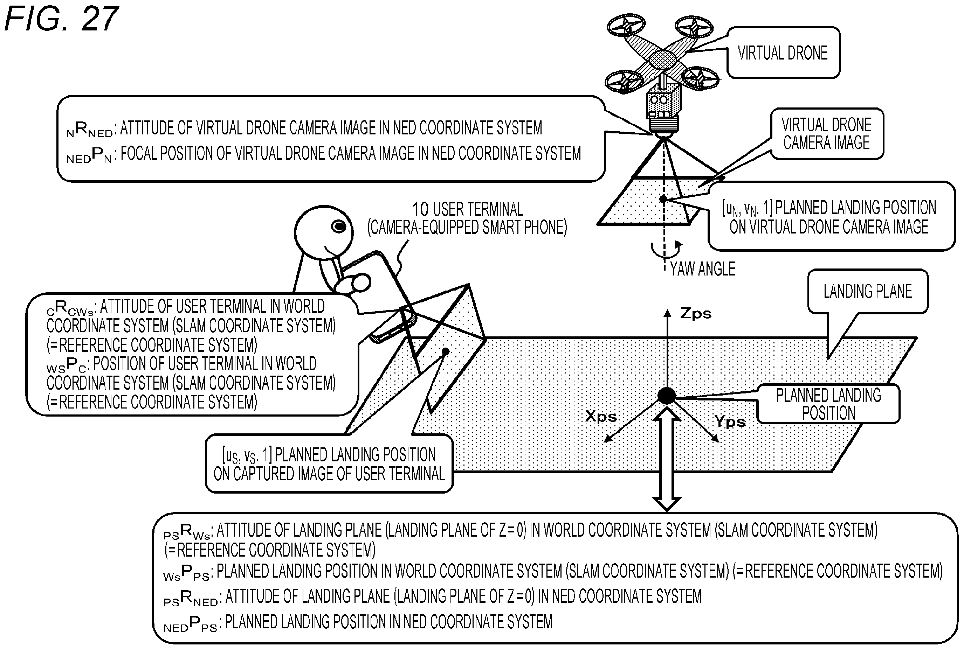

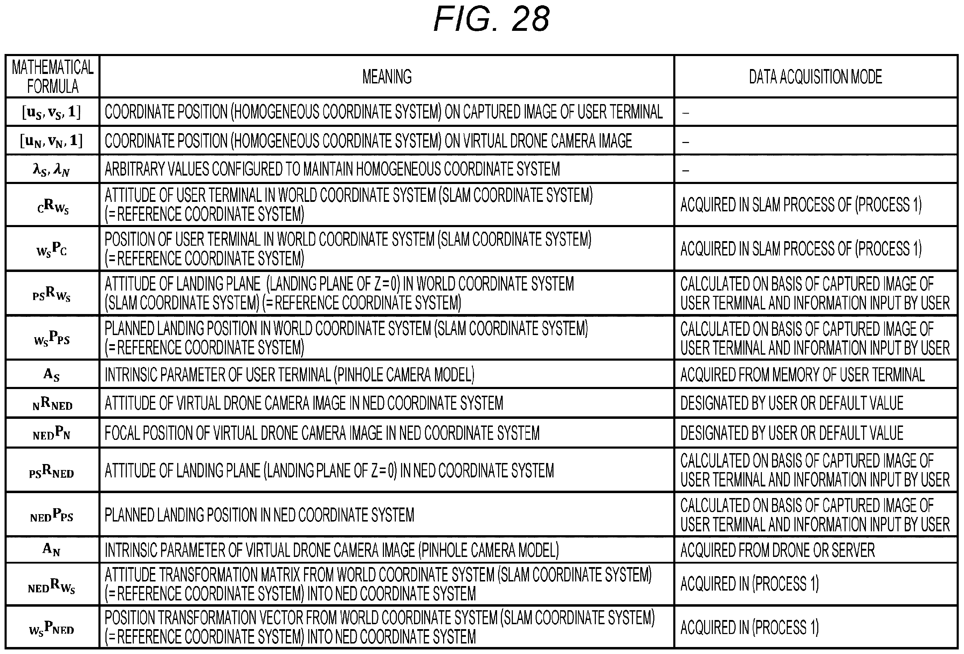

Note that the respective parameters in (Formula 10) described above are set as illustrated in the following table and Figs. 27 and 28.

[Table 1]

| Mathematical formula | Meaning | Data acquisition mode |
|---|---|---|
| $[u_s, v_s, 1]$ | Coordinate position (homogeneous coordinate system) on captured image of user terminal | - |
| $[u_N, v_N, 1]$ | Coordinate position (homogeneous coordinate system) on virtual drone camera image | - |
| $\lambda_S, \lambda_N$ | Arbitrary values configured to maintain homogeneous coordinate system | - |
| $_C R_{Ws}$ | Attitude of user terminal in world coordinate system (SLAM coordinate system) (= reference coordinate system) | Acquired in SLAM process of (Process 1) |
| wsPc | Position of user terminal in world coordinate system (SLAM coordinate system) (= reference coordinate system) | Acquired in SLAM process of (Process 1) |
| $_{PS}R_{WS}$ | Attitude of landing plane (landing plane of z = 0) in world coordinate system (SLAM coordinate system) (= reference coordinate system) | Calculated on basis of captured image of user terminal and information input by user |
| $_{WS}P_{PS}$ | Planned landing position in world coordinate system (SLAM coordinate system) (= reference coordinate system) | Calculated on basis of captured image of user terminal and information input by user |
| As | Intrinsic parameter of user terminal (pinhole camera model) | Acquired from memory of user terminal |
| $_N R_{NED}$ | Attitude of virtual drone camera image in NED coordinate system | Designated by user or default value |
| $_{NED}P_N$ | Focal position of virtual drone camera image in NED coordinate system | Designated by user or default value |
| $_{PS}R_{NED}$ | Attitude of landing plane (landing plane of z = 0) in NED coordinate system | Calculated on basis of captured image of user terminal and information input by user |
| $_{NED}P_{PS}$ | Planned landing position in NED coordinate system | Calculated on basis of captured image of user terminal and information input by user |
| AN | Intrinsic parameter of virtual drone camera image (pinhole camera model) | Acquired from drone or server |

(continued)

| Mathematical formula | Meaning | Data acquisition mode |
|---|---|---|
| $_{NED}R_{WS}$ | Attitude transformation matrix from world coordinate system (SLAM coordinate system) (= reference coordinate system) into NED coordinate system | Acquired in (Process 1) |
| $_{WS}P_{NED}$ | Position transformation vector from world coordinate system (SLAM coordinate system) (= reference coordinate system) into NED coordinate system | Acquired in (Process 1) |

As illustrated in the above-described table, all the parameters in (Formula 10) are any of (Process 1) and (Process 2) executed by the user terminal 10, data acquired from the drone 20 or the drone management server 40, data stored in the user terminal 10, or data input to the user terminal 10 by the user, and the corresponding pixel positional relationship formula illustrated in (Formula 10) described above can be generated using these pieces of data.

Some of the parameters used in the corresponding pixel positional relationship formula are parameters calculated using the a coordinate transformation matrix, which is applied to the transformation among the three coordinate systems calculated in (Process 1), that is, the three coordinate systems of:

(1) camera coordinate system;
(2) NED coordinate system; and
(3) World coordinate system (SLAM coordinate system) (= reference coordinate system).

Note that an attitude ($_{N}R_{NED}$) and a focal position ($_{NED}P_{N}$) of the "virtual drone camera image" in the NED coordinate system illustrated in the above table and Figs. 27 and 28 are an attitude (attitude ($_{N}R_{NED}$) in the NED coordinate system) of the drone camera 22 estimated to capture the same image as the "virtual drone camera image" and a focal position (focal position ($_{NED}P_{N}$) in the NED coordinate system) of the drone camera 22 estimated to capture the same image as the "virtual drone camera image".

These parameters can be determined by the user who operates the user terminal 10. Alternatively, a preset default value may be used in a case where the "virtual drone camera image" generation process is executed in the user terminal 10.

Note that, in a case where the user terminal 10 uses user-designated parameters that are not known by the drone 20 regarding these parameters, that is, for the respective parameters of the attitude ($_{N}R_{NED}$) and the focal position ($_{NED}P_{N}$) of the "virtual drone camera image" in the NED coordinate system, these parameters (the attitude ($_{N}R_{NED}$) and the focal position ($_{NED}P_{N}$) of the "virtual drone camera image") are transmitted from the user terminal 10 to the drone 20 or the drone management server 40 together with the "virtual drone camera image" generated by the user terminal 10.

The user terminal 10 generates the "virtual drone camera image" using the relationship formula illustrated in the above-described (Formula 10), that is, the relationship formula (corresponding pixel positional relationship formula) between the position on the captured image of the user terminal 10 and the position on the "virtual drone camera image".

The user terminal 10 executes the "virtual drone camera image" generation process using the relationship formula (corresponding pixel positional relationship formula) illustrated in the above-described (Formula 10) according to the following processing procedure.

First, the user terminal 10 calculates a pixel position (in the homogeneous coordinate system) $[u_{s}, v_{s}, 1]$ on the captured image of the user terminal 10 which corresponds to a pixel position (in the homogeneous coordinate system) $[u_{N}, v_{N}, 1]$ on the "virtual drone camera image" by using (Formula 10) described above.

Next, an output value (color) of a pixel position $[u_{s}, v_{s}]$ on the captured image of the user terminal 10 is set as an output value (color) of a pixel position $[u_{N}, v_{N}]$ on the "virtual drone camera image".

This process is executed for all pixels of the "virtual drone camera image" to generate the "virtual drone camera image".

In step S204 of the flow illustrated in Fig. 26, the "virtual drone camera image" is generated using the captured image of the user terminal 10 according to the above-described procedure.

Note that the data processing unit of the user terminal 10 executes the image transformation process on the basis of the captured image including this planned landing position identification mark to generate the "virtual drone camera image" including the planned landing position identification mark as described above with reference to Fig. 25.

In the next step S205, the user terminal 10 transmits the following pieces of data to the drone 20 or the drone management server 40.

(1) "Virtual drone camera image"
(2) GPS position information of planned landing position
(3) Attribute data corresponding to "virtual drone camera image"

The user terminal 10 transmits these pieces of data to the drone 20 or the drone management server 40.
Note that (3) attribute data corresponding to "virtual drone camera image" specifically includes, for example, the following pieces of data.

(3a) Coordinate information ($u_N$, $v_N$) of planned landing position in "virtual drone camera image"
(3b) Attitude of drone camera 22 estimated to capture same image as "virtual drone camera image" (attitude ($_NR_{NED}$) in NED coordinate system)
(3c) Focal position of drone camera 22 estimated to capture same image as "virtual drone camera image" (focal position ($_{NED}P_N$) in NED coordinate system)

Note that predefined values (default values) may be used as the parameters of the above-described (2) and (3). For example, default values recorded in advance in the memories of both the user terminal 10 and the drone 20 may be used.
The drone 20 executes (Process 3) and (Process 4) described with reference to Fig. 1 using the pieces of data of the above-described (3a) to (3c).
[4-3. (Processes 3 and 4) Regarding Details of Process of Performing Landing at Planned Landing Position Using Virtual Drone Camera Image Executed by Drone]
Next, details of the process of performing landing to the planned landing position using the virtual drone camera image executed by the drone 20, that is, details of the processes of (Process 3) and (Process 4) illustrated in Fig. 1 will be described.
These (Process 3) and (Process 4) are executed by the drone control apparatus 21 of the drone 20.
At the time of execution of the processes of (Process 3) and (Process 4) illustrated in Fig. 1, the drone control apparatus 21 of the drone 20 receives transmission data of the user terminal 10, that is, the following data directly from the user terminal 10 or via the drone management server 40.

(1) "Virtual drone camera image"
(2) GPS position information of planned landing position
(3) Attribute data (3a to 3c) corresponding to "virtual drone camera image"
(3a) Coordinate information ($u_N$, $v_N$) of planned landing position in "virtual drone camera image"
(3b) Attitude of drone camera 22 estimated to capture same image as "virtual drone camera image" (attitude ($_NR_{NED}$) in NED coordinate system)
(3c) Focal position of drone camera 22 estimated to capture same image as "virtual drone camera image" (focal position ($_{NED}P_N$) in NED coordinate system)

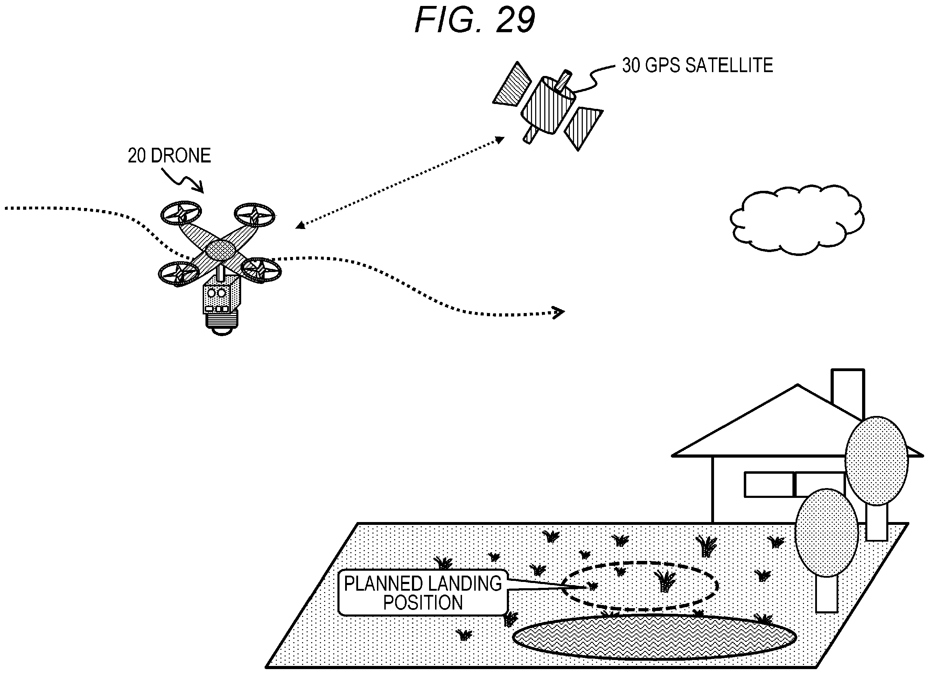

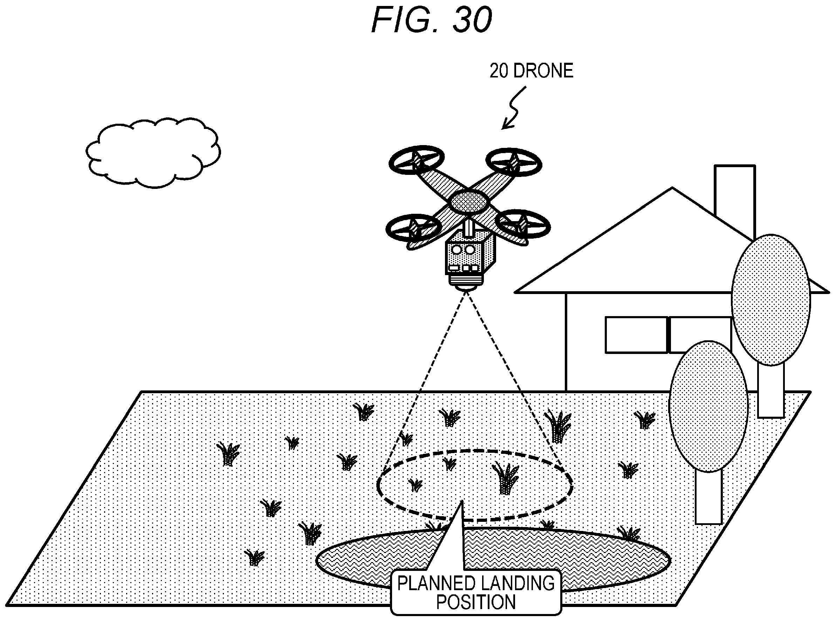

The drone control apparatus 21 of the drone 20 executes the processes of (Process 3) and (Process 4) illustrated in Fig. 1 using the transmission data of the user terminal 10.
As illustrated in Fig. 29, first, in (Process 3), the drone control apparatus 21 of the drone 20 controls the drone 20 according to the GPS position information of the planned landing position transmitted from the user terminal 10, and reaches midair above the planned landing position.
Thereafter, as illustrated in Fig. 30, the drone control apparatus 21 of the drone 20 performs the process of collating the "virtual drone camera image" transmitted from the user terminal 10 with the captured image of the drone camera 22, confirms the planned landing position included in the captured image of the drone camera 22, and executes the landing process toward the planned landing position in (Process 4).
The data processing unit of the drone control apparatus 21 of the drone 20 executes processing using the following pieces of data transmitted from the user terminal 10 in the process of confirming the planned landing position by the image collation in (Process 4) described above. That is,

(3a) Coordinate information ($u_N$, $v_N$) of planned landing position in "virtual drone camera image";
(3b) Attitude of drone camera 22 estimated to capture same image as "virtual drone camera image" (attitude ($_NR_{NED}$) in NED coordinate system); and
(3c) Focal position of drone camera 22 estimated to capture same image as "virtual drone camera image" (focal position ($_{NED}P_N$) in NED coordinate system).

The data processing unit of the drone control apparatus 21 of the drone 20 uses these pieces of data to confirm the planned landing position included in the captured image of the drone camera 22.

The drone 20 starts to descend toward the planned landing position, and an image captured by the drone camera 22 at a position and an attitude indicated by the parameters of the above-described (3b) and (3c), that is, these parameters of:

(3b) Attitude of drone camera 22 estimated to capture same image as "virtual drone camera image" (attitude ($_NR_{NED}$) in NED coordinate system); and
(3c) Focal position of drone camera 22 estimated to capture same image as "virtual drone camera image" (focal position ($_{NED}P_N$) in NED coordinate system),
becomes the same image as the "virtual drone camera image" received from the user terminal 10).

Moreover, the data processing unit of the drone control apparatus 21 of the drone 20 uses the parameter of the above-described (3a), that is, the following parameter of

(3a) Coordinate information ($u_N$, $v_N$) of planned landing position in "virtual drone camera image",
to identify the planned landing position from the image captured by the drone camera 22 from the image captured by the drone camera 22.

Through this process, the drone control apparatus 21 of the drone 20 lands the drone 20 toward the identified planned landing position.

Through these processes, the drone control apparatus 21 of the drone 20 can land the drone 20 at the planned landing position designated by the user 1 with a high accuracy.

[5. Regarding Other Embodiments]

Next, other embodiments different from the above-described embodiment will be described.

In the above-described embodiment, the image of the planned landing position is captured by the user terminal 10, and the "virtual drone camera image" is generated using the captured image obtained by the user terminal 10 using the relationship formula (corresponding pixel positional relationship formula) illustrated in (Formula 10) described above in (Process 2) illustrated in Fig. 1.

Some of the parameters included in the relationship formula illustrated in (Formula 10) described above are parameters that can be calculated using the coordinate transformation matrix ($_{Ws}T_{NED}$) that transforms a position ($_{NED}P_X$) in the NED coordinate system into a position ($_{Ws}P_X$) in the world coordinate system (SLAM coordinate system) (= reference coordinate system), the coordinate transformation matrix being calculated in (Process 1)

Therefore, in (Process 1), the user terminal 10 performs the process of calculating the coordinate transformation matrix ($_{Ws}T_{NED}$) that transforms a position ($_{NED}P_X$) in the NED coordinate system into a position ($_{Ws}P_X$) in the world coordinate system (SLAM coordinate system) (= reference coordinate system).

The process of calculating the coordinate transformation matrix ($_{Ws}T_{NED}$) executed in (Process 1) requires the process in which the user 1 captures the moving image of the drone in midair using the user terminal 10 as described above with reference to Figs. 11 and 12, for example, and there is a problem that the burden on the user and a processing load of the user terminal 10 increase.

The process of calculating the coordinate transformation matrix ($_{Ws}T_{NED}$) that transforms a position ($_{NED}P_X$) in the NED coordinate system into a position ($_{Ws}P_X$) in the world coordinate system (SLAM coordinate system) (= reference coordinate system) may be configured to be performed by a device other than the user terminal 10, for example, the drone management server 40 or the information processing apparatus of the drone 20 capable of communicating with the user terminal 10.

For example, it may be configured such that the drone management server 40 or the drone 20 capable of communicating with the user terminal 10 holds the coordinate transformation matrix ($_{Ws}T_{NED}$) calculated in advance, and the held data is provided from the drone management server 40 or the drone 20 to the user terminal 10.

Alternatively, for example, it may be configured such that an image captured by the user terminal 10, for example, the moving image of the drone in midair described above with reference to Figs. 11 and 12 is captured, the captured image is transmitted to the drone management server 40 or the drone 20, and the drone management server 40 or the information processing apparatus on the drone 20 side calculates the coordinate transformation matrix ($_{Ws}T_{NED}$) and transmit the calculated coordinate transformation matrix to the user terminal 10.

That is, it may be configured such that the drone management server 40 or the drone 20 analyzes the captured image of the drone received from the user terminal 10, performs processing similar to (Process 1) described above to calculate the coordinate transformation matrix ($_{Ws}T_{NED}$) that transforms a position ($_{NED}P_X$) in the NED coordinate system into a position ($_{Ws}P_X$) in the world coordinate system (SLAM coordinate system) (= reference coordinate system) and transmits the calculated coordinate transformation matrix to the user terminal 10.

Note that only a part of the processing required for the process of calculating the coordinate transformation matrix ($_{Ws}T_{NED}$) may be executed by the drone management server 40 or the information processing apparatus on the drone 20 side.

For example, the drone management server 40 or the information processing apparatus on the drone 20 side holds a "database (DB) in which an image and a NED coordinate system are associated", a DB-registered image having high similarity with a captured image of the drone received from the user terminal 10 is retrieved using the database, and the NED coordinate system recorded in the DB in association with the retrieved DB-registered image is selected.

The "DB (database) in which an image and an NED coordinate system are associated" is, for example, a database in which an image obtained by capturing the drone in midair from the ground and position and attitude (camera position and attitude in the NED coordinate system) information in the NED coordinate system associated with the image are registered.

This database is generated in advance. That is, images obtained by capturing the drone in midair using cameras having various different positions and attitudes are generated, and the database (DB) in which positions and attitudes in the NED coordinate system (camera positions and attitudes in the NED coordinate system) are associated with these images is constructed.

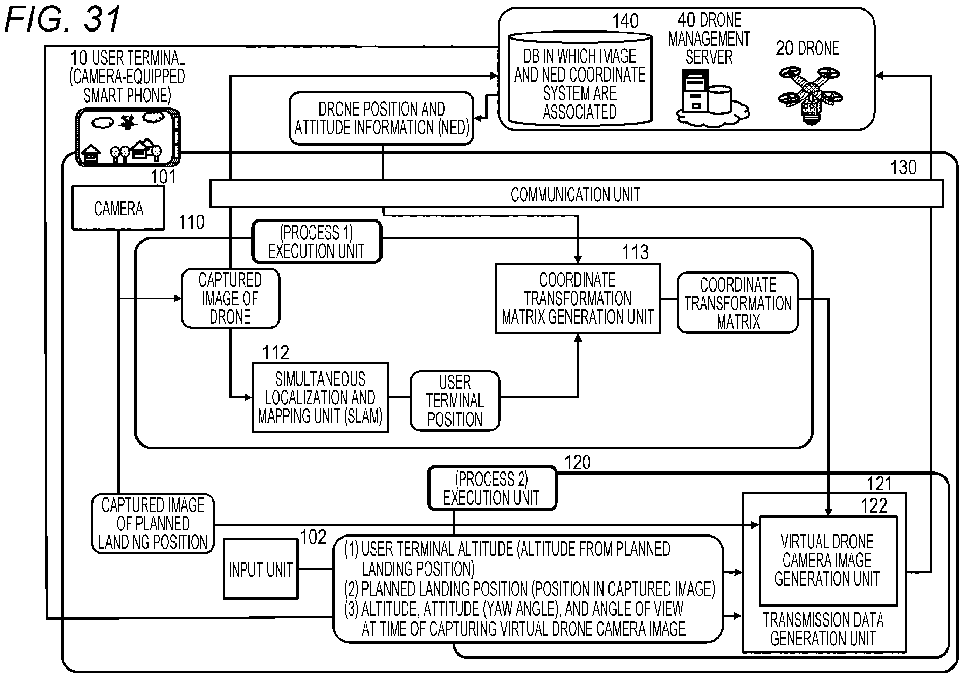

A processing configuration of the user terminal 10 in a case where this database is used will be described with reference to Fig. 31.

Fig. 31 is a block diagram illustrating a configuration of a user terminal that executes (Process 1) and (Process 2) similarly to the configuration diagram described above with reference to Fig. 5.

A difference between Fig. 31 and Fig. 5 described above is a configuration of the (Process 1) execution unit 110.

Fig. 31 has a configuration in which the image analysis unit 111 illustrated in Fig. 5 is omitted.

In Fig. 31, the (Process 1) execution unit 110 transmits a captured image of a drone input from the camera 101 to an external device such as the drone management server 40 via the communication unit 130.

The external device such as the drone management server 40 includes the "database (DB) in which an image and a NED coordinate system are associated". The external device such as the drone management server 40 executes a process of collating the captured image of the drone received from the user terminal 10 and an image registered in the database, and selects a matching or similar registered image.

Furthermore, the drone position and attitude information (NED coordinate system) recorded in the database corresponding to the selected registered image is acquired and transmitted to the user terminal 10.

The coordinate transformation matrix generation unit 113 of the (Process 1) execution unit 110 of the user terminal 10 inputs the drone position and attitude information (NED coordinate system), further analyzes the corresponding positional relationship between coordinates in the camera coordinate system and the NED coordinate system by using self-position and attitude information of the user terminal 10 input from the simultaneous localization and mapping unit (SLAM) 112, and calculates a coordinate transformation matrix that enables transformation of a position of one coordinate system into a position of another coordinate system.

In this configuration, image analysis executed by the user terminal 10 is omitted, and a processing load on the user terminal 10 is reduced.

Note that a processing sequence in the case of using the "database (DB) in which an image and an NED coordinate system are associated" is as follows.

(Step S1)

First, an image captured by the user terminal 10, for example, the moving image of the drone in midair described above with reference to Figs. 11 and 12 is captured, and the captured image is transmitted to the drone management server 40 or the drone 20.

(Step S2)

Next, the drone management server 40 or the information processing apparatus on the drone 20 side executes the process of collating the image received from the user terminal 10 and the registered image of the "DB in which an image and an NED coordinate system are associated".

The drone management server 40 or the information processing apparatus on the drone 20 side selects a DB-registered image matching or similar to the image received from the user terminal 10, acquires a position and an attitude camera position and attitude in the NED coordinate system) in the NED coordinate system recorded in association with the selected DB-registered image, and transmits the acquired camera position and attitude in the NED coordinate system to the user terminal 10 on the user side.

(Step S3)

Next, the user terminal 10 calculates a coordinate transformation matrix ($_{Ws}T_{NED}$) that transforms a position ($_{NED}P_X$) in the NED coordinate system into a position ($_{Ws}P_X$) in the world coordinate system (SLAM coordinate system) (= reference coordinate system) on the basis of the camera position and attitude in the SLAM coordinate system calculated by an SLAM process executed on the user terminal 10 side and the camera position and attitude in the NED coordinate system received from the drone management server 40 or the drone 20.

In this manner, the processing may be shared among a plurality of devices.

Note that it may be configured such that the "database (DB) in which an image and an NED coordinate system are associated" is transmitted to the user terminal 10 in advance, and the user terminal 10 executes processing using data registered in the database.

Furthermore, in the above-described embodiment, the user 1 executes the process of capturing the image of the predetermined position (planned landing position) on the ground where it is desired to land the drone 20 using the user terminal 10 and generating the "virtual drone camera image" on the basis of the captured image in (Process 2),

Note that the "virtual drone camera image" is a virtual image estimated to be captured in a case where the planned landing position is captured by a drone camera 22 of the drone 20 in midair.

It may be configured such that the "virtual drone camera image" generation process is also performed by the drone management server 40 or the information processing apparatus on the drone 20 side instead of the user terminal 10.

In this case, the user 1 uses the user terminal 10 to capture the image of the predetermined position (planned landing position) on the ground where it is desired to land the drone 20, and transmits the captured image to the drone management server 40 or the drone 20.

The drone management server 40 or the information processing apparatus of the drone 20 analyzes the captured image of the planned landing position received from the user terminal 10, and executes processing similar to (Process 2) described above to generate the "virtual drone camera image", that is, the virtual image estimated to be captured in a case where the planned landing position is captured by the drone camera 22 of the drone 20 in midair.

In this manner, it may be configured such that the data analysis required in (Process 1) and (Process 2) described above is executed in the drone management server 40 or the drone 20. In this case, the user 1 only needs to capture an image required in (Process 1) and (Process 2) using the user terminal 10 and transmit the captured image to the drone management server 40 or the drone 20.

[6. Regarding Configuration Example of Information Processing Apparatus of Present Disclosure]

Next, a configuration example of the information processing apparatus of the present disclosure will be described.

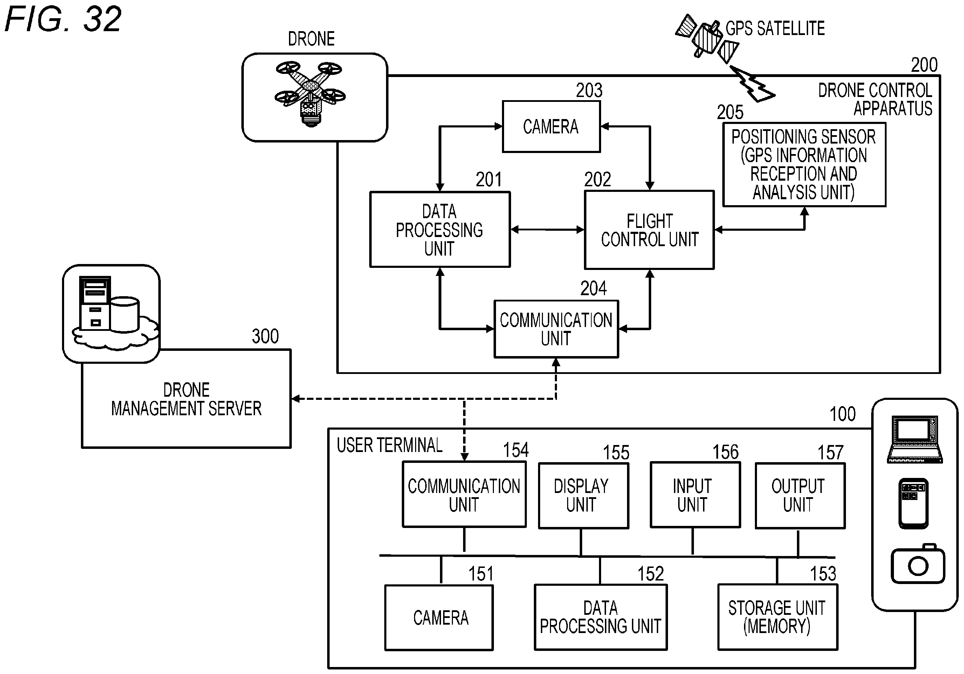

Fig. 32 is a diagram illustrating a configuration example of a user terminal 100 which is the information processing apparatus of the present disclosure and a drone control apparatus 200 mounted on the drone 20.

The user terminal 100 is, for example, a camera-equipped communication terminal such as a smart phone. A device such as a PC or a camera device may be used without being limited to the smart phone.

The user terminal 100 has a configuration capable of communicating with the drone control apparatus 200 and a drone management server 300.

The drone control apparatus 200 causes the drone 20 to fly according to a predefined flight path using, for example, communication information with the drone management server 300 or communication information with a GPS satellite.

As illustrated in the drawing, the user terminal 100 includes a camera 151, a data processing unit 152, a storage unit (memory) 153, a communication unit 154, a display unit 155, an input unit 156, and an output unit 157.

The camera 151 is used, for example, for the process of capturing an image of the drone or image capturing in the SLAM process.

The data processing unit 152 executes the above-described processes, specifically, the processes such as (Process 1) and (Process 2) described above with reference to Fig. 1. That is, the following processes are executed.

(Process 1) Coordinate system analysis process of calculating coordinate transformation matrix configured to indicate positions on different coordinates, used by drone and user terminal, as positions on one reference coordinate
(Process 2) Process of capturing image of planned landing position by user terminal, generating "virtual drone camera image" based on captured image, and transmitting generated "virtual drone camera image", GPS position information of planned landing position, and the like to drone or drone management server

The data processing unit 152 controls processing to be executed in the user terminal 100, such as the SLAM process and image capturing control required in (Process 1) and (Process 2) described above.

The data processing unit 152 includes, for example, a processor such as a CPU having a program execution function, and executes processing according to a program stored in the storage unit 153.

The storage unit (memory) 153 is used as a storage area and a work area of the program executed by the data processing unit 152. The storage unit (memory) 153 is also used as a storage area of various parameters to be applied to the processing. The storage unit (memory) 153 includes a RAM, a ROM, and the like.

The communication unit 154 executes communication with the drone control apparatus 200 and the drone management server 300. For example, a process of receiving flight path information or the like corresponding to a GPS position of the drone 20 from the drone control apparatus 200 or the drone management server 300 is performed.

The display unit 155 displays a camera-captured image, for example, displays a captured image of the drone, a captured image of the planned landing position, and the like.

The input unit 156 is a unit operated by the user, and is used for various processes, for example, a process of inputting a user request such as start and end of data processing such as image capturing and the SLAM process.

The output unit 157 includes a sound output unit, an image output unit, and the like.

Next, a configuration of the drone control apparatus 200 will be described.

The drone control apparatus 200 includes a data processing unit 201, a flight control unit 202, a camera 203, a communication unit 204, and a positioning sensor (GPS information reception and analysis unit) 205.

For example, the data processing unit 201 plans and determines a flight path of the drone 20. For example, a specific flight path is planned and determined on the basis of flight path instruction information received from the drone management server 300, the GPS position information of the planned landing position received from the user terminal 100, the "virtual drone camera image", and the like.

The flight control unit 202 executes flight control, landing control, and the like to make the drone control apparatus 200 to fly according to the flight path determined by the data processing unit 201.

The camera 203 captures, for example, an image of the planned landing position. The captured image is input to the data processing unit 201, and the data processing unit 201 performs a collation process with the "virtual drone camera image" received from the user terminal 100. The data processing unit 201 confirms the planned landing position included in the captured image of the camera 203 on the basis of the collation process, and outputs a control command for executing a landing process toward the planned landing position to the flight control unit 202.

The flight control unit 202 executes the landing process according to the control command.

The communication unit 204 executes communication with the drone management server 300 and the user terminal 100.

The positioning sensor (GPS information reception and analysis unit) 205 executes communication with a GPS satellite 400, analyzes a current position (latitude, longitude, and height) of the drone control apparatus 200 on the basis of the communication information with the GPS satellite 400, and outputs the analyzed information to the flight control unit 202.

The flight control unit 202 uses information input from the positioning sensor (GPS information reception and analysis unit) 205 to perform flight toward a target position or landing at the planned landing position.

Note that the example of the process of landing the drone has been described in the above-described embodiment, but the processing of the present disclosure is applicable not only to the process of landing the drone but also to a process of landing another flying vehicle.

The similar processing can be performed by replacing the drone in the above-described embodiment with a flying vehicle.

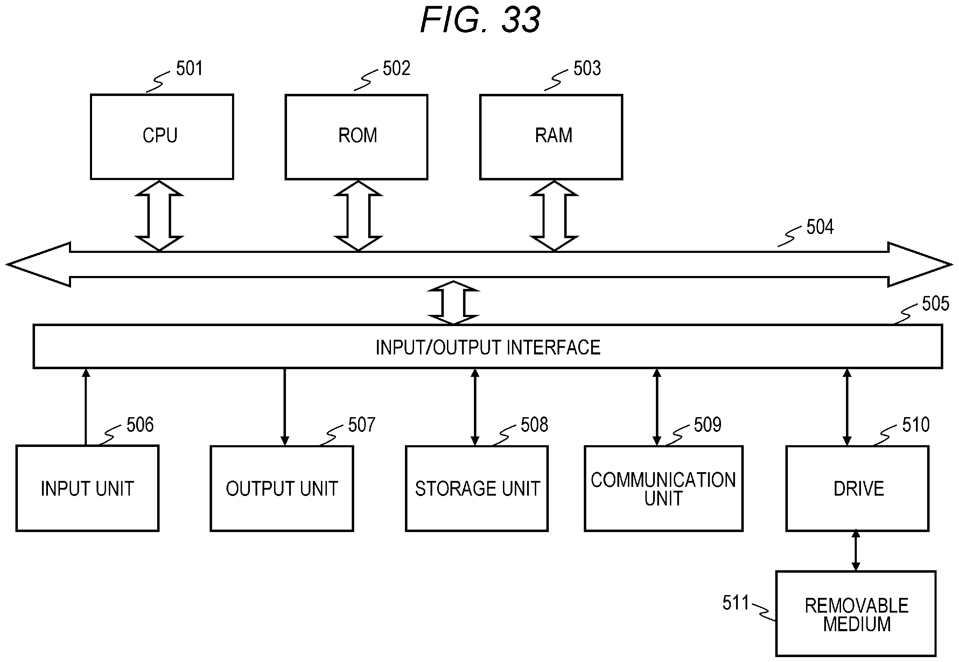

Next, a hardware configuration example that can be commonly used for the user terminal, the drone control apparatus, and the drone management server which are the information processing apparatuses of the present disclosure will be described with reference to Fig. 33.

A central processing unit (CPU) 501 functions as a data processing unit that executes various processes according to a program stored in a read only memory (ROM) 502 or a storage unit 508. For example, the processing according to the sequence described in the above-described embodiments is performed. The program to be executed by the CPU 501, data, and the like are stored in a random access memory (RAM) 503. The CPU 501, the ROM 502, and the RAM 503 are mutually connected via a bus 504.

The CPU 501 is connected to an input/output interface 505 via the bus 504, and an input unit 506 including various sensors, a camera, a switch, a keyboard, a mouse, a microphone, and an output unit 507 including a display and a speaker are connected to the input/output interface 505.

The storage unit 508 connected to the input/output interface 505 is configured using, for example, a USB memory, an SD card, a hard disk, and the like and stores a program to be executed by the CPU 501 and various types of data. The communication unit 509 functions as a transmission/reception unit of data communication via a network such as the Internet or a local area network, and communicates with an external device.

A drive 510 connected to the input/output interface 505 drives a removable medium 511 such as a magnetic disk, an optical disk, a magneto-optical disk, and a semiconductor memory such as a memory card, and executes data recording or reading.

[7. Summary of Configuration of Present Disclosure]

The embodiments of the present disclosure have been described in detail with reference to the specific embodiments. However, it is self-evident that those skilled in the art can make modifications and substitutions of the embodiments.
In other words, the present invention has been disclosed in the form of exemplification, and should not be interpreted restrictively.
Furthermore, the series of processing described in the specification can be executed by hardware, software, or a complex configuration of the both. In a case where the processing is executed using software, it is possible to execute the processing by installing a program recording a processing sequence on a memory in a computer built into dedicated hardware or by installing a program in a general-purpose computer that can execute various processes. For example, the program can be recorded in a recording medium in advance. In addition to installing on a computer from the recording medium, it is possible to receive a program via a network, such as a local area network (LAN) and the Internet, and install the received program on a recording medium such as a built-in hard disk.
Note that various processes described in the specification not only are executed in a time-series manner according to the description but also may be executed in parallel or separately depending on the processing performance of an apparatus that executes the process or need. Furthermore, the term "system" in the present specification refers to a logical set configuration of a plurality of apparatuses, and is not limited to a system in which apparatuses of the respective configurations are provided in the same housing.

INDUSTRIAL APPLICABILITY

As described above, according to the configuration of one embodiment of the present disclosure, the configuration capable of accurately landing the drone at the planned landing position designated by the user is achieved.
Specifically, for example, the user terminal generates the virtual drone camera image, which is the estimated captured image in the case where it is assumed that the virtual drone camera mounted on the drone has captured an image of the planned landing position on the basis of the captured image obtained by capturing the planned landing position of the drone with the user terminal, and transmits the generated virtual drone camera image to the drone. The drone collates the virtual drone camera image with the image captured by the drone camera and lands at the planned landing position in the image captured by the drone camera. The user terminal generates the corresponding pixel positional relationship formula indicating the correspondence relationship between the pixel position on the captured image of the user terminal and the pixel position on the captured image of the virtual drone camera, and generates the virtual drone camera image using the generated relationship formula.
According to this configuration, the configuration capable of accurately landing the drone at the planned landing position designated by the user is achieved.

REFERENCE SIGNS LIST

    10      User terminal (information processing apparatus)
    20      Drone
    21      Drone control apparatus (information processing apparatus)
    22      Drone camera
    30      GPS satellite
    40      Drone management server
    51      Camera imaging surface
    61      Object
    62      Object image
    100     User terminal
    101     Camera
    102     Input unit
    110     (Process 1) Execution unit
    111     Image analysis unit
    112     Simultaneous localization and mapping unit
    113     Image transformation matrix generation unit

120 (Process 2) Execution unit
121 Transmission data generation unit
122 Virtual drone camera image generation unit
130 Communication unit
151 Camera
152 Data processing unit
153 Storage unit (memory)
154 Communication unit
155 Display unit
156 Input unit
157 Output unit
200 Drone control apparatus
201 Data processing unit
202 Flight control unit
203 Camera
204 Communication unit
205 Positioning sensor (GPS information reception and analysis unit)
300 Drone management server
501 CPU
502 ROM
503 RAM
504 Bus
505 Input/output interface
506 Input unit
507 Output unit
508 Storage unit
509 Communication unit
510 Drive
511 Removable medium

**Claims**

1. An information processing apparatus (10, 21, 40), that enables a flying object such as a drone to land, comprising

   a data processing unit (152) that is configured to execute transform processing of a camera-captured image, wherein the data processing unit (152) is configured to
   generate a virtual drone camera image that is estimated with a projective transformation of a real image of a planned landing position captured with a user terminal (10), wherein the virtual drone camera image shows the planned landing position from the perspective of a camera mounted on a drone (20),

   **characterized in that** the data processing unit (152) is configured to:

   - control processing of a simultaneous localization and mapping process and obtain a self-position and a self-attitude information of the user terminal (10),
   - generate a corresponding pixel positional relationship formula based on the position of the drone (20) in a captured image of the drone by the user terminal (10) as well as self-position and self-attitude information of the user terminal (10), wherein the corresponding pixel positional relationship formula indicates a correspondence relationship between a pixel position (uS, vS) on the captured image of the user terminal (10) and a pixel position (uN, vN) on a captured image of the virtual drone camera, and
   - generate the virtual drone camera image by using the captured image of the user terminal (10) and using the corresponding pixel positional relationship formula.

2. The information processing apparatus (10, 21, 40) according to claim 1, wherein
   the data processing unit (152) is configured to generate the virtual drone camera image by setting a pixel value of a pixel position ($u_s$, $v_s$) on the captured image of the user terminal (10) to a pixel position ($u_N$, $v_N$) on the captured image of the virtual drone camera corresponding to the pixel position on the captured image of the user terminal (10).

**3.** The information processing apparatus (10, 21, 40) according to claim 1, wherein
the data processing unit (152) is configured to calculate a coordinate transformation matrix of a first coordinate system used for position control of the drone (20) and a second coordinate system indicating a pixel position ($u_s$, $v_s$) of a camera-captured image of the user terminal (10), and generate the corresponding pixel positional relationship formula by using a parameter calculated by applying the calculated coordinate transformation matrix.

**4.** The information processing apparatus (10, 21, 40) according to claim 3, wherein

the data processing unit (152) is configured to calculate a coordinate transformation matrix that transforms the first coordinate system used for the position control of the drone (20) and the second coordinate system indicating the pixel position ($u_s$, $v_s$) of the camera-captured image of the user terminal (10) into one reference coordinate system, and generates the corresponding pixel positional relationship formula by using a parameter calculated by applying the calculated coordinate transformation matrix, and
the data processing unit (152) is configured to execute the simultaneous localization and mapping process of calculating a position ($_{WS}P_c$) and an attitude ($_cR_{WS}$) of the user terminal (10), and uses a result of the simultaneous localization and mapping process to calculate a coordinate transformation matrix that transforms the second coordinate system indicating the pixel position ($u_s$, $v_s$) of the camera-captured image of the user terminal (10) into an simultaneous localization and mapping coordinate system which is one reference coordinate system.

**5.** The information processing apparatus (10, 21, 40) according to claim 4, wherein

the simultaneous localization and mapping coordinate system is a fixed world coordinate system, and/or
the first coordinate system used for the position control of the drone (20) is a NED coordinate system, and
the second coordinate system indicating the pixel position ($u_s$, $v_s$) of the camera-captured image of the user terminal (10) is a camera coordinate system.

**6.** The information processing apparatus (10, 21, 40) according to claim 1, wherein
the data processing unit (152) is configured to execute following Process 1 and Process 2:

Process 1 being a coordinate system analysis process of calculating a coordinate transformation matrix configured to indicate positions on different coordinates, used by the drone (20) and the user terminal (10), as positions on one reference coordinate; and
Process 2 being a process of generating the virtual drone camera image based on the image of the planned landing position captured by the user terminal (10), and transmitting the generated virtual drone camera image, GPS position information of the planned landing position, and the like to the drone (20) or a drone management server (40).

**7.** The information processing apparatus (10, 21, 40) according to claim 6, wherein

the data processing unit (152) is configured to transmit attribute data of the virtual drone camera image to the drone (20) or the drone management server (40) together with the virtual drone camera image in the Process 2, and
the attribute data includes at least any data of:

- coordinate information of the planned landing position ($_{PS}R_{NED}$) in the virtual drone camera image;
- attitude information of a drone camera ($_NR_{NED}$) estimated to capture a same image as the virtual drone camera image; and
- a focal position ($_{NED}P_{PS}$) of the drone camera estimated to capture the same image as the virtual drone camera image.

**8.** An information processing system, that enabels a flying object such as a drone to land, comprising:

a user terminal (10) comprising the information processing apparatus (10, 21, 40) of claim 1; and
the drone (20), wherein
the user terminal (10) is configured to generate a virtual drone camera image that is estimted with a projective transformation of a real image of a planned landing position captured with a user terminal (10), wherein the virtual drone camera image shows the planned landing position from the perspective of a camera mounted on a drone (20), and transmit the generated virtual drone camera image to the drone (20), and
the drone (20) is configured to execute a process of collating the virtual drone camera image with a captured image of a drone camera mounted on the drone (20) and execute control for landing at the planned landing position included in captured image of the drone camera.

9. The information processing system according to claim 8, wherein

the user terminal (10) is configured to transmit the virtual drone camera image to the drone (20) via a drone management server (40), and/or
the user terminal (10) is configured to transmit data, which is attribute data of the virtual drone camera image, together with the virtual drone camera image to the drone (20), the data including at least any of:

- coordinate information of the planned landing position ($_{PS}R_{NED}$) in the virtual drone camera image;
- attitude information of the drone camera ($_{N}R_{NED}$) estimated to capture a same image as the virtual drone camera image; and
- a focal position ($_{NED}P_{PS}$) of the drone camera estimated to capture the same image as the virtual drone camera image.

10. The information processing system according to claim 8, wherein
the user terminal (10) is configured to generate a corresponding pixel positional relationship formula indicating a correspondence relationship between a pixel position ($u_s$, $v_s$) on the captured image of the user terminal (10) and a pixel position ($u_N$, $v_N$) on the captured image of the virtual drone camera, and generate the virtual drone camera image by using the captured image of the user terminal (10) using the corresponding pixel positional relationship formula.

11. The information processing system according to claim 10, wherein
the user terminal (10) is configured to calculate a coordinate transformation matrix that transforms a first coordinate system used for position control of the drone (20) and a second coordinate system indicating the pixel position ($u_s$, $v_s$) of the camera-captured image of the user terminal (10) into one reference coordinate system, and generates the corresponding pixel positional relationship formula by using a parameter calculated by applying the calculated coordinate transformation matrix.

12. The information processing system according to claim 11, wherein

the user terminal (10) is configured to execute a simultaneous localization and mapping process of calculating a position ($_{WS}P_c$) and an attitude ($_{c}R_{WS}$) of the user terminal (10), and uses a result of the simultaneous localization and mapping process to calculate a coordinate transformation matrix that transforms the second coordinate system indicating the pixel position ($u_s$, $v_s$) of the camera-captured image of the user terminal (10) into an simultaneous localization and mapping coordinate system which is one reference coordinate system, and
the simultaneous localization and mapping coordinate system is a fixed world coordinate system,
the first coordinate system used for the position control of the drone (20) is a NED coordinate system, and
the second coordinate system indicating the pixel position ($u_s$, $v_s$) of the camera-captured image of the user terminal (10) is a camera coordinate system.

13. An information processing method, that enabels a flying object such as a drone to land and is executed in an information processing apparatus, the information processing method comprising:
generating a virtual drone camera image that is estimted with a projective transformation of a real image of a planned landing position captured with a user terminal (10), wherein the virtual drone camera image shows the planned landing position from the perspective of a camera mounted on a drone (20);
**characterized in that** the information processing apparatus executes:

- controlling processing of a simultaneous localization and mapping process and obtaining a self-position and a self-attitude information of the user terminal (10),
- generating a corresponding pixel positional relationship formula based on the position of the drone (20) in a captured image of the drone by the user terminal (10) as well as the self-position and the self-attitude information of the user terminal (10), wherein the corresponding pixel positional relationship formula indicates a correspondence relationship between a pixel position ($uS$, $vS$) on the captured image of the user terminal (10) and a pixel position ($uN$, $vN$) on a captured image of the virtual drone camera, and

- generating the virtual drone camera image by using the captured image of the user terminal (10) and using the corresponding pixel positional relationship formula.

14. An information processing method, that enabels a flying object such as a drone to land and is executed in an information processing system comprising a terminal (10) and a drone (20), the information processing method comprising:

generating, by the user terminal (10) and by executing the method of claim 13, a virtual drone camera image that is estimted with a projective transformation of a real image of a planned landing position captured with a user terminal (10), wherein the virtual drone camera image shows the planned landing position from the perspective of a camera mounted on a drone (20), and transmitting the generated virtual drone camera image to the drone (20); and

executing, by the drone (20), a process of collating the virtual drone camera image with a captured image of a drone camera mounted on the drone (20) and executes control for landing at the planned landing position included in captured image of the drone camera.

15. A computer program comprising instructions which, when the program is executed by a computer, cause the computer to carry out the method of claim 13 or 14.

**Patentansprüche**

1. Informationsverarbeitungseinrichtung (10, 21, 40), die es einem Flugobjekt wie einer Drohne ermöglicht, zu landen, umfassend

eine Datenverarbeitungseinheit (152), die dazu konfiguriert ist, eine Transformationsverarbeitung an einem von einer Kamera aufgenommenen Bild auszuführen,

wobei die Datenverarbeitungseinheit (152) dazu konfiguriert ist, ein virtuelles Drohnenkamerabild zu erzeugen, das mit einer projektiven Transformation eines realen Bildes einer geplanten Landeposition, das mit einem Benutzerendgerät (10) aufgenommen wurde, geschätzt wird, wobei das virtuelle Drohnenkamerabild die geplante Landeposition aus der Perspektive einer an einer Drohne (20) angebrachten Kamera zeigt,

**dadurch gekennzeichnet, dass** die Datenverarbeitungseinheit (152) konfiguriert ist zum:

- Steuern der Verarbeitung eines gleichzeitigen Ortungs- und Kartierungsprozesses und Erhalten einer Eigenpositions- und Eigenlageinformation des Benutzerendgeräts (10),
- Erzeugen einer Beziehungsformel für einander entsprechende Pixelpositionen auf Grundlage der Position der Drohne (20) in einem von dem Benutzerendgerät (10) aufgenommenen Bild der Drohne sowie von Eigenpositions- und Eigenlageinformationen des Benutzerendgeräts (10), wobei die Beziehungsformel für einander entsprechende Pixelpositionen eine Entsprechungsbeziehung zwischen einer Pixelposition ($u_S$, $v_S$) auf dem aufgenommenen Bild des Benutzerendgeräts (10) und einer Pixelposition ($u_N$, $v_N$) auf einem aufgenommenen Bild der virtuellen Drohnenkamera anzeigt, und
- Erzeugen des virtuellen Drohnenkamerabildes durch Verwendung des vom Benutzerendgerät (10) aufgenommenen Bildes und unter Verwendung der Beziehungsformel für einander entsprechende Pixelpositionen.

2. Informationsverarbeitungseinrichtung (10, 21, 40) nach Anspruch 1, wobei
die Datenverarbeitungseinheit (152) dazu konfiguriert ist, das virtuelle Drohnenkamerabild zu erzeugen, indem sie einen Pixelwert einer Pixelposition ($u_s$, $v_s$) auf dem aufgenommenen Bild des Benutzerendgeräts (10) auf eine Pixelposition ($u_N$, $v_N$) auf dem aufgenommenen Bild der virtuellen Drohnenkamera, die der Pixelposition auf dem aufgenommenen Bild des Benutzerendgeräts (10) entspricht, setzt.

3. Informationsverarbeitungseinrichtung (10, 21, 40) nach Anspruch 1, wobei
die Datenverarbeitungseinheit (152) dazu konfiguriert ist, eine Koordinatentransformationsmatrix eines ersten Koordinatensystems, das für die Positionssteuerung der Drohne (20) verwendet wird, und eines zweiten Koordinatensystems, das eine Pixelposition ($u_s$, $v_s$) eines mit einer Kamera aufgenommenen Bildes des Benutzerendgeräts (10) anzeigt, zu berechnen und die Beziehungsformel für einander entsprechende Pixelpositionen durch Verwendung eines Parameters zu erzeugen, der durch Anwendung der berechneten Koordinatentransformationsmatrix berechnet wird.

4. Informationsverarbeitungseinrichtung (10, 21, 40) nach Anspruch 3, wobei

die Datenverarbeitungseinheit (152) dazu konfiguriert ist, eine Koordinatentransformationsmatrix zu berechnen, die das erste Koordinatensystem, das für die Positionssteuerung der Drohne (20) verwendet wird, und das zweite Koordinatensystem, das die Pixelposition ($u_s$, $v_s$) des von der Kamera aufgenommenen Bildes des Benutzerendgeräts (10) anzeigt, in ein Referenzkoordinatensystem transformiert, und die Beziehungsformel für einander entsprechende Pixelpositionen durch Verwendung eines Parameters erzeugt, der durch Anwendung der berechneten Koordinatentransformationsmatrix berechnet wird, und
die Datenverarbeitungseinheit (152) dazu konfiguriert ist, den simultanen Ortungs- und Kartierungsprozess des Berechnens einer Position ($w_sP_c$) und einer Lage (cRWs) des Benutzerendgeräts (10) durchzuführen, und ein Ergebnis des simultanen Ortungs- und Kartierungsprozesses verwendet, um eine Koordinatentransformationsmatrix zu berechnen, die das zweite Koordinatensystem, das die Pixelposition ($u_s$, $v_s$) des von der Kamera aufgenommenen Bildes des Benutzerendgeräts (10) anzeigt, in ein simultanes Ortungs- und Kartierungskoordinatensystem transformiert, das ein Referenzkoordinatensystem ist.

5. Informationsverarbeitungseinrichtung (10, 21, 40) nach Anspruch 4, wobei

das simultane Ortungs- und Kartierungskoordinatensystem ein festes Weltkoordinatensystem ist, und/oder
das erste für die Positionssteuerung der Drohne (20) verwendete Koordinatensystem ein NED-Koordinatensystem ist, und
das zweite Koordinatensystem, das die Pixelposition ($u_s$, $v_s$) des von der Kamera aufgenommenen Bildes des Benutzerendgerätes (10) anzeigt, ein Kamerakoordinatensystem ist.

6. Informationsverarbeitungseinrichtung (10, 21, 40) nach Anspruch 1, wobei
die Datenverarbeitungseinheit (152) zur Ausführung des folgenden Prozesses 1 und Prozesses 2 konfiguriert ist:

Prozess 1, der ein Koordinatensystemanalyseprozess des Berechnens einer Koordinatentransformationsmatrix ist, die dazu konfiguriert ist, Positionen auf verschiedenen Koordinaten, die von der Drohne (20) und dem Benutzerendgerät (10) verwendet werden, als Positionen auf einer Referenzkoordinate anzuzeigen; und
Prozess 2, der ein Prozess des Erzeugens des virtuellen Drohnenkamerabildes auf Grundlage des vom Benutzerendgerät (10) aufgenommenen Bildes der geplanten Landeposition und des Übertragens des erzeugten virtuellen Drohnenkamerabildes, der GPS-Positionsinformationen der geplanten Landeposition und dergleichen an die Drohne (20) oder einen Drohnenverwaltungsserver (40) ist.

7. Informationsverarbeitungseinrichtung (10, 21, 40) nach Anspruch 6, wobei

die Datenverarbeitungseinheit (152) dazu konfiguriert ist, Attributdaten des virtuellen Drohnenkamerabildes zusammen mit dem virtuellen Drohnenkamerabild im Prozess 2 an die Drohne (20) oder den Drohnenverwaltungsserver (40) zu übertragen, und
die Attributdaten mindestens folgende Daten enthalten:

- Koordinateninformationen der geplanten Landeposition ($_{PS}R_{NED}$) im virtuellen Drohnenkamerabild;
- Fluglageinformationen einer Drohnenkamera ($_NR_{NED}$), von denen geschätzt wird, dass bei ihnen ein gleiches Bild wie das Bild der virtuellen Drohnenkamera aufgenommen wird; und
- eine Fokusposition ($_{NED}P_{PS}$) der Drohnenkamera, von der geschätzt wird, dass bei ihr das gleiche Bild wie das Bild der virtuellen Drohnenkamera aufgenommen wird.

8. Informationsverarbeitungssystem, durch das ein Flugobjekt, wie eine Drohne, befähigt wird, zu landen, umfassend:

ein Benutzerendgerät (10), das die Informationsverarbeitungseinrichtung (10, 21, 40) nach Anspruch 1 umfasst; und
die Drohne (20), wobei
das Benutzerendgerät (10) dazu konfiguriert ist, ein virtuelles Drohnenkamerabild zu erzeugen, das mit einer projektiven Transformation eines realen Bildes einer geplanten Landeposition geschätzt wird, das mit einem Benutzerendgerät (10) aufgenommen wurde, wobei das virtuelle Drohnenkamerabild die geplante Landeposition aus der Perspektive einer an einer Drohne (20) angebrachten Kamera zeigt, und das erzeugte virtuelle Drohnenkamerabild an die Drohne (20) zu übertragen, und
die Drohne (20) dazu konfiguriert ist, einen Prozess des Zusammenführens des virtuellen Drohnenkamerabildes mit einem aufgenommenen Bild einer an der Drohne (20) angebrachten Drohnenkamera auszuführen und die Steuerung für die Landung an der geplanten Landeposition auszuführen, die in dem aufgenommenen Bild der Drohnenkamera enthalten ist.

9. Informationsverarbeitungssystem nach Anspruch 8, wobei

das Benutzerendgerät (10) dazu konfiguriert ist, das virtuelle Drohnenkamerabild über einen Drohnenverwaltungsserver (40) an die Drohne (20) zu übertragen, und/oder
das Benutzerendgerät (10) dazu konfiguriert ist, Daten, die Attributdaten des virtuellen Drohnenkamerabildes sind, zusammen mit dem virtuellen Drohnenkamerabild an die Drohne (20) zu übertragen, wobei die Daten mindestens eines einschließen von:

- Koordinateninformationen der geplanten Landeposition ($_{ps}R_{ned}$) im virtuellen Drohnenkamerabild;
- Fluglageinformationen der Drohnenkamera ($_NR_{NED}$), von denen geschätzt wird, dass bei ihnen ein gleiches Bild wie das Bild der virtuellen Drohnenkamera aufgenommen wird; und
- eine Fokusposition ($_{NED}P_{PS}$) der Drohnenkamera, von der geschätzt wird, dass bei ihr das gleiche Bild wie das Bild der virtuellen Drohnenkamera aufgenommen wird.

10. Informationsverarbeitungssystem nach Anspruch 8, wobei
das Benutzerendgerät (10) dazu konfiguriert ist, eine Beziehungsformel für einander entsprechende Pixelpositionen zu erzeugen, die eine Entsprechungsbeziehung zwischen einer Pixelposition ($u_s$, $v_s$) auf dem aufgenommenen Bild des Benutzerendgeräts (10) und einer Pixelposition ($u_N$, $v_N$) auf dem aufgenommenen Bild der virtuellen Drohnenkamera anzeigt, und das virtuelle Drohnenkamerabild durch Verwendung des aufgenommenen Bildes des Benutzerendgeräts (10) unter Verwendung der Beziehungsformel für einander entsprechende Pixelpositionen zu erzeugen.

11. Informationsverarbeitungssystem nach Anspruch 10, wobei
das Benutzerendgerät (10) dazu konfiguriert ist, eine Koordinatentransformationsmatrix zu berechnen, die ein erstes Koordinatensystem, das für die Positionssteuerung der Drohne (20) verwendet wird, und ein zweites Koordinatensystem, das die Pixelposition ($u_s$, $v_s$) des von der Kamera aufgenommenen Bildes des Benutzerendgeräts (10) anzeigt, in ein Referenzkoordinatensystem transformiert, und die Beziehungsformel für einander entsprechende Pixelpositionen durch Verwendung eines Parameters erzeugt, der durch Anwendung der berechneten Koordinatentransformationsmatrix berechnet wird.

12. Informationsverarbeitungssystem nach Anspruch 11, wobei

das Benutzerendgerät (10) dazu konfiguriert ist, einen simultanen Ortungs- und Kartierungsprozess des Berechnens einer Position ($w_sP_c$) und einer Lage ($_cR_{Ws}$) des Benutzerendgeräts (10) durchzuführen, und ein Ergebnis des simultanen Ortungs- und Kartierungsprozesses verwendet, um eine Koordinatentransformationsmatrix zu berechnen, die das zweite Koordinatensystem, das die Pixelposition ($u_s$, $v_s$) des von der Kamera aufgenommenen Bildes des Benutzerendgeräts (10) anzeigt, in ein simultanes Ortungs- und Kartierungskoordinatensystem transformiert, das ein Referenzkoordinatensystem ist, und
das simultane Ortungs- und Kartierungskoordinatensystem ein festes Weltkoordinatensystem ist,
das erste für die Positionssteuerung der Drohne (20) verwendete Koordinatensystem ein NED-Koordinatensystem ist, und
das zweite Koordinatensystem, das die Pixelposition ($u_s$, $v_s$) des von der Kamera aufgenommenen Bildes des Benutzerendgerätes (10) anzeigt, ein Kamerakoordinatensystem ist.

13. Informationsverarbeitungsverfahren, durch das ein Flugobjekt, wie eine Drohne, befähigt wird, zu landen und das in einer Informationsverarbeitungseinrichtung ausgeführt wird, wobei das Informationsverarbeitungsverfahren umfasst:

Erzeugen eines virtuellen Drohnenkamerabildes, das mit einer projektiven Transformation eines realen Bildes einer geplanten Landeposition, das mit einem Benutzerendgerät (10) aufgenommen wurde, geschätzt wird, wobei das virtuelle Drohnenkamerabild die geplante Landeposition aus der Perspektive einer an einer Drohne (20) angebrachten Kamera zeigt;
**dadurch gekennzeichnet, dass** die

Informationsverarbeitungseinrichtung ausführt:

- Steuern der Verarbeitung eines simultanen Ortungs- und Kartierungsprozesses und Erhalten einer Eigenposition- und Eigenlageinformation des Benutzerendgeräts (10),
- Erzeugen einer Beziehungsformel für einander entsprechende Pixelpositionen auf Grundlage der Position der Drohne (20) in einem von dem Benutzerendgerät (10) aufgenommenen Bild der Drohne sowie der Eigenpositions- und der Eigenlageinformationen des Benutzerendgeräts (10), wobei die Beziehungsformel für einander entsprechende Pixelpositionen eine Entsprechungsbeziehung zwischen einer Pixelposition (uS, vS) auf dem aufgenommenen Bild des Benutzerendgeräts (10) und einer Pixelposition (uN, vN) auf einem aufgenommenen Bild der virtuellen Drohnenkamera anzeigt, und
- Erzeugen des virtuellen Drohnenkamerabildes durch Verwendung des vom Benutzerendgerät (10) aufgenommenen Bildes und unter Verwendung der Beziehungsformel für einander entsprechende Pixelpositionen.

14. Informationsverarbeitungsverfahren, durch das ein Flugobjekt, wie eine Drohne, befähigt wird, zu landen und das in einem Informationsverarbeitungssystem ausgeführt wird, das ein Endgerät (10) und eine Drohne (20) umfasst, wobei das Informationsverarbeitungsverfahren umfasst:

Erzeugen eines virtuellen Drohnenkamerabildes, das mit einer projektiven Transformation eines von einem Benutzerendgerät (10) aufgenommenen realen Bildes einer geplanten Landeposition geschätzt wird, durch das Benutzerendgerät (10) und durch Ausführen des Verfahrens nach Anspruch 13, wobei das virtuelle Drohnenkamerabild die geplante Landeposition aus der Perspektive einer an einer Drohne (20) angebrachten Kamera zeigt, und Übertragen des erzeugten virtuellen Drohnenkamerabildes an die Drohne (20); und
Ausführen eines Prozesses des Zusammenführens des virtuellen Drohnenkamerabildes mit einem aufgenommenen Bild einer an der Drohne (20) angebrachten Drohnenkamera durch die Drohne (20) und Ausführen der Steuerung zur Landung an der geplanten Landeposition, die in dem aufgenommenen Bild der Drohnenkamera enthalten ist.

15. Computerprogramm, das Anweisungen umfasst, die, wenn das Programm von einem Computer ausgeführt wird, den Computer veranlassen, das Verfahren nach Anspruch 13 oder 14 auszuführen.

## Revendications

1. Appareil de traitement d'informations (10, 21, 40), qui permet à un engin volant tel qu'un drone d'atterrir, comprenant

une unité de traitement de données (152) qui est configurée pour exécuter un traitement de transformation d'une image capturée par caméra,
dans lequel l'unité de traitement de données (152) est configurée pour générer une image de caméra de drone virtuelle qui est estimée avec une transformation projective d'une image réelle d'une position d'atterrissage prévue capturée avec un terminal utilisateur (10), dans lequel l'image de caméra de drone virtuelle montre la position d'atterrissage prévue du point de vue d'une caméra montée sur un drone (20),
**caractérisé en ce que** l'unité de traitement de données (152) est configurée pour :

- commander le traitement d'un processus de localisation et cartographie simultanées et obtenir des informations de position propre et d'attitude propre du terminal utilisateur (10),
- générer une formule de relation positionnelle de pixels correspondants en fonction de la position du drone (20) dans une image capturée du drone par le terminal utilisateur (10) ainsi que d'informations de position propre et d'attitude propre du terminal utilisateur (10), dans lequel la formule de relation positionnelle de pixels correspondants indique une relation de correspondance entre une position de pixel (uS, vS) sur l'image capturée du terminal utilisateur (10) et une position de pixel (uN, vN) sur une image capturée de la caméra de drone virtuelle, et
- générer l'image de caméra de drone virtuelle en utilisant l'image capturée du terminal utilisateur (10) et en utilisant la formule de relation positionnelle de pixels correspondants.

2. Appareil de traitement d'informations (10, 21, 40) selon la revendication 1, dans lequel
l'unité de traitement de données (152) est configurée pour générer l'image de caméra de drone virtuelle en réglant une valeur de pixel d'une position de pixel $(u_s, v_s)$ sur l'image capturée du terminal utilisateur (10) à une position de pixel $(u_N, v_N)$ sur l'image capturée de la caméra de drone virtuelle correspondant à la position de pixel sur l'image capturée du terminal utilisateur (10).

3. Appareil de traitement d'informations (10, 21, 40) selon la revendication 1, dans lequel
l'unité de traitement de données (152) est configurée pour calculer une matrice de transformation de coordonnées d'un premier système de coordonnées utilisé pour une commande de position du drone (20) et d'un second système de coordonnées indiquant une position de pixel ($u_s$, $v_s$) d'une image capturée par caméra du terminal utilisateur (10), et générer la formule de relation positionnelle de pixels correspondants en utilisant un paramètre calculé en appliquant la matrice de transformation de coordonnées calculée.

4. Appareil de traitement d'informations (10, 21, 40) selon la revendication 3, dans lequel

l'unité de traitement de données (152) est configurée pour calculer une matrice de transformation de coordonnées qui transforme le premier système de coordonnées utilisé pour la commande de position du drone (20) et le second système de coordonnées indiquant la position de pixel ($u_s$, $v_s$) de l'image capturée par caméra du terminal utilisateur (10) en un système de coordonnées de référence, et génère la formule de relation positionnelle de pixels correspondants en utilisant un paramètre calculé en appliquant la matrice de transformation de coordonnées calculée, et
l'unité de traitement de données (152) est configurée pour exécuter le processus de localisation et cartographie simultanées consistant à calculer une position ($w_sP_c$) et une attitude ($cRws$) du terminal utilisateur (10), et utilise un résultat du processus de localisation et cartographie simultanées pour calculer une matrice de transformation de coordonnées qui transforme le second système de coordonnées indiquant la position de pixel ($u_s$, $v_s$) de l'image capturée par caméra du terminal utilisateur (10) en un système de coordonnées de localisation et cartographie simultanées qui est un système de coordonnées de référence.

5. Appareil de traitement d'informations (10, 21, 40) selon la revendication 4, dans lequel

le système de coordonnées de localisation et cartographie simultanées est un système de coordonnées universel fixe, et/ou
le premier système de coordonnées utilisé pour la commande de position du drone (20) est un système de coordonnées NED, et
le second système de coordonnées indiquant la position de pixel ($u_s$, $v_s$) de l'image capturée par caméra du terminal utilisateur (10) est un système de coordonnées de caméra.

6. Appareil de traitement d'informations (10, 21, 40) selon la revendication 1, dans lequel
l'unité de traitement de données (152) est configurée pour exécuter le Processus 1 et le Processus 2 suivants :

le Processus 1 étant un processus d'analyse de système de coordonnées consistant à calculer une matrice de transformation de coordonnées configurée pour indiquer des positions sur différentes coordonnées, utilisées par le drone (20) et le terminal utilisateur (10), en guise de positions sur une coordonnée de référence ; et
le Processus 2 étant un processus de génération de l'image de caméra de drone virtuelle en fonction de l'image de la position d'atterrissage prévue capturée par le terminal utilisateur (10), et de transmission de l'image de caméra de drone virtuelle générée, d'informations de position GPS de la position d'atterrissage prévue, et similaires au drone (20) ou à un serveur de gestion de drone (40).

7. Appareil de traitement d'informations (10, 21, 40) selon la revendication 6, dans lequel

l'unité de traitement de données (152) est configurée pour transmettre des données d'attribut de l'image de caméra de drone virtuelle au drone (20) ou au serveur de gestion de drone (40) conjointement avec l'image de caméra de drone virtuelle dans le Processus 2, et
les données d'attribut comportent au moins de quelconques données parmi :

- des informations de coordonnées de la position d'atterrissage prévue ($_{PS}R_{NED}$) dans l'image de caméra de drone virtuelle ;
- des informations d'attitude d'une caméra de drone ($_NR_{NED}$) estimées pour capturer une même image que l'image de caméra de drone virtuelle ; et
- une position focale ($_{NED}P_{PS}$) de la caméra de drone estimée pour capturer la même image que l'image de caméra de drone virtuelle.

8. Système de traitement d'informations, qui permet à un engin volant tel qu'un drone d'atterrir, comprenant :

   un terminal utilisateur (10) comprenant l'appareil de traitement d'informations (10, 21, 40) selon la revendication 1 ; et

   le drone (20), dans lequel

   le terminal utilisateur (10) est configuré pour générer une image de caméra de drone virtuelle qui est estimée avec une transformation projective d'une image réelle d'une position d'atterrissage prévue capturée avec un terminal utilisateur (10), dans lequel l'image de caméra de drone virtuelle montre la position d'atterrissage prévue du point de vue d'une caméra montée sur un drone (20), et transmet l'image de caméra de drone virtuelle générée au drone (20), et

   le drone (20) est configuré pour exécuter un processus de collationnement de l'image de caméra de drone virtuelle avec une image capturée d'une caméra de drone

   montée sur le drone (20) et exécuter une commande permettant l'atterrissage au niveau de la position d'atterrissage prévue incluse dans l'image capturée de la caméra de drone.

9. Système de traitement d'informations selon la revendication 8, dans lequel

   le terminal utilisateur (10) est configuré pour transmettre l'image de caméra de drone virtuelle au drone (20) par l'intermédiaire d'un serveur de gestion de drone (40), et/ou

   le terminal utilisateur (10) est configuré pour transmettre des données, qui sont des données d'attribut de l'image de caméra de drone virtuelle, conjointement avec l'image de caméra de drone virtuelle au drone (20), les données comportant au moins de quelconques parmi :

   - des informations de coordonnées de la position d'atterrissage prévue ($_{PS}R_{NED}$) dans l'image de caméra de drone virtuelle ;
   - des informations d'attitude de la caméra de drone ($_{N}R_{NED}$) estimées pour capturer une même image que l'image de caméra de drone virtuelle ; et
   - une position focale ($_{NED}P_{PS}$) de la caméra de drone estimée pour capturer la même image que l'image de caméra de drone virtuelle.

10. Système de traitement d'informations selon la revendication 8, dans lequel
    le terminal utilisateur (10) est configuré pour générer une formule de relation positionnelle de pixels correspondants indiquant une relation de correspondance entre une position de pixel ($u_s$, $v_s$) sur l'image capturée du terminal utilisateur (10) et une position de pixel ($u_N$, $v_N$) sur l'image capturée de la caméra de drone virtuelle, et générer l'image de caméra de drone virtuelle en utilisant l'image capturée du terminal utilisateur (10) à l'aide de la formule de relation positionnelle de pixels correspondants.

11. Système de traitement d'informations selon la revendication 10, dans lequel
    le terminal utilisateur (10) est configuré pour calculer une matrice de transformation de coordonnées qui transforme un premier système de coordonnées utilisé pour la commande de position du drone (20) et un second système de coordonnées indiquant la position de pixel ($u_s$, $v_s$) de l'image capturée par caméra du terminal utilisateur (10) en un système de coordonnées de référence, et génère la formule de relation positionnelle de pixels correspondants en utilisant un paramètre calculé en appliquant la matrice de transformation de coordonnées calculée.

12. Système de traitement d'informations selon la revendication 11, dans lequel

    le terminal utilisateur (10) est configuré pour exécuter un processus de localisation et cartographie simultanées consistant à calculer une position ($w_sP_c$) et une attitude ($cRws$) du terminal utilisateur (10), et utilise un résultat du processus de localisation et cartographie simultanées pour calculer une matrice de transformation de coordonnées qui transforme le second système de coordonnées indiquant la position de pixel ($u_s$, $v_s$) de l'image capturée par caméra du terminal utilisateur (10) en un système de coordonnées de localisation et cartographie simultanées qui est un système de coordonnées de référence, et

    le système de coordonnées de localisation et cartographie simultanées est un système de coordonnées universel fixe,

    le premier système de coordonnées utilisé pour la commande de position du drone (20) est un système de coordonnées NED, et

    le second système de coordonnées indiquant la position de pixel ($u_s$, $v_s$) de l'image capturée par caméra du terminal utilisateur (10) est un système de coordonnées de caméra.

**13.** Procédé de traitement d'informations, qui permet à un engin volant tel qu'un drone d'atterrir et est exécuté dans un appareil de traitement d'informations, le procédé de traitement d'informations comprenant :

la génération d'une image de caméra de drone virtuelle qui est estimée avec une transformation projective d'une image réelle d'une position d'atterrissage prévue capturée avec un terminal utilisateur (10), dans lequel l'image de caméra de drone virtuelle montre la position d'atterrissage prévue du point de vue d'une caméra montée sur un drone (20) ;
**caractérisé en ce que** l'appareil de traitement d'informations exécute :

- la commande de traitement d'un processus de localisation et cartographie simultanées et l'obtention d'informations de position propre et d'attitude propre du terminal utilisateur (10),
- la génération d'une formule de relation positionnelle de pixels correspondants en fonction de la position du drone (20) dans une image capturée du drone par le terminal utilisateur (10) ainsi que des informations de position propre et d'attitude propre du terminal utilisateur (10), dans lequel la formule de relation positionnelle de pixels correspondants indique une relation de correspondance entre une position de pixel (uS, vS) sur l'image capturée du terminal utilisateur (10) et une position de pixel (uN, vN) sur une image capturée de la caméra de drone virtuelle, et
- la génération de l'image de caméra de drone virtuelle en utilisant l'image capturée du terminal utilisateur (10) et en utilisant la formule de relation positionnelle de pixels correspondants.

**14.** Procédé de traitement d'informations, qui permet à un engin volant tel qu'un drone d'atterrir et est exécuté dans un système de traitement d'informations comprenant un terminal (10) et un drone (20), le procédé de traitement d'informations comprenant :

la génération, par le terminal utilisateur (10) et en exécutant le procédé selon la revendication 13, d'une image de caméra de drone virtuelle qui est estimée avec une transformation projective d'une image réelle d'une position d'atterrissage prévue capturée avec un terminal utilisateur (10), dans lequel l'image de caméra de drone virtuelle montre la position d'atterrissage prévue du point de vue d'une caméra montée sur un drone (20), et la transmission de l'image de caméra de drone virtuelle au drone (20) ; et
l'exécution, par le drone (20), d'un processus de collationnement de l'image de caméra de drone virtuelle avec une image capturée d'une caméra de drone montée sur le drone (20) et l'exécution d'une commande pour l'atterrissage au niveau de la position d'atterrissage prévue incluse dans l'image capturée de la caméra de drone.

**15.** Programme d'ordinateur comprenant des instructions qui, lorsque le programme est exécuté par un ordinateur, amènent l'ordinateur à effectuer le procédé selon la revendication 13 ou 14.

# FIG. 1

(PROCESS 1) COORDINATE ANALYSIS PROCESS OF ANALYZING RELATIONSHIP BETWEEN POSITIONS ON DIFFERENT COORDINATES USED BY DRONE AND USER TERMINAL TO CALCULATE COORDINATE TRANSFORMATION MATRIX

10 USER TERMINAL (CAMERA-EQUIPPED SMART PHONE)

20 DRONE

1 USER

(PROCESS 2) PROCESS OF CAPTURING IMAGE OF PLANNED LANDING POSITION BY USER TERMINAL, GENERATING VIRTUAL DRONE CAMERA IMAGE BASED ON CAPTURED IMAGE, AND TRANSMITTING GENERATED VIRTUAL DRONE CAMERA IMAGE TO DRONE OR DRONE MANAGEMENT SERVER

1 USER

10 USER TERMINAL (CAMERA-EQUIPPED SMART PHONE)

PLANNED LANDING POSITION

(PROCESS 3) PROCESS IN WHICH DRONE MOVES TO MIDAIR ABOVE PLANNED LANDING POSITION ON BASIS OF GPS POSITION INFORMATION

30 GPS SATELLITE

20 DRONE

PLANNED LANDING POSITION

(PROCESS 4) PROCESS IN WHICH DRONE CONFIRMS PLANNED LANDING POSITION BY IMAGE COLLATION BETWEEN DRONE CAMERA-CAPTURED IMAGE AND "VIRTUAL DRONE CAMERA IMAGE" RECEIVED FROM USER TERMINAL AND PERFORMS LANDING

20 DRONE

PLANNED LANDING POSITION

EP 4 080 314 B1

# FIG. 2

```
        START
          │
          ▼
```
                                                                          S11
```
┌─────────────────────────────────────────────────────────────────────┐
│        EXECUTE (PROCESS 1) COORDINATE ANALYSIS PROCESS                │
│            OF ANALYZING RELATIONSHIP BETWEEN POSITIONS ON             │
│     DIFFERENT COORDINATES USED BY DRONE AND USER TERMINAL             │
│           TO CALCULATE COORDINATE TRANSFORMATION MATRIX               │
└─────────────────────────────────────────────────────────────────────┘
          │
          ▼
```
                                                                          S12
```
┌─────────────────────────────────────────────────────────────────────┐
│     EXECUTE (PROCESS 2) PROCESS OF CAPTURING IMAGE OF PLANNED         │
│    LANDING POSITION BY USER TERMINAL, GENERATING VIRTUAL DRONE        │
│ CAMERA IMAGE BASED ON CAPTURED IMAGE, AND TRANSMITTING GENERATED      │
│ VIRTUAL DRONE CAMERA IMAGE TO DRONE OR DRONE MANAGEMENT SERVER        │
└─────────────────────────────────────────────────────────────────────┘
          │
          ▼
```
                                                                          S13
```
┌─────────────────────────────────────────────────────────────────────┐
│       EXECUTE (PROCESS 3) PROCESS IN WHICH DRONE MOVES               │
│            TO MIDAIR ABOVE PLANNED LANDING POSITION                   │
│                ON BASIS OF GPS POSITION INFORMATION                   │
└─────────────────────────────────────────────────────────────────────┘
          │
          ▼
```
                                                                          S14
```
┌─────────────────────────────────────────────────────────────────────┐
│        EXECUTE (PROCESS 4) PROCESS IN WHICH DRONE CONFIRMS           │
│   PLANNED LANDING POSITION BY IMAGE COLLATION BETWEEN DRONE           │
│    CAMERA-CAPTURED IMAGE AND "VIRTUAL DRONE CAMERA IMAGE"             │
│          RECEIVED FROM USER TERMINAL AND PERFORMS LANDING             │
└─────────────────────────────────────────────────────────────────────┘
          │
          ▼
        S131
```

EP 4 080 314 B1

*FIG. 3*

30 GPS SATELLITE

20 DRONE

21 DRONE CONTROL APPARATUS
(IMAGE PROCESSING APPARATUS)

22 DRONE CAMERA
(DOWNWARD CAMERA)

1 USER

10 USER TERMINAL
(CAMERA-EQUIPPED
SMART PHONE)
(IMAGE PROCESSING
APPARATUS)

EP 4 080 314 B1

FIG. 4

40 DRONE MANAGEMENT SERVER
(IMAGE PROCESSING APPARATUS)

20 DRONE

30 GPS SATELLITE

21 DRONE CONTROL APPARATUS
(IMAGE PROCESSING APPARATUS)

22 DRONE CAMERA
(DOWNWARD CAMERA)

1 USER

10 USER TERMINAL
(CAMERA-EQUIPPED
SMART PHONE)
(IMAGE PROCESSING
APPARATUS)

EP 4 080 314 B1

## FIG. 5

**40 DRONE MANAGEMENT SERVER**

**20 DRONE**

**10 USER TERMINAL (CAMERA-EQUIPPED SMART PHONE)**

DRONE POSITION AND ATTITUDE INFORMATION (NED)

**101**
CAMERA

**130**
COMMUNICATION UNIT

**110**
(PROCESS 1) EXECUTION UNIT

**111**
CAPTURED IMAGE OF DRONE → IMAGE ANALYSIS UNIT → DRONE POSITION (POSITION IN IMAGE)

**113**
COORDINATE TRANSFORMATION MATRIX GENERATION UNIT → COORDINATE TRANSFORMATION MATRIX

**112**
SIMULTANEOUS LOCALIZATION AND MAPPING UNIT (SLAM) → USER TERMINAL POSITION

**120**
(PROCESS 2) EXECUTION UNIT

CAPTURED IMAGE OF PLANNED LANDING POSITION

**102**
INPUT UNIT

(1) USER TERMINAL ALTITUDE (ALTITUDE FROM PLANNED LANDING POSITION)
(2) PLANNED LANDING POSITION (POSITION IN CAPTURED IMAGE)
(3) ALTITUDE, ATTITUDE (YAW ANGLE), AND ANGLE OF VIEW AT TIME OF CAPTURING VIRTUAL DRONE CAMERA IMAGE

**121**
**122**
VIRTUAL DRONE CAMERA IMAGE GENERATION UNIT

TRANSMISSION DATA GENERATION UNIT

EP 4 080 314 B1

# FIG. 6

20 DRONE

21 DRONE CONTROL APPARATUS
(IMAGE PROCESSING APPARATUS)

22 DRONE CAMERA
(DOWNWARD CAMERA)

10 USER TERMINAL
(CAMERA-EQUIPPED
SMART PHONE)

1 USER

EP 4 080 314 B1

## FIG. 7

30 GPS SATELLITE

20 DRONE

FLY ACCORDING TO FLIGHT PATH CORRESPONDING TO NED COORDINATES USING POSITION INFORMATION (LONGITUDE, LATITUDE, AND HEIGHT) CALCULATED ON BASIS OF RECEPTION INFORMATION FROM GPS SATELLITE

NED COORDINATE

E
N
D

10 USER TERMINAL
(CAMERA-EQUIPPED SMART PHONE)

CAMERA COORDINATE

$Z_C$
$X_C$
$Y_C$

# FIG. 8

10 USER TERMINAL
(CAMERA-EQUIPPED SMART PHONE)

u

v

Zc (CAMERA
OPTICAL-AXIS DIRECTION)

Zw

Xw

Yw

Xc

Yc

(3) WORLD COORDINATE SYSTEM
(=SLAM COORDINATE SYSTEM)

(1) CAMERA COORDINATE
SYSTEM

EACH PIXEL POSITION (u, v) OF DISPLAY PIXEL
(CAMERA IMAGE PLANE COORDINATE SYSTEM)
CORRESPONDS TO XYZ-COORDINATE
(Xc, Yc, Zc) OF CAMERA COORDINATE SYSTEM

20 DRONE

(2) NED COORDINATE

E

N

D

THEREFORE, IF POSITION AND ATTITUDE
OF CAMERA IN NED COORDINATE SYSTEM
ARE ESTIMATED FROM POSITION OF
FLIGHT PATH INDICATED BY NED
COORDINATE SYSTEM AND EACH PIXEL
POSITION (u, v) OF DISPLAY IMAGE AND
TRANSFORMATION INTO POSITION
INDICATED BY CAMERA COORDINATE
SYSTEM CAN BE PERFORMED FROM
ESTIMATED INFORMATION, FLIGHT PATH
OF DRONE 20 CAN BE ACCURATELY
OUTPUT ON DISPLAY IMAGE INDICATED
BY CAMERA COORDINATE SYSTEM.

EP 4 080 314 B1

FIG. 9

*FIG. 10*

CAMERA POSITION IN NED COORDINATE SYSTEM

$_{NED}P_C$

WORLD COORDINATE-CAMERA COORDINATE TRANSFORMATION MATRIX

$_C T_{W_S}$

(1) CAMERA COORDINATE SYSTEM

$Z_C$ (CAMERA OPTICAL-AXIS DIRECTION)

$X_C$

$Y_C$

NED COORDINATE-CAMERA COORDINATE TRANSFORMATION MATRIX

$_C T_{NED}$

POSITION IN NED COORDINATE SYSTEM (DRONE POSITION)

$_{NED}P_X$

(3) WORLD COORDINATE SYSTEM (= SLAM COORDINATE SYSTEM)

$Z_W$

$X_W$

$Y_W$

NED COORDINATE-WORLD COORDINATE TRANSFORMATION MATRIX

$_{W_S} T_{NED}$

(2) NED COORDINATE SYSTEM

E

N

D

EP 4 080 314 B1

# FIG. 11

# FIG. 12

(t3)

(t2)

(t1)

52-3 DRONE IMAGING POSITION (u3, v3)

u

Zc (CAMERA OPTICAL-AXIS DIRECTION)

v

Xc

Yc

51 CAMERA IMAGING SURFACE (C-MOS) (= DISPLAY IMAGE)

52-1 DRONE IMAGING POSITION (u1, v1)

52-2 DRONE IMAGING POSITION (u2, v2)

EP 4 080 314 B1

# FIG. 13

51 CAMERA IMAGING SURFACE (C−MOS) (=DISPLAY IMAGE)

61 OBJECT

Zc (CAMERA OPTICAL-AXIS DIRECTION)

Xc

Yc

62 OBJECT IMAGE

$\theta$

OBJECT THREE-DIMENSIONAL POSITION

$$M = \begin{bmatrix} M_x \\ M_y \\ M_z \end{bmatrix}$$

OBJECT IMAGING POSITION

$$\widetilde{m} = \begin{bmatrix} m_u \\ m_v \\ 1 \end{bmatrix}$$

Zw

Xw

Yw

WORLD COORDINATE SYSTEM (=SLAM COORDINATE SYSTEM)

EP 4 080 314 B1

*FIG. 14*

NORMALIZATION PARAMETER

$\lambda$

CAMERA ROTATION MATRIX

**Rw**

CAMERA THREE-DIMENSIONAL POSITION

$$C_w = \begin{bmatrix} C_x \\ C_y \\ C_z \end{bmatrix}$$

$$\lambda \widetilde{\mathbf{m}} = \mathbf{A}\mathbf{R}_w \left( \mathbf{M} - \mathbf{C}_w \right)$$

CAMERA INTRINSIC PARAMETER $\mathsf{A}$

$$A = \begin{bmatrix} -f \cdot k_u & f \cdot k_u \cdot cot\theta & u_0 \\ 0 & -\dfrac{f \cdot k_v}{sin\theta} & v_0 \\ 0 & 0 & 1 \end{bmatrix}$$

f : FOCAL LENGTH
$\theta$ : ORTHOGONALITY OF IMAGE AXIS (IDEAL VALUE IS 90°)
ku : SCALE OF VERTICAL AXIS (SCALE TRANSFORMED TO TWO-DIMENSIONAL IMAGE FROM SCALE OF THREE-DIMENSIONAL POSITION)
kv : SCALE OF HORIZONTAL AXIS (SCALE TRANSFORMED TO TWO-DIMENSIONAL IMAGE FROM SCALE OF THREE-DIMENSIONAL POSITION)
$(u_0, v_0)$ IMAGE CENTER POSITION

## FIG. 15

(1)

(t3)

$\text{NED}\mathbf{P}_{\text{Drone}_{t3}}$

$\text{NED}\mathbf{P}_{\text{Drone}_{t1}}$

$\text{NED}\mathbf{P}_{\text{Drone}_{t2}}$

(t2)

(t1)

$\widetilde{\mathbf{m}}_{\text{Drone}_{t3}}$

52-3 DRONE IMAGING POSITION

u

Zc (CAMERA OPTICAL-AXIS DIRECTION)

v

51 CAMERA IMAGING SURFACE (C-MOS) (=DISPLAY IMAGE)

Xc

52-1 DRONE IMAGING POSITION — $\widetilde{\mathbf{m}}_{\text{Drone}_{t1}}$

Yc

52-2 DRONE IMAGING POSITION — $\widetilde{\mathbf{m}}_{\text{Drone}_{t2}}$

(2)

$$\text{NED}\mathbf{P}_{\text{Drone}_{t3}} - \text{NED}\mathbf{P}_C = \lambda_{t3} \cdot {}_C\mathbf{R}^T_{NED} \cdot \mathbf{A}^{-1} \cdot \widetilde{m}_{Drone_{t3}}$$

$$\text{NED}\mathbf{P}_{\text{Drone}_{t2}} - \text{NED}\mathbf{P}_C = \lambda_{t2} \cdot {}_C\mathbf{R}^T_{NED} \cdot \mathbf{A}^{-1} \cdot \widetilde{m}_{Drone_{t2}}$$

$$\text{NED}\mathbf{P}_{\text{Drone}_{t1}} - \text{NED}\mathbf{P}_C = \lambda_{t1} \cdot {}_C\mathbf{R}^T_{NED} \cdot \mathbf{A}^{-1} \cdot \widetilde{m}_{Drone_{t1}}$$

## FIG. 16

(1)

(t3)

$\text{NED}\mathbf{P}_{\text{Drone}_{t3}}$

$\text{NED}\mathbf{P}_{\text{Drone}_{t2}}$

(t2)

$\text{NED}\mathbf{P}_{\text{Drone}_{t1}}$

(t1)

$\widetilde{\mathbf{m}}_{\text{Drone}_{t3}}$

52-3 DRONE IMAGING POSITION

u

v

CAMERA COORDINATE SYSTEM
**Zc** (CAMERA
OPTICAL-AXIS DIRECTION)

Xc

Yc

51 CAMERA IMAGING SURFACE (CCD) (= DISPLAY IMAGE)

52-1 DRONE IMAGING POSITION $\widetilde{m}_{\text{Drone}_{t1}}$

52-2 DRONE IMAGING POSITION $\widetilde{m}_{\text{Drone}_{t2}}$

NED COORDINATE SYSTEM

E

N

D

(2)

$$\text{NED}\mathbf{P}_{\text{Drone}_{t3}} - {}_{NED}\mathbf{P}_{\text{C}} = \lambda_{t3} \cdot {}_{C}\mathbf{R}^{T}_{NED} \cdot \mathbf{A}^{-1} \cdot \widetilde{m}_{\text{Drone}_{t3}}$$

$$\text{NED}\mathbf{P}_{\text{Drone}_{t2}} - {}_{NED}\mathbf{P}_{\text{C}} = \lambda_{t2} \cdot {}_{C}\mathbf{R}^{T}_{NED} \cdot \mathbf{A}^{-1} \cdot \widetilde{m}_{\text{Drone}_{t2}}$$

$$\text{NED}\mathbf{P}_{\text{Drone}_{t1}} - {}_{NED}\mathbf{P}_{\text{C}} = \lambda_{t1} \cdot {}_{C}\mathbf{R}^{T}_{NED} \cdot \mathbf{A}^{-1} \cdot \widetilde{m}_{\text{Drone}_{t1}}$$

(3)

$${}_{C}\mathbf{T}_{\text{NED}} = \begin{bmatrix} {}_{C}\mathbf{R}_{\text{NED}} & -{}_{C}\mathbf{R}_{\text{NED}} \cdot {}_{\text{NED}}\mathbf{P}_{\text{C}} \\ \mathbf{0} & 1 \end{bmatrix}$$

# FIG. 17

## FIG. 18

(1)

$_{NED}\mathbf{P}_{Drone_{t3}}$ (t3)

$_{NED}\mathbf{P}_{Drone_{t2}}$

$_{NED}\mathbf{P}_{Drone_{t1}}$

(t1)

(t1)

$_{ct3}\mathbf{T}_{ct1}$

(t2)

(t2)

$_{ct3}\mathbf{T}_{ct2}$

CAMERA COORDINATE SYSTEM

Zc (CAMERA OPTICAL-AXIS DIRECTION)

$\widetilde{\mathbf{m}}_{Drone_{t3}}$

51 CAMERA IMAGING SURFACE (CCD) (=DISPLAY IMAGE)

Xc

$\widetilde{m}_{Drone_{t1}}$

(t3)

$\widetilde{m}_{Drone_{t2}}$

Yc

NED COORDINATE SYSTEM

E

N

D

(2)

$$_{NED}\mathbf{P}'_{Drone_{t1}} - _{NED}\mathbf{P}_{C_{t3}} = \lambda_{t1} \cdot {}_{C_{t3}}\mathbf{R}^T_{NED} \cdot {}_{C_{t1}}\mathbf{R}^T_{C_{t3}} \cdot \mathbf{A}^{-1} \cdot \widetilde{m}_{Drone_{t1}}$$

$$_{NED}\mathbf{P}'_{Drone_{t2}} - _{NED}\mathbf{P}_{C_{t3}} = \lambda_{t2} \cdot {}_{C_{t3}}\mathbf{R}^T_{NED} \cdot {}_{C_{t2}}\mathbf{R}^T_{C_{t3}} \cdot \mathbf{A}^{-1} \cdot \widetilde{m}_{Drone_{t2}}$$

$$_{NED}\mathbf{P}_{Drone_{t3}} - _{NED}\mathbf{P}_{C_{t3}} = \lambda_{t3} \cdot {}_{C_{t3}}\mathbf{R}^T_{NED} \cdot \mathbf{A}^{-1} \cdot \widetilde{m}_{Drone_{t3}}$$

(3)

$$_{C}\mathbf{T}_{NED} = \begin{bmatrix} _{C}\mathbf{R}_{NED} & -_{C}\mathbf{R}_{NED} \cdot _{NED}\mathbf{P}_{C} \\ \mathbf{0} & 1 \end{bmatrix}$$

## FIG. 19

START

**S111**
CAPTURE IMAGE OF DRONE IN FLIGHT WITH CAMERA OF USER TERMINAL (FOR EXAMPLE, SMART PHONE) AT TIME t(n)

**S112**
ACQUIRE IMAGING POSITION INFORMATION (IMAGING POSITION INFORMATION ($\widetilde{m}_{Dronet(n)}$) IN CAMERA COORDINATE SYSTEM) OF DRONE IN CAPTURED IMAGE OF TIME t(n)

**S113**
ACQUIRE POSITION INFORMATION (POSITION INFORMATION ($_{NED}P_{Dronet(n)}$) IN NED COORDINATE SYSTEM) OF DRONE AT TIME t(n)

**S114**
RECORD IMAGING POSITION INFORMATION (IMAGING POSITION INFORMATION ($\widetilde{m}_{Dronet(n)}$) IN CAMERA COORDINATE SYSTEM) AT TIME t(n) AND POSITION INFORMATION (($_{NED}P_{Dronet(n)}$) IN NED COORDINATE SYSTEM) OF DRONE AT TIME t(n) IN MEMORY IN ASSOCIATION WITH TIME t(n)

**S121**
EXECUTE SLAM PROCESS AT TIME t(n)

**S122**
CALCULATE COORDINATE TRANSFORMATION MATRIX ($_{Ct(n()}T_{Ws}$) THAT TRANSFORMS WORLD COORDINATE SYSTEM (SLAM COORDINATE SYSTEM) INTO CAMERA COORDINATE SYSTEM OF IMAGING TIME t(n) ON BASIS OF RESULT OF SLAM PROCESS

**S123**
RECORD COORDINATE TRANSFORMATION MATRIX ($_{Ct(n)}T_{Ws}$) OF TIME t(n) IN MEMORY IN ASSOCIATION WITH TIME t(n)

**S124**
ARE THERE THREE OR MORE ENTRIES RECORDED IN MEMORY?

Yes → S131

No

**S125**
n+1 → n

EP 4 080 314 B1

# FIG. 20

30 GPS SATELLITE

40 DRONE MANAGEMENT SERVER

20 DRONE

FLY ACCORDING TO FLIGHT PATH CORRESPONDING TO NED COORDINATES USING POSITION INFORMATION (LONGITUDE, LATITUDE, AND HEIGHT) CALCULATED ON BASIS OF RECEPTION INFORMATION FROM GPS SATELLITE

NED COORDINATE

E

N

D

10 USER TERMINAL (CAMERA-EQUIPPED SMART PHONE)

CAMERA COORDINATE SYSTEM

$Z_c$ (CAMERA OPTICAL-AXIS DIRECTION)

$X_c$

$Y_c$

FLIGHT PATH AND PLANNED FLIGHT PATH INFORMATION (PATH INFORMATION ON NED COORDINATES)

EP 4 080 314 B1

## FIG. 21

| (1) | (2) | (3) | (4) |
|---|---|---|---|
| TIME (t) | DRONE IMAGING POSITION IN CAMERA COORDINATE SYSTEM | DRONE POSITION IN NED COORDINATE SYSTEM | COORDINATE TRANSFORMATION MATRIX THAT TRANSFORMS WORLD COORDINATE SYSTEM (SLAM COORDINATE SYSTEM) INTO CAMERA COORDINATE SYSTEM |
| t(n) | $\widetilde{m}_{Dronet(n)}$ | $_{NED}P_{Dronet(n)}$ | $_{Ct(n)}T_{Ws}$ |
| t(n+1) | $\widetilde{m}_{Dronet(n+1)}$ | $_{NED}P_{Dronet(n+1)}$ | $_{Ct(n+1)}T_{Ws}$ |
| t(n+2) | $\widetilde{m}_{Dronet(n+2)}$ | $_{NED}P_{Dronet(n+2)}$ | $_{Ct(n+2)}T_{Ws}$ |

EP 4 080 314 B1

## FIG. 22

$$\text{S124 (Yes)}$$

**S131**
CALCULATE COORDINATE TRANSFORMATION MATRIX $({}_{Ct(out)}T_{Ct(n)})$
THAT TRANSFORMS CAMERA COORDINATE SYSTEM OF DRONE IMAGING TIME
INTO CAMERA COORDINATE SYSTEM OF TIME t(out) AT WHICH DRONE FLIGHT PATH IS OUTPUT
AND RECORD CALCULATED COORDINATE TRANSFORMATION MATRIX IN MEMORY

**S132**
PERFORM COORDINATE TRANSFORMATION PROCESS BY APPLYING COORDINATE TRANSFORMATION
MATRIX $({}_{Ctc}T_{Ctn})$ TO DRONE IMAGING POSITION IN CAMERA COORDINATE SYSTEM OF DRONE IMAGING TIME,
CALCULATE DRONE IMAGING POSITION CORRESPONDING TO CAMERA COORDINATE SYSTEM OF DRONE
FLIGHT PATH OUTPUT TIME t(out), AND RECORD CALCULATED DRONE IMAGING POSITION IN MEMORY

**S133**
GENERATE SIMULTANEOUS EQUATIONS (FORMULA 7) INCLUDING FORMULAS OF
CORRESPONDENCE RELATIONSHIPS BETWEEN EACH OF DRONE POSITIONS IN NED COORDINATE SYSTEM
AT THREE DIFFERENT POSITIONS AND EACH OF DRONE IMAGING POSITIONS (IMAGING POSITIONS
ON CAMERA COORDINATE SYSTEM OF TIME t(out)) CORRESPONDING TO RESPECTIVE DRONE POSITIONS

**S134**
CALCULATE COORDINATE TRANSFORMATION MATRIX $({}_{Ct(out)}T_{NED})$ INCLUDING PARAMETERS ACQUIRED
BY SOLVING SIMULTANEOUS EQUATIONS (FORMULA 7) AS MATRIX ELEMENTS, THAT IS,
COORDINATE TRANSFORMATION MATRIX $({}_{Ct(out)}T_{NED})$ (FORMULA 8) THAT TRANSFORMS POSITION $({}_{NED}P_X)$
IN NED COORDINATE SYSTEM INTO POSITION $({}_{Ct(out)}P_X)$ IN CAMERA COORDINATE SYSTEM

$$\text{END}$$

EP 4 080 314 B1

## FIG. 23

| (1) | (2) | (3) | (4) | (5) | (6) |
|---|---|---|---|---|---|
| TIME (t) | DRONE IMAGING POSITION IN CAMERA COORDINATE SYSTEM | DRONE POSITION IN NED COORDINATE SYSTEM | COORDINATE TRANSFORMATION MATRIX THAT TRANSFORMS WORLD COORDINATE SYSTEM (SLAM COORDINATE SYSTEM) INTO CAMERA COORDINATE SYSTEM | COORDINATE TRANSFORMATION MATRIX THAT TRANSFORMS CAMERA COORDINATE SYSTEM AT TIME OF CAPTURING IMAGE OF DRONE INTO CAMERA COORDINATE SYSTEM AT TIME OF OUTPUTTING FLIGHT PATH | DRONE IMAGING POSITION CORRESPONDING TO CAMERA COORDINATE SYSTEM OF DRONE FLIGHT PATH OUTPUT TIME t(out) |
| $t(n)$ | $\tilde{m}_{Dronet(n)}$ | $_{NED}P_{Dronet(n)}$ | $_{Ct(n)}T_{Ws}$ | $_{Ct(out)}T_{Ct(n)}$ | $\lambda \cdot \tilde{\mathbf{m}}_{Drone_{tn}}$ $= \mathbf{A} \cdot {}_{C_{t_{out}}}\mathbf{T}_{NED} \cdot {}_{NED}\mathbf{P}_{Drone_{tn}}$ |
| $t(n+1)$ | $\tilde{m}_{Dronet(n+1)}$ | $_{NED}P_{Dronet(n+1)}$ | $_{Ct(n+1)}T_{Ws}$ | $_{Ct(out)}T_{Ct(n+1)}$ | $\lambda \cdot \tilde{\mathbf{m}}_{Drone_{tn+1}}$ $= \mathbf{A} \cdot {}_{C_{t_{out}}}\mathbf{T}_{NED} \cdot {}_{NED}\mathbf{P}_{Drone_{tn+1}}$ |
| $t(n+2)$ $=t(out)$ | $\tilde{m}_{Dronet(n+2)}$ $=\tilde{m}_{Dronet(out)}$ | $_{NED}P_{Dronet(n+2)}$ $=$ $_{NED}P_{Dronet(out)}$ | $_{Ct(n+2)}T_{Ws}$ $=$ $_{Ct(out)}T_{Ws}$ | — | $\tilde{m}_{Dronet(n+2)}$ $=\tilde{m}_{Dronet(out)}$ |

EP 4 080 314 B1

## FIG. 24

1 USER

10 USER TERMINAL
(CAMERA-EQUIPPED
SMART PHONE)

PLANNED LANDING
POSITION

EP 4 080 314 B1

## FIG. 25

## FIG. 26

START

↓

**S201**

CAPTURE IMAGE OF PLANNED LANDING
POSITION USING USER TERMINAL

↓

**S202**

INPUT HEIGHT INFORMATION OF
USER TERMINAL AT TIME OF CAPTURING
IMAGE OF PLANNED LANDING POSITION

↓

**S203**

INPUT IMAGE AREA DESIGNATION
INFORMATION OF PLANNED LANDING
POSITION INCLUDED IN CAPTURED IMAGE

↓

**S204**

TRANSFORM CAPTURED IMAGE AND GENERATE
"VIRTUAL DRONE CAMERA IMAGE" ESTIMATED
TO BE CAPTURED IN CASE WHERE PLANNED
LANDING POSITION IS CAPTURED
WITH DRONE CAMERA

↓

**S205**

TRANSMIT GENERATED "VIRTUAL DRONE CAMERA
IMAGE", GPS POSITION INFORMATION OF PLANNED
LANDING POSITION, AND ATTRIBUTE DATA
CORRESPONDING TO GENERATED
"VIRTUAL DRONE CAMERA IMAGE" TO DRONE
OR DRONE MANAGEMENT SERVER

↓

END

EP 4 080 314 B1

## FIG. 27

VIRTUAL DRONE

VIRTUAL DRONE CAMERA IMAGE

$_N R_{NED}$: ATTITUDE OF VIRTUAL DRONE CAMERA IMAGE IN NED COORDINATE SYSTEM

$_{NED} P_N$: FOCAL POSITION OF VIRTUAL DRONE CAMERA IMAGE IN NED COORDINATE SYSTEM

$[u_N, v_N, 1]$ PLANNED LANDING POSITION ON VIRTUAL DRONE CAMERA IMAGE

10 USER TERMINAL (CAMERA-EQUIPPED SMART PHONE)

YAW ANGLE

LANDING PLANE

$_c R_{CWs}$: ATTITUDE OF USER TERMINAL IN WORLD COORDINATE SYSTEM (SLAM COORDINATE SYSTEM) (=REFERENCE COORDINATE SYSTEM)

$_{Ws} P_C$: POSITION OF USER TERMINAL IN WORLD COORDINATE SYSTEM (SLAM COORDINATE SYSTEM) (=REFERENCE COORDINATE SYSTEM)

Zps

Xps

Yps

PLANNED LANDING POSITION

$[u_S, v_S, 1]$ PLANNED LANDING POSITION ON CAPTURED IMAGE OF USER TERMINAL

$_{PS} R_{Ws}$: ATTITUDE OF LANDING PLANE (LANDING PLANE OF Z=0) IN WORLD COORDINATE SYSTEM (SLAM COORDINATE SYSTEM) (=REFERENCE COORDINATE SYSTEM)

$_{Ws} P_{PS}$: PLANNED LANDING POSITION IN WORLD COORDINATE SYSTEM (SLAM COORDINATE SYSTEM) (=REFERENCE COORDINATE SYSTEM)

$_{PS} R_{NED}$: ATTITUDE OF LANDING PLANE (LANDING PLANE OF Z=0) IN NED COORDINATE SYSTEM

$_{NED} P_{PS}$: PLANNED LANDING POSITION IN NED COORDINATE SYSTEM

EP 4 080 314 B1

# FIG. 28

| MATHEMATICAL FORMULA | MEANING | DATA ACQUISITION MODE |
|---|---|---|
| $[u_S, v_S, 1]$ | COORDINATE POSITION (HOMOGENEOUS COORDINATE SYSTEM) ON CAPTURED IMAGE OF USER TERMINAL | – |
| $[u_N, v_N, 1]$ | COORDINATE POSITION (HOMOGENEOUS COORDINATE SYSTEM) ON VIRTUAL DRONE CAMERA IMAGE | – |
| $\lambda_S, \lambda_N$ | ARBITRARY VALUES CONFIGURED TO MAINTAIN HOMOGENEOUS COORDINATE SYSTEM | – |
| $_C R_{W_S}$ | ATTITUDE OF USER TERMINAL IN WORLD COORDINATE SYSTEM (SLAM COORDINATE SYSTEM) (=REFERENCE COORDINATE SYSTEM) | ACQUIRED IN SLAM PROCESS OF (PROCESS 1) |
| $_{W_S} P_C$ | POSITION OF USER TERMINAL IN WORLD COORDINATE SYSTEM (SLAM COORDINATE SYSTEM) (=REFERENCE COORDINATE SYSTEM) | ACQUIRED IN SLAM PROCESS OF (PROCESS 1) |
| $_{PS} R_{W_S}$ | ATTITUDE OF LANDING PLANE (LANDING PLANE OF Z=0) IN WORLD COORDINATE SYSTEM (SLAM COORDINATE SYSTEM) (=REFERENCE COORDINATE SYSTEM) | CALCULATED ON BASIS OF CAPTURED IMAGE OF USER TERMINAL AND INFORMATION INPUT BY USER |
| $_{W_S} P_{PS}$ | PLANNED LANDING POSITION IN WORLD COORDINATE SYSTEM (SLAM COORDINATE SYSTEM) (=REFERENCE COORDINATE SYSTEM) | CALCULATED ON BASIS OF CAPTURED IMAGE OF USER TERMINAL AND INFORMATION INPUT BY USER |
| $A_S$ | INTRINSIC PARAMETER OF USER TERMINAL (PINHOLE CAMERA MODEL) | ACQUIRED FROM MEMORY OF USER TERMINAL |
| $_N R_{NED}$ | ATTITUDE OF VIRTUAL DRONE CAMERA IMAGE IN NED COORDINATE SYSTEM | DESIGNATED BY USER OR DEFAULT VALUE |
| $_{NED} P_N$ | FOCAL POSITION OF VIRTUAL DRONE CAMERA IMAGE IN NED COORDINATE SYSTEM | DESIGNATED BY USER OR DEFAULT VALUE |
| $_{PS} R_{NED}$ | ATTITUDE OF LANDING PLANE (LANDING PLANE OF Z=0) IN NED COORDINATE SYSTEM | CALCULATED ON BASIS OF CAPTURED IMAGE OF USER TERMINAL AND INFORMATION INPUT BY USER |
| $_{NED} P_{PS}$ | PLANNED LANDING POSITION IN NED COORDINATE SYSTEM | CALCULATED ON BASIS OF CAPTURED IMAGE OF USER TERMINAL AND INFORMATION INPUT BY USER |
| $A_N$ | INTRINSIC PARAMETER OF VIRTUAL DRONE CAMERA IMAGE (PINHOLE CAMERA MODEL) | ACQUIRED FROM DRONE OR SERVER |
| $_{NED} R_{W_S}$ | ATTITUDE TRANSFORMATION MATRIX FROM WORLD COORDINATE SYSTEM (SLAM COORDINATE SYSTEM) (=REFERENCE COORDINATE SYSTEM) INTO NED COORDINATE SYSTEM | ACQUIRED IN (PROCESS 1) |
| $_{W_S} P_{NED}$ | POSITION TRANSFORMATION VECTOR FROM WORLD COORDINATE SYSTEM (SLAM COORDINATE SYSTEM) (=REFERENCE COORDINATE SYSTEM) INTO NED COORDINATE SYSTEM | ACQUIRED IN (PROCESS 1) |

# FIG. 29

20 DRONE

30 GPS SATELLITE

PLANNED LANDING POSITION

## FIG. 30

20 DRONE

PLANNED LANDING
POSITION

EP 4 080 314 B1

# FIG. 31

EP 4 080 314 B1

## FIG. 32

EP 4 080 314 B1

# FIG. 33

**EP 4 080 314 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018506475 A
- JP 5920352 A
- US 10388172 B1
- US 2018174102 A1